(19) Europäisches Patentamt

European Patent Office

Office européen des brevets

(11) **EP 1 696 348 A2**

(12) **EUROPEAN PATENT APPLICATION**

(43) Date of publication:
**30.08.2006 Bulletin 2006/35**

(51) Int Cl.:
***G06F 17/30*** *(2006.01)*

(21) Application number: **06100768.8**

(22) Date of filing: **24.01.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **28.02.2005 US 657295 P
16.09.2005 US 228731**

(71) Applicant: **Microsoft Corporation
Redmond WA 98052 (US)**

(72) Inventors:
• **Nori, Anil Kumar
Redmond, WA 98052 (US)**

• **Deem, Michael E.
Redmond, WA 98052 (US)**
• **Pizzo, Michael J.
Redmond, WA 98052 (US)**
• **Anonsen, Steven P.
Redmond, WA 98052 (US)**
• **Harter, Steven V.
Redmond, WA 98052 (US)**

(74) Representative: **Grünecker, Kinkeldey,
Stockmair & Schwanhäusser
Anwaltssozietät
Maximilianstrasse 58
80538 München (DE)**

(54) **Data model for object-relational data**

(57)     A common data model (CDM) that is a data model common to multiple application-specific data models. The CDM supports both PIM (Personal Information Manager end-user application data and line-of-business (LOB) data. Similarly, an SDM-type (system definition model) application can specify its model on top of the CDM. The CDM enables improved interoperability between applications by employing an entity component that provides a data entity having a uniform identity across a plurality of disparate applications and a relationship component that defines a relationship between two or more of the data entities. The CDM provides a type system over which any algebra will operate.

*FIG. 1*

**Description**

CROSS-REFERENCE TO RELATED APPLICATIONS

This application claims the benefit of U.S. Provisional Patent application Serial No. 60/657,295 entitled "DATA MODEL FOR OBJECT-RELATIONAL DATA" and filed February 28, 2005, and is related to pending U.S. Patent Application Ser. No. 11/171,905 entitled "PLATFORM FOR DATA SERVICES ACROSS DISPARATE APPLICATION FRAMEWORKS" filed on June 30, 2005. The entireties of the above-noted applications are incorporated by reference herein.

BACKGROUND

Data persistence is a key requirement in any application, whether is a consumer application or line-of-business (LOB) application. For example, shell and media applications save documents, music, and photos, e-mail applications save message and calendar objects, and business application suites save customer and order objects. Almost all of these applications define an object model for the data and write their own persistence mechanisms.

A standard mechanism for describing, querying and manipulating data is a relational database management system (RDBMS) based on SQL (Structured Query Language). The SQL data model is the language used to declaratively describe the structure of data in the form of tables, constraints and so forth. However, data-intensive applications such as LOB applications find that SQL falls short in meeting their needs in certain respects. Firstly, the structure of their data is more complex than can be described with SQL. Secondly, they create their applications using object oriented languages that are also richer in the data structures they can represent than SQL.

Developers of these applications address these short-comings by describing their data using an object-oriented design implemented in programming languages such C#. They then transfer the SQL data to and from objects either manually or using some form of object-relational technology. Unfortunately not every object-oriented design can be easily mapped to a given SQL implementation or, in some cases, to any SQL implementation, producing a lot of manual programming work for developers to deal with differences.

Another problem is that the capabilities developers come to know and appreciate from SQL are not available to them when their data is in the form of objects. For example, expressing a query must be done in terms of the underlying database, not the objects that they use for other tasks.

A solution is to provide a richer data model that is supported by a framework and the database server or a supporting runtime. To the developer it will look simply like a database with richer capabilities for describing and manipulating data. A common and simple but rich data model, would enable a common programming model for these applications, and allows application platforms to innovate on a common data access foundation. Consequently, there is an unmet need for a rich data model that provides the capability a common programming model for multiple disparate applications.

SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The disclosed innovation is a rich data model called the common data model (CDM). It is supported by a platform that implements it called the common data platform (CDP). The CDM is the data model common to multiple application-specific data models. For example, it can support both PIM (personal information manager end-user application data and line-of-business (LOB) data. Similarly, an application with its own data model, such as Microsoft Windows™ SDM (system definition model) can specify its model on top of the CDM. The CDM enables improved interoperability between applications.

There are a significant number of data modeling and persistence concepts commonly used in applications that can be factored out into the common data model, thereby providing rich persistence framework that can be leveraged by large numbers of applications. The CDM capabilities include subsuming relational concepts, defining a rich object abstraction for data, modeling rich semantics (*e.g.,* relationships), minimizing mismatch between an application and the CDM, aligning with CLR (Common Language Runtime) type system, supporting behaviors to enable development of mid-tier and client applications, and providing logical concepts. Modeling concepts capture the semantics independent of the data stores.

One example of where the CDM improves on SQL is in defining relationships. In SQL, a relationship between a Customer and an Order cannot be explicitly expressed. It is possible to express a foreign key constraint from which the relationship may be inferred, but a foreign key is just one of many ways to implement relationships. In the CDM, a relationship can be expressed explicitly and has attributes in the same way as a table definition has attributes. Relationships are a first class citizen. A second example is that the CDM has a type system for objects, which enables it to integrate more naturally with the CLR.

In another aspect thereof, an alternative implementation of the CDM is provided wherein relationships are defined at a top level using <Association> or <Composition> elements. Accordingly, there is no need to define a property on the source (or parent) in order to define a Ref association (or composition).

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

BRIEF DESCRIPTION OF THE DRAWINGS

FIG. 1 illustrates a common data model (CDM) architecture in accordance with the subject invention.

FIG. 2 illustrates a methodology of providing a CDM in accordance with an innovative aspect.

FIG. 3 illustrates the relationship component and the forms thereof.

FIG. 4 illustrates the entity component, its members, and member types.

FIG. 5 illustrates an LOB application window for depicting core data model features of the innovation.

FIG. 6 illustrates an LOB application window and how structural relationships between entities are reflected on the LOB application window of FIG. 5.

FIG. 7 illustrates composition of entities as imposed on the LOB application window of FIG. 5.

FIG. 8 illustrates an exemplary LOB model using CDM concepts that employ entity relationships, aggregate table and addressing thereof, and constraints in accordance with the invention.

FIG. 9 illustrates the use of entity keys and identifiers in accordance with CDM.

FIG. 10 illustrates a UML representation of some inline types.

FIG. 11 illustrates a UML representation of some entity types.

FIG. 12 illustrates a UML representation of some types under composition.

FIG. 13 illustrates a visualization of an instance of D in the TS.TableD.

FIG. 14 illustrates SQL tables that correspond to the entity tables of FIG. 13.

FIG. 15 illustrates a data platform that can utilize the CDM of the disclosed innovation.

FIG. 16 illustrates CDM metamodel fragments that clarify semantics of the model related to types.

FIG. 17 illustrates CDM metamodel fragments that clarify semantics of the model related to properties.

FIG. 18 illustrates CDM metamodel fragments that clarify semantics of the model related to associations.

FIG. 19 illustrates the four main concepts of the alternative implementation of the CDM.

FIG. 20 illustrates that CDM supports a notion of type inheritance.

FIG. 21 illustrates a taxonomy of CDM types for this implementation.

FIG. 22 illustrates the concept of types and instances in this implementation of the CDM.

FIG. 23 illustrates how entity and inline types are declared using SDL.

FIG. 24 illustrates the many kinds of relationships supported by CDM.

FIG. 25 illustrates a structural organization for persisted entities in CDM.

FIG. 26 illustrates the use of entity extensions in this implementation of the CDM.

FIG. 27 illustrates CDM metamodel fragments of the alternative implementation that clarify semantics of the model related to types.

FIG. 28 illustrates CDM metamodel fragments of the alternative implementation that clarify some semantics of the model related to properties.

FIG. 29 illustrates CDM metamodel fragments of the alternative implementation that clarify some semantics of the model related to associations.

FIG. 30 illustrates a UML composition diagram of FIG. 29 that illustrates several aspects of the relationship shown therein.

FIG. 31 illustrates advanced relationships of the alternative implementation.

FIG. 32 illustrates a block diagram of a computer operable to execute the CDM architecture.

FIG. 33 illustrates a schematic block diagram of an exemplary computing environment in which the CDM can be employed.

DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

As used in this application, the terms "component" and "system" are intended to refer to a computer-related entity, either hardware, a combination of hardware and software, software, or software in execution. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

While certain ways of displaying information to users are shown and described with respect to certain figures as screenshots, those skilled in the relevant art will recognize that various other alternatives can be employed. The terms "screen," "web page," and "page" are generally used interchangeably herein. The pages or screens are stored and/or transmitted as display descriptions, as graphical user interfaces, or by other methods of depicting information on a screen (whether personal computer, PDA, mobile telephone, or other suitable device, for example) where the layout and information or content to be displayed on the page is stored in memory, database, or another storage facility.

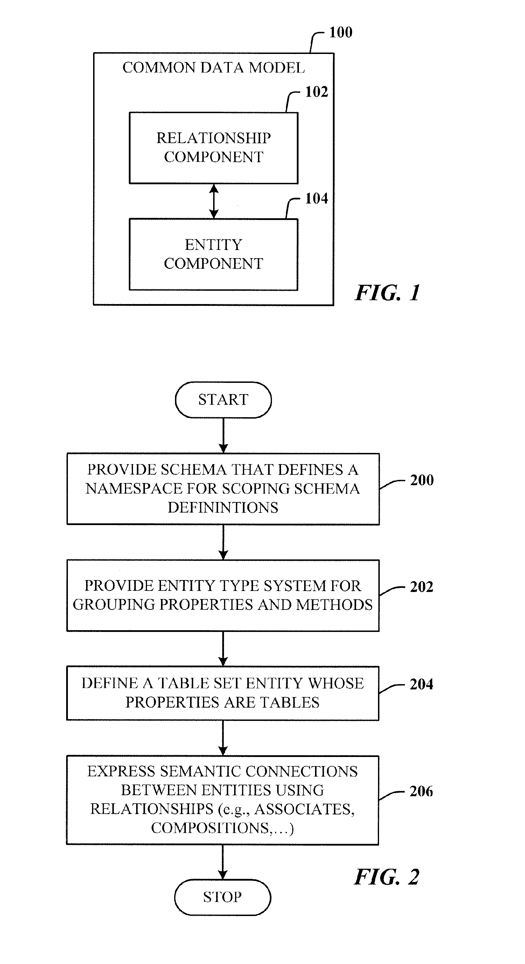

Referring initially to the drawings, FIG. 1 illustrates a common data model (CDM) architecture 100 in accordance with the subject invention. The CDM 100 includes an entity component 102 that provides a data entity having a uniform identity across a plurality of disparate applications. A relationship component 104 defines a relationship between two or more of the data entities.

The CDM 100 is the data model common to multiple application-specific data models. For example, it can support both PIM (Personal Information Manager end-user application data and Line-of-Business (LOB) data. Similarly, an SDM-type (Windows™ System Definition Model) application can specify its model on top of the CDM 100. The CDM 100 enables improved interoperability between applications.

There are a significant number of data modeling and persistence concepts that can be factored out into the CDM, thereby using a common vocabulary for describing data and enabling a common set of services that can benefit all applications, such as an object-relational persistence framework. An indirect goal of the CDM 100 is to free applications from defining their own persistence infrastructure and also to enable higher levels of application interoperability across different data stores. Other goals include subsuming relational concepts, defining a rich object abstraction for data, modeling rich semantics (e.g., relationships), minimizing mismatch between an application and the CDM, aligning with CLR (Common Language Runtime) type system, supporting behaviors to enable development of mid-tier and client applications, and logical concepts. Modeling concepts capture the semantics independent of the data stores.

The CDM of the subject innovation provides at least the following novel aspects.

- A type system made up of Entity Types, Inline Types, Entity Tables, Table Sets and Relationships
- A distinction between entity and inline types
- Entity types include a notion of identity and keys (rather than defining them with tables as is the case in SQL)

    o Explicit declaration of keys comprised of combination of entity properties

- The different forms of relationships between entities (associations)

    o Composibility of entity association with other association types
    o Common Value associations
    o Conditional associations (provides more complex join-type relationships)

- Factoring of attributes specified on Entity (property descriptions) versus what is specified on Relationship (how those properties are used to relate entities)
- Nested tables (compositions)
- Extensions

    o Type-specific
    o Instance or class based
    o Ability to derive from other extensions
    o Ability to specify storage table

- Extensible enumerations
- Declaration of Navigation properties for relationships
- Scoping of associations to apply only to a particular table
- Grouping of Entity Tables and Relationships into Table Sets
- Ability to specify the table to be used in Entity definition, association, or table set
- Sets of attributes of each type definition
- Representation of projections as anonymous types

  o Ability to define anonymous types inline

- Specification of type constraints

Following is a textual description of the CDM type system over which any algebra will operate. Indentation indicates the indented type is a kind of the "outdented" type; for example, an Array type is an Inline type.

Type—the abstract base of all types
Entity type—a referenceable type (has unique identity) with properties of an Inline named type
Inline type—has no identity

Collection type

Array type—a bag of Inline type instances
Entity Table type—a set of entities

Scalar type

Entity Ref type-reference to an entity
Table Ref type-this is needed for the update algebra; it should not be used as the type of a property
Simple type—primitive types without other members, such as int, string, Xml, FileStream
Enumeration type

Array type—a bag of Inline type instances; it is a RowSet<I>
Complex type

Structured type—a type with user defined properties; properties of an Inline type
Anonymous type—unnamed; redefined at each use; has properties of an Inline type

Row Set type—a bag of Inline or Entity type instances.

Entity Table type—set of Entity type instances; it is a site (a place where instances are stored)
Relational Table type—bag of Anonymous type instances; it is a site

FIG. 2 illustrates a methodology of providing a CDM in accordance with an innovative aspect. While, for purposes of simplicity of explanation, the one or more methodologies shown herein, e.g., in the form of a flow chart or flow diagram, are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation.

At 200, a schema is provided that defines a namespace for scoping schema definitions. At 202, entity types are defined for grouping properties and methods. At 204, a table set entity is defined whose properties are tables. At 206, semantic connections are expressed between entities using relationships *(e.g.,* associates, compositions,...).

Entities model real world objects. Entity is the data object that is uniquely identifiable, using its identity (key), in the CDM. Entity is the smallest unit that can be shared (referenced) using its identity. Entity has structure *(e.g.,* properties) and behavior *(e.g.,* methods). Some examples of different types of entities are Order, Customer, Contact, Document, *etc.* Entities are similar to typed rows in SQL99 or objects in ODBMSs. Entities are defined as instances of entity types. Below, for example purposes only, is syntax for an entity definition:

```
<EntityType Name="Order" Key="OrderId">
  <Property Name="OrderId" Type="Guid" Nullalbe="false"/>
  <Property Name="Date" Type="DateTime" Nullalbe="false"/>
  ...
</EntityType>
```

Every entity has a unique identity that is made up of entity key values. This identity is the basis for forming a reference to the entity. An entity key is a set of one or more properties of the entity. Every entity has a unique identity that is made up of entity key values. This identity is the basis for forming a reference to the entity. An entity key is a set of one or more properties of the entity. Every non-abstract entity type definition must specify the key properties or inherit the key specification from a base entity type. The values of the key properties may be user-defined or system generated.

An entity's identifier is formed from the entity's key plus the identifier of the entity's containing or parent entity. A parent entity is the entity containing the table where the (child) entity is stored. The key of an entity is only required to be unique within its table—another table can contain an entity with the same entity key value. Thus an entity identifier is unique by combining its key values with its parent's identifier. In some instances, a key can be unique store-wide, such as through the use of a globally unique identifier (GUID). The CDM only requires that the identifier be unique within an element, (e.g., an EntitySet).

An identity completely identifies an entity and that can be de-referenced to return the entity instance. A reference uses the identity. Given an entity, its reference value can be obtained. Two entities are the same if and only if their identities are the same. The syntax of a reference type in the CDM is *"Ref(<entity_type>)"* and properties can be of a "ref" type; such a property is called a ref property. Ref values can be persisted; they are durable references to entities. Copying ref values does not copy the entities to which they refer. Ref values could also provide navigation within a query language, for example, through Ref and Deref operators.

References enable the sharing of entities. For example, an order entity can have a Customer ref property. All orders for the same customer will have the same value for the customer ref property. The structure of a ref is implementation defined. Refs and keys can be exposed as types in an API. A ref implementation includes identifier information for of the entity it references, including key values and possibly the table where the entity is found. It could store a ref as individual key values (enabling efficient joining) or as a single opaque value. Functions could expose the structure of a ref to get key values or the table containing the entity.

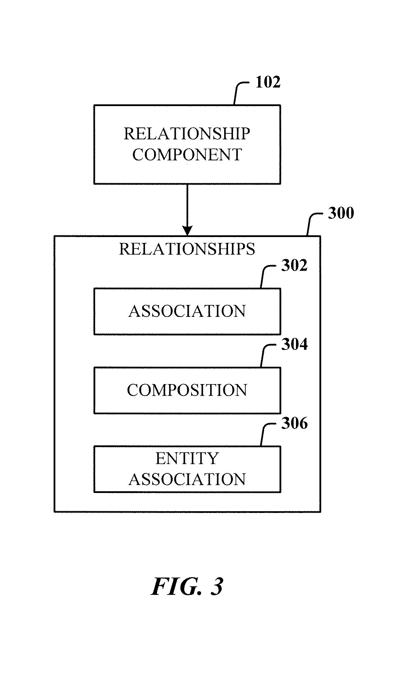

The CDM consists of the following core concepts: entity and relationship. Entity is a set of closely related data with a single identity. Relationship is a mechanism that relates two or more entities. FIG. 3 illustrates the relationship component 102 and the forms thereof Relationships describe how two or more entities are related. Relationships 300 take one of the following forms.

An Association 302 is the most general form of relationship 300 between two or more entities. The entities, called *ends,* are related to one another via an explicit *source-target* (like foreign - primary key) relationship or via a query. Each of the ends in the relationship remains independent of the other ends. It is possible to cause one end to be deleted when the other end is deleted or to prevent one end from being deleted as long as the other end exists.

A Composition 304 is a *parent* entity that is related to a *child* entity (or entities) in such a way that the child entity is conceptually an integral part of the parent entity. The child entity lives in exactly one parent, and therefore must always be deleted when the parent entity is deleted. Further, its identity need only be unique among the other child entities in that composition.

An Association Entity 306 is defined where two or more entities, the *ends,* are linked together by relationships on a separate entity, the *association entity,* which itself may have properties. Each of the ends remains conceptually independent of the others.

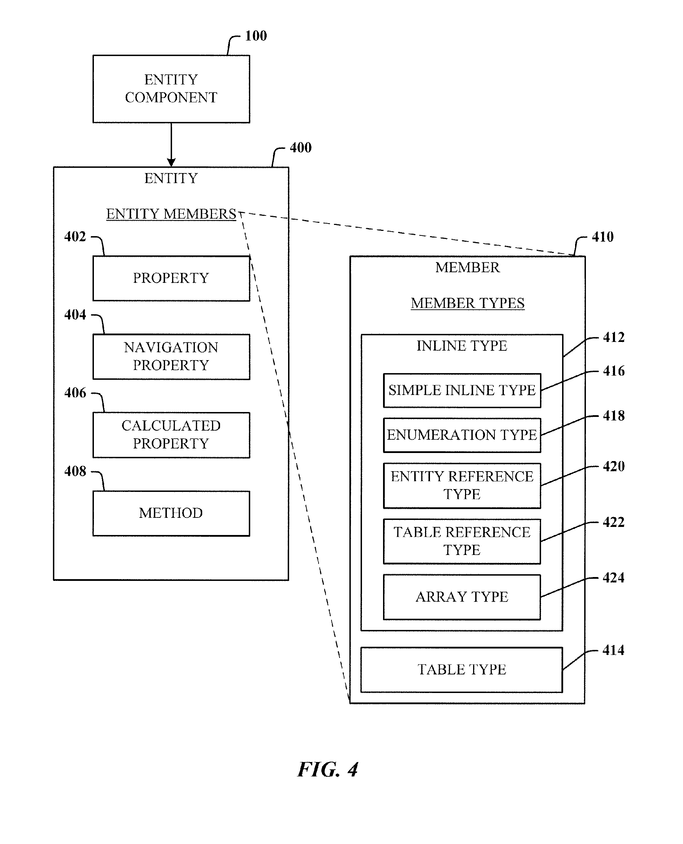

FIG. 4 illustrates the entity component 100 and its members and member types. The entity component 100 utilizes an entity 400 that is composed of entity members. The following kinds of members are supported. A Property 402 allocates storage for an instance of a particular type. A Navigation Property 404 simplifies querying across entities related by an association. A Calculated Property represents a calculated values, as opposed to a stored value. A Method 408 represents an operation that can be executed.

Entity members have member types and/or take typed parameters. The following kinds of types, Inline Types 412 and Table Types 414, are available when describing the members of an entity. An Inline Type is a type whose data is stored inline on an entity. Like entity types, inline types are composed of members. Unlike entity types, inline types have no identity beyond that imposed by the entity within which they reside. Inline types can be declared directly and encompass several other kinds of types in the data model. Inline Types include the following.

A Simple Inline Type 416 is an inline type that has no internal structure that is visible in the common data model.

CLR value types are simple types in the common data model. An Enumeration Type 418 is a set of named values. Enumeration types 418 are simple types that can be extended independently and simultaneously by multiple developers without fear of conflict. An Entity Reference Type 420 is a durable reference to a single entity, possibly including a reference to the table in which that entity resides. Entity references are used in conjunction with associations to relate two entities. A Table Reference Type 422 is a durable reference to a table. An Array Type 424 is an ordered collection of instances of an inline type other than array.

A Table Type 414 is an unordered collection of instances of a specified entity type. Tables are used in conjunction with compositions to relate two entities. All of the types listed above are *contained types;* that is values of these types can be *contained by* an entity.

An entity's type describes the members of the entity. Entity types can be derived from a base entity type, in which case the derived entity type contains all the members of the base type along with the members described for the derived type. Entity types can be extended independently and simultaneously by multiple developers without fear of conflict. Such *entity extension types* do not depend on type inheritance. Entity and entity extension types are not contained types.

*A table set* is an instance of an entity type that has table-valued properties. Declaring a table set creates a single named instance of the type and thus each of the tables it contains. A table set creates the location for storing data similar to the way that creating a database creates a location for storing data.

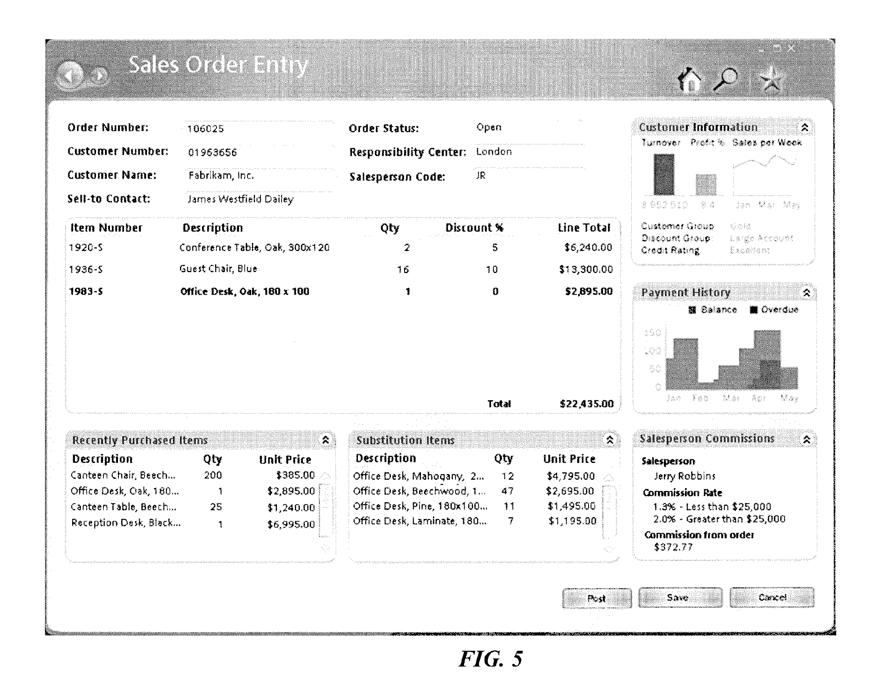

Referring now to FIG. 5, there is illustrated an LOB application window for depicting core data model features of the invention. A Sales Order Entry illustrates data such as Order Number, Customer Number, Customer Name, and order line information such as Item Number, Description, Quantity, and other relevant information.

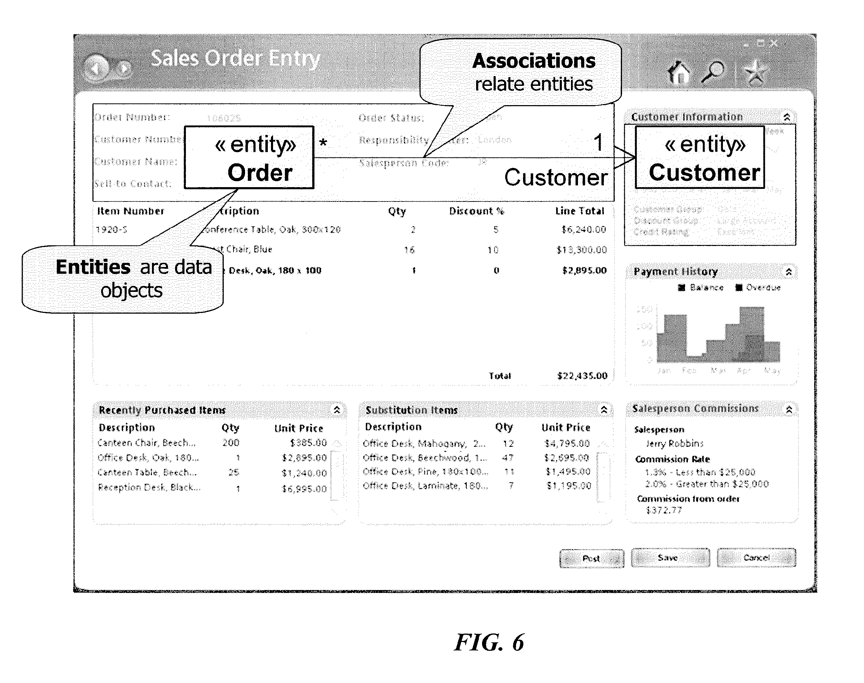

FIG. 6 illustrates how structural relationships between entities are reflected on the LOB application window of FIG. 5. As indicated *supra,* two core notions of the CDM are an entity and relationship. An entity is an object with properties and identity data that uniquely identifies it. A relationship is a way to relate entities. In FIG. 6, Order and Customer are two entities related by an association. Here, the Order entity is associated with only one Customer entity ("1"). Intuitively, a customer can relate to zero or more orders ("*"). Entities have properties and can inherit from each other. Associations are implemented in different ways: as a reference (e.g., Order.Customer), as a join between properties, as an entity, *etc.*

Associations can be implemented in a number of different ways. One approach is to use a reference (which is like a pointer). In the previous example of FIG. 6, there is one reference that is the pointer from Order to Customer. This conveniently implements a constraint, in that there can be one customer related to the order. In one implementation, a reference property can only have one reference in it.

Another approach is to use a conditional association, which is a relationship described in terms of properties. There are two properties related together in some way, or a set of properties interrelated in some way. A common value relationship is a relationship where if two entities have the same value, they are related. An example is a document (entity) that has an author name (property) and another entity called contact, and it has a contact name property. A relationship can be set up between the author name property of the document entity and the contact name property of the contact entity. If those property values are the same, then there is a relationship between those two entities. This can be generalized to create some arbitrary expression that says "if this expression is true, then these entities are related". For example, if a first entity has a first rectangle property, and a second entity has a second rectangle property, a relationship can be defined such that the first and second entities are related if the second entity rectangle completely encloses the first entity rectangle.

A third approach is an association entity, where an entity is used to make the connection. This can be used to have properties on an association.

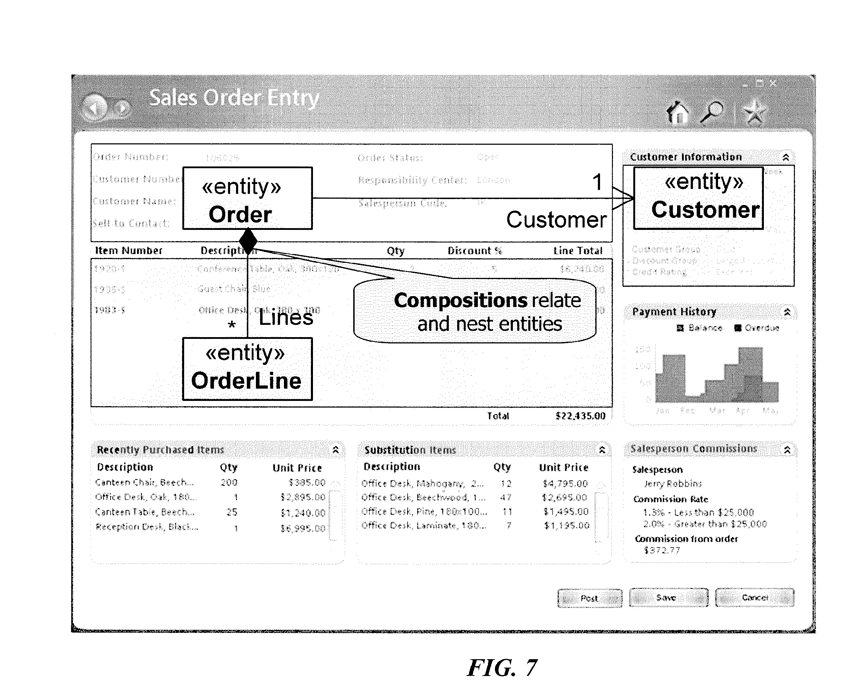

FIG. 7 illustrates composition of entities in accordance with the invention, as imposed on the LOB application window of FIG. 5. Composition is containment where one thing contains another, and thus, is not only a relationship. For example, Order has or contains a set of OrderLine entities. The parent identity plus the child identity together make up the full identity of the child. A composition is represented by an entity table property on the parent entity. This reusability within the CDM of the table concept to represent composition is advantageous. Composition (as indicated by the black diamond) associates two entities as parent and child. Each Order has a table of many (" *") OrderLine entities (or its derivatives). The parent controls the lifetime of the child, since the child lives within the parent, deleting the parent must delete the child. The child entity need only be unique among other children in the same composition.

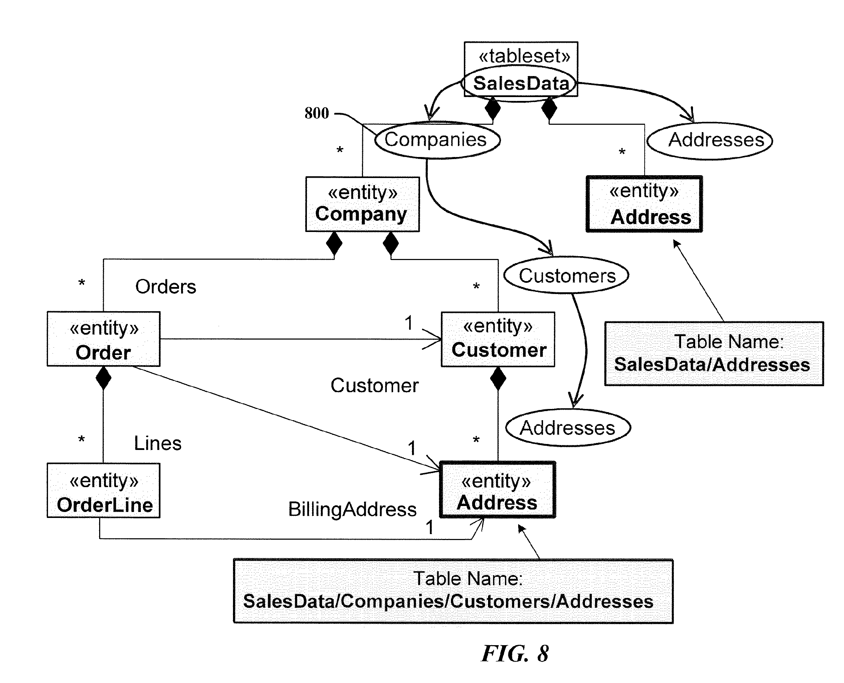

FIG. 8 illustrates an exemplary LOB model using CDM concepts that employ entity relationships, aggregate table and addressing thereof, and constraints in accordance with the invention. A line with an arrow represents an association (e.g., reference property), the black diamond indicates composition (table property), and a table set is like a database. A table set is the root of the application data tree. The table set is an instance of a table set type. Table set types have only table-valued properties. That is, table set types only participate in compositions. A table set type is a kind of entity type. An application creates data by defining an instance of a table set type, called a "table set" (e.g., define "Northwind" of type "NorthwindData"). The table set also describes a set of data that is installed in a service and ultimately, in a database. It is self-contained and a composable data unit.

When an entity (e.g., SalesData) is defined, it can be related to many different entities. For example, a company will have a set of orders inside of it and a set of customers inside of it. This illustrates a couple different compositions. An Order will have order lines inside of it, such that a tree starts to take shape. At the top of the tree is a special entity called the table set entity. A table set is a single instance of some entity type. (This construct is analogous to the SQL notion of a database.) A table set provides a means of data declaration. In the figure, it is depicted in white (rather than a shaded box), since it is different from the other entities. The LOB example shows a SalesData table set (or "database") with one or more companies, addresses, customers and orders. The Customer entity can be part of a single company at a time, for example, either the company representing the residential business or the company representing the commercial business, for example. To illustrate the concept of entity relationships in the LOB model of FIG. 8, the parent entity of Company has two child entities Order and Customer. The CDM logically builds child tables that are disjoint from each other in the Company entity. The line from the Order entity to the Address entity is an association to a child.

An aspect of composition in the CDM is that if a company sets up orders, that set of orders is disjoint from another company's set of orders. For example, the orders from retail never intersect with or overlap with the orders from engineering. Composition means that these sets are separate, do not overlap, and they do not share. As indicated *supra,* associations are represented by the lines with arrows. Thus, an order can refer to a customer, and another order (not shown) can be generated that refers to the same customer. Here, Order need not refer to its immediate peer (Customer), but can refer directly to the contained Address entity. More than one order can refer to Address, which is labeled the BillingAddress. Conceptually, the order will be billed to the person at that address. However, each OrderLine of the order can be shipped to separate shipping addresses referenced off of each line. Each of those addresses come from the same customer that is referenced by the order that is the parent of the order line. Accordingly, references extend over to the addresses that belong to the customer.

Another aspect of the CDM allows introduction of a constraint. Consider the three association lines: from Order to Customer; Order to Address; and OrderLine to Address. Nothing requires that the customer addresses referenced by the order or its lines must belong to the order's customer. It is possible to have addresses refer to an address of another customer. There are, however, constraints in the CDM that can be applied to ensure that the address is that of the appropriate customer. This is referred to as the "scoping" of associations. With respect to the association between the Order entity and the Customer entity, a constraint is that the Order may only refer to a Customer in the same Company. That is, they have a "common ancestor."

With respect to the association between the Order entity and the Address entity, a constraint is that the Order can only refer to an Address in the aggregate table /SalesData/Company/Customer/Address. Aggregate tables are addresses in constraints and queries by a property path. Here, the SalesData table set type has a table property 800 named "Companies". Each Customer entity has its own table of Address entities. The aggregate of those tables (effectively their union) is addressed by the Table Name: SalesData/Companies/Customers/Addresses at the Address entity.

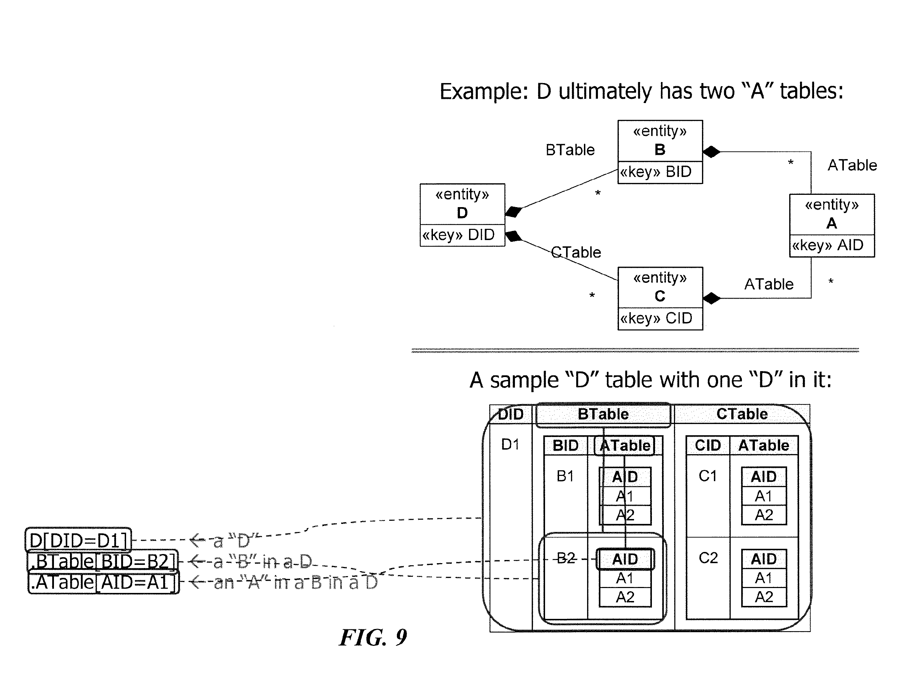

FIG. 9 illustrates the use of entity keys and identifiers in accordance with CDM. A key is one or more properties on the entity that uniquely identifies it in a particular table, where again, tables are formed through the composition relationship. For example, someone may define the social security property as a key for the customer. The key ensures that no two customers within the table have the same social security number, for example. A second part of the entity's identity is the table where the entity exists. If someone wanted to have two customers with the same name, they could either define the key to be some property other than the name (as described here) or they could put each customer into different tables to avoid name collisions. An entity table is identified by providing the identifier of the entity that contains the table property plus the property name of the table. Thus, it is a recursive definition.

In FIG. 9, there are two tables of A's (the ATable on B and the ATable on C). Given an A, its identifier consists of AID (the «key» AID), which also indicates what table its in. One possibility is that it is in a particular B entity in the ATable property. Another possibility is that it is in a particular C entity in the ATable property. A practical example is the key of an order line which is typically a sequence number. The property name is the sequence number which is marked as the key. There can be many different orders with the same sequence number. Thus, the sequence number need be unique only within that order, and not across all orders.

As indicated *supra,* another aspect provided by the CDM is aggregation of tables. For example, a table of order lines for one order is disjoint from another table of order lines for another order. However, it may be of interest to know how many of a certain item was ordered irrespective of order. Thus, there is a need to look through all order lines, irrespective of order, for the number of widgets ordered. Aggregate tables are the means in which to do this. That is, it is possible to look at all order lines across many different orders, or other entity types.

Following is a more detailed description of the CDM of the disclosed innovation. In the CDM, keys are defined on the type; in contrast, in SQL99 keys are defined on tables rather than on the row type definition. While decoupling key definition from the entity type definition may seem flexible (or extensible), it actually limits the reusability and portability of types. If keys are defined on tables, then type-specific behavior may not work across different tables. That is, there is no guarantee that some business logic (say creating customers, orders and relating them) written on entity types will work across different stores of the entity types, thereby diluting the re-usability of types. In SQL99, this is not an issue as it does not specify how types are mapped to client/mid-tier application programming environments. Lack of identity on entity types in SQL99 forces one to map type tables to programming language objects (Classes) rather than mapping entity types. In addition, associating identity with tables does not accommodate supporting transient entities. Identity is associated with the entity type in order to support reusable types and tier-agnostic type behaviors.

Entity Persistence. Entities can be created by invoking a constructor (new) method of the entity type; entities are persisted by adding them to a table. In the CDM, an entity table is a typed collection of entities. The entity tables are similar to SQL99 typed tables, but they are logical. That is, an entity table may be mapped to one or more physical SQL tables. The table of an entity type is referred to as an entity table of the type.

The lifetime of an entity is dependent on the lifetime of the table of which it is a member. When a table is deleted, the entities in it are also deleted. Entities can also be explicitly deleted.

Entity tables are defined by defining a composition or specifying a property in an entity type. Logically an instance of the table is created when an instance of the entity type is created and deleted when the entity instance is deleted (however, the physical SQL table is generally created when the schema that defines the type is installed and exists until the schema is uninstalled).

```
<EntityType Name="Order" ...>
  <Property Name="Lines" Type="Table(OrderLine)" .../>
  ...
</EntityType>

<EntityType Name="OrderLine" ...>
  ...
</EntityType>
```

Such properties define a *composition relationship* between parent and child entity types (Order and OrderLine, respectively, in this case).

Any number of tables can be created to store instances of a given entity type. Each table is completely independent (keys are unique only in the scope of a single table, *etc.).* There is no global "extent" of all instances of a given type that can be queried.

An entity type can be constrained to a single table by including a Table attribute on the <EntityType> element. This is useful when the entity will contain behaviors that depend on the existence of tables of other entity types. For example, the Order type is likely to depend on the existing of a Customer table (and vice-versa) and this is reflected by the inclusion of the Table attributes in the example below:

```
<EntityType Name="Order" Table="SalesData.Orders" ...>
  ...
</EntityType>

<EntityType Name="Customer" Table="SalesData.Customers"
...>
  ...
</EntityType>

<EntityType Name="SalesData" ...>
  <Property Name="Orders" Type="Table(Order)" .../>
  <Property Name="Customer" Type="Table(Customer)" .../>
</EntityType>
```

Placing the table constraint on the entity precludes having more than one table of that type. A less restrictive approach is to place constraint on an association, as described in the Association section in the chapter on Relationships.

Table Sets. A table set type is a restricted form of an entity type. Table set types may have only reference and table valued properties, computed properties, and/or methods. For example:

```
<TableSetType Name="SalesData">
  <Property Name="Orders" Type="Table(Order)" .../>
  <Property Name="Customer" Type="Table(Customer)" .../>
</TableSetType>
```

A table set is an instance of a table set type. Each table set instance has a name that is unique within a given store. Table set instances can be declared in a schema or created dynamically using operations provide by a store. An example table set instance declaration from a schema is shown below:

```
<TableSet Name="Sales" Type="SalesData"/>
```

The table set name along with a table property name can be used in the FROM clause of a query. For example:

```
SELECT OrderID, Date FROM Sales.Orders
```

A table set type may declare a default table set instance. For example:

```
<TableSetType Name="WinFSData" DefaultTableSet="WinFS">
  ...
</TableSetType>

<TableSet Name="Sales" Type="SalesData"/>
```

It is also possible to aggregate previously defined table sets into a new table set. This is useful when combining data from two separate applications into a single application. Note that the SalesData entity type in the example above is abstract. This is because non-abstract entity types must specify key properties, and properties of simple types are not allowed in an entity type used for a table set. It is possible to aggregate previously defined table sets into a new table set. This is useful when combining data from two separate applications into a single application.

Entity Types vs. Inline Types. An inline type is a non-entity type. Inline types are similar to structure types; they are just values. They do not have any identity; each inline instance is different even if they have identical values. In the CDM, inline types can only be used as the type of entity properties. Inline type values are stored inline with the entity it is part of. Since an inline type instance does not have its own identity, it is not referenceable. It is referenceable *via* the entity property holding the inline type instance. Below is an example inline type definition:

```
<InlineType Name="Address">
  <Property Name="Street" Type="String"
Nullable="false"/>
  <Property Name="City" Type="String" Nullable="false"/>
  ...
</InlineType>
```

Though both entity types and inline types are strongly typed and have similar structure, they have distinct persistence, sharing and operational semantics. Inline type instances are not persisted by themselves; they are structurally part of an entity type. Inline type instances cannot be shared; each instance usage is exclusive. Inline type instances are not target for most operations like copy, move, delete, backup, restore, etc.

Due to the above semantics differences, it is important to provide different inline and entity type concepts so that applications can program appropriately. In SQL99, the inline and entity type concepts are not modeled explicitly. In SQL99, there are just "user defined types". If a type is used as the type of a column, it behaves like an inline type; if it is used to define a table, it acts as an entity type (row type). Since keys are defined on table, only rows of typed tables have identity. Since types do not have keys, in SQL, while reasoning about type instances, one has to talk in terms of type instances with keys and instances without keys.

In the CDM, entity types and inline types are explicitly modeled as separate concepts with separate syntactic specification.

Data Concurrency. Data concurrency can be managed either optimistically or pessimistically. In either case the unit of concurrency management is the entity, either for conflict detection in optimistic concurrency or locking in pessimistic concurrency. The data model allows that different conflict detection schemes may be employed and considers it a policy decision of the data model implementation and the developer, if the data model implementation gives them that flexibility (*e.g.*, the implementation could ignore conflicts if none of the properties being updated had changed).

In pessimistic concurrency, locks are taken on a complete entity excluding its nested tables. Thus if an entity is read with a lock, the read will fail if another user has the entity locked. However, if only a child entity is locked the read of the parent will succeed. The data model allows that different locking schemes may be employed and considers it a policy decision of the data model implementation and the developer, if the data model implementation gives them that flexibility.

Relationships. A Relationship relates two or more entities. For example, a Contact *authors* a Document, or an Order *contains* OrderLines. A relationship can be an Association or Composition. Associations describe "peer-to-peer" relationships between entities, while composition describes a parent/child relationship between two entities.

Relationships themselves are not stored as instances of types in the store, but are embodied by data on the related entities. One particular use of associations specifies an entity type, the *association entity,* as the entity that embodies the relationship and, optionally, may store additional data as a part of the relationship. Each association has a *name*; the name signifies the semantic relationship between the entities. For example, DocAuthor is the name of a relationship between a document and a contact; the DocAuthor association relates the contact as the author of the document; similarly, OrderCustomer is an association which associates a customer with an order; given an order, the association can be navigated to determine its customer.

Note that the concepts of association and composition are consistent with UML association and composition concepts. The entity-relationship diagramming and the UML terminology (e.g., Role, multiplicity,...) is preserved as much as possible.

The concept of relationships is not explicitly supported in the relational model. Foreign and primary keys and referential integrity provide the tools to implement relationships in a limited way. SQL99 has added object-relational extensions like Ref and Table types to support single and multi entity valued properties but relationships are not modeled formally.

The CDM combines the SQL99 ref and table properties and the UML association and composition concepts. This approach brings rich relationships and navigation to SQL and queryability to applications modeled using LTML.

Associations. Associations represent peer-to-peer relationships between entities. They can be based on the use of reference typed properties or non-reference typed properties. They can also involve an association entity that plays a particular role. Each is described in turn.

Associations Using Reference Typed Properties. Consider the following example schema.

```
<EntityType Name="Customer" ...>
   ...
</EntityType>

<EntityType Name="Order" ...>
   <Property Name="CustRef" Type="Ref(Customer)"
    Nullable="false"
              Association="OrderCustomer" />
   ...
</EntityType>

<TableSetType Name="SalesData">
  <Property Name="Orders" Type="Table(Order)" .../>
  <Property Name="Customers" Type="Table(Customer)" .../>
  <Property Name="BadCustomers" Type="Table(Customer)" .../>
</TableSetType>

<Association Name="OrderCustomer" >
   <End Role="OrderRole" Type="Order" Multiplicity="*"
    Table="SalesData.Customers" />
   <End Role="CustomerRole" Type="Customer"
    OnDelete="Cascade" Multiplicity="1" />
   <Reference FromRole="OrderRole" ToRole="CustomerRole"
    Property="CustRef"/>
</Association>
```

The association has two *ends,* each of which represents a related entity. Each end provides the following information:

- Role: A role names an end point that describes the role or function an instance of an entity type plays at that end. It is the name that is used by the entity on the other end of the association. In CDM, a role name must be explicitly specified, though often it will be the name of the entity type of the end.
- Type: Type specifies the name of the entity type of the end. For example, in the OrderCustomer association, the type for the end with role CustomerRole is the Customer type. The type for the OrderRole is the Order entity type. The type must be an entity type (it cannot be an inline type).
- Multiplicity: Multiplicity specifies the range of legal cardinality values for the association end. The cardinality of a relationship end is the actual number of entity instances involved in the relationship at that end. In the OrderCustomer association example, an Order comes from exactly one Customer, and each Order must be placed by a Customer. So, the multiplicity is 'one'. This constraint is captured as Multiplicity = "1" on the CustomerRole end. On the other hand, a Customer may have an unlimited number of orders associated with it. Multiplicity = "*" on the OrderRole end captures such a cardinality constraint.
  Typical multiplicity values are "0..1" (zero or one), "1" (exactly one), "*" (zero or more) and "1..*" (one or more). More generally, multiplicity values may specify a value "n" (exactly n) or a range of values "n..m" (between n and m, inclusive, where n is less than or equal to m). Typically the multiplicity of both ends of an association are mentioned together such as 1:1 (one-to-one), 1:* (one-to-many), *:1 (many-to-one), and *:* (many-to-many). In the OrderCustomer association example above there can be zero or more orders with the same customer (having the same CustRef property value). Note that the restrict semantics of referential integrity constraints can be modeled by setting the multiplicity on the ends appropriately. Where the lower bound of the multiplicity is 1, traditional Restrict semantics are enforced. That is, for every order a customer must exist. Therefore, an order cannot be created unless there is a customer; similarly, a customer cannot be deleted if the customer placed on order.
- Table: Constrains the table where instances of Type may be found. This is required for the target of a reference-based association unless a table is directly specified in the definition of the target entity type. In the example above it indicates that Customers on Orders can only be found in the SalesData.Customers table, not the SalesData.Bad-Customers table. Specifying Table="" indicates that the reference can refer to an entity in any table of the correct type.
- OnDelete: The OnDelete attribute specifies what should be done when the entity at that end is deleted. In this example, the allowed values would be:

Cascade, SetNull, or Restrict. In this example:

■ Since Cascade was specified, when the Customer entity is deleted, the Order entity is also deleted.
■ If SetNull were specified, when the Customer entity is deleted, the CustRef property of the Order entity, on the other end, would be set to Null. The property must be nullable.
■ If Restrict were specified, the Customer entity cannot be deleted if an Order entity is associated to it.

The <Reference> element indicates that this is a reference-based association. This element specifies the following information: FromRole is the role that contains the reference property that implements the association; ToRole is the role that is the target of the reference; and Property is the name of the reference property.

In the OrderCustomer association, the CustRef property on the OrderRole end is related to the identifier of the CustomerRole entity; the CustRef property acts like a foreign key.

Associations Using Non-Reference Typed Properties. The OrderCustomer association above relates order and customer entity types on the customer's identity. In general, it is possible to relate two entity types on any properties of the ends. For example, consider the following DocumentAuthor association where Document.Author property is related to Contact.Name. Since Contact.Name is not unique this association may return multiple contacts for a document.

```
<EntityType Name="Contact" Key="ContactId">
   <Property Name="ContactId" Type="String"
    Nullable="false">
   <Property Name="Name" Type="String" Nullable="false"/>
</EntityType>

<EntityType Name="Document" Key="DocId">
   <Property Name="DocId" Type="String" Nullable="false"/>
   <Property Name="Title" Type="String" Nullable="false">
   <Property Name="Author" Type="String" Nullable="true">
</EntityType>

<Association Name="DocumentAuthor" >
  <End Role="DocRole" Type="Document" Multiplicity="*" />
  <End Role="ContactRole" Type="Contact" Multiplicity="1"/>
  <Condition>
    DocRole.Author = ContactRole.Name
  </Condition >
</Association>
```

One difference between this example and the Customer/Order example is that instead of specifying a <Reference> element a Boolean expression is provided inside of a <Condition> element. Since the <Condition> can contain an expression of arbitrary complexity, this is a very flexible form of association. It in effect makes it easy to reuse a join in applications by adding it as a first class part of the query and programming models.

In cases where only a simple equivalence between two properties is needed, a simplified syntax is supported. In such cases, a <Common Value> element can be used instead of a <Condition> element. The example below has the same meaning as the previous example (with the exception of the OnUpdate behavior described below):

```
<Association Name="DocumentAuthor" >
  <End Role="DocRole" Type="Document" Multiplicity="*"/>
  <End Role="ContactRole" Type="Contact" Multiplicity="1"
    OnUpdate="Cascade"/>
  <CommonValue Property1="DocRole.Author"
    Property2="ContactRole.Name"/>
</Association>
```

Because the properties are explicitly listed and always have the same value, one additional feature is available: the OnUpdate attribute. The possible values of this attribute are: Cascade, SetNull, or Restrict. In this example an attribute value of "Cascade" indicates that if the property on the ContactRole end is updated, then the value is propagated to the property on the other end; if OnUpdate="Restrict", then this property cannot be changed if there is an entity associated with the other end; if OnUpdate="SetNull", then if the property on this end is updated, the property on the other end is set to null.

Association Entities. It is common to associate properties with a relationship. For example, typically the employment relationship between an organization and a person carries properties like EmploymentPeriod. The property part of the Organization or the Person type can be made but the property does not mean anything without the relationship. For example, EmploymentPeriod property on the Organization is meaningless unless the person employed is also present; similarly the property is not meaningful on the Person entity.

In the CDM, only entities (entity type instances) are persisted. Only entities (actually tables of entities) are queryable. Associations and compositions are stored as metadata. Therefore properties on associations must be stored in an entity. Such an entity is an *association entity.* This plays the same role as the association class in UML. The association entity type is like a middle (link or join) table in relational systems, with references (foreign keys) to the entities it is linking. The key of the association entity generally includes the references to the related entities. For example, consider the following:

```
<EntityType Name="Product" ...>
  ...
</EntityType>

<EntityType Name="Supplier" ...>
  ...
</EntityType>

<EntityType Name="PSLink" Key="ProductRef,SupplierRef" ...>
  <Property Name="ProductRef" Type="Ref(Product)"
    Nullable="false" .../>
  <Property Name="SupplierRef" Type="Ref(Supplier)"
    Nullable="false" .../>
  <Property Name="Price" Type="Decimal" Nullable="false">
    <Decimal Precision="6" Scale="2"/>
  </Property>
  <Property Name="Quantity" Type="int" Nullable="false"/>
</EntityType>
```

PSLink is an entity type which is linking products and suppliers. PSLink relates Product and Supplier types by specifying two reference properties, ProductRef and SupplierRef, to Product and Supplier types respectively. In addition to relating products and suppliers, it has properties, Price and Quantity, meaningful to the relationship.

The possible associations between Product, Supplier and PSLink are between: PSLink and Product, PSLink and Supplier, and Product and Supplier. These associations could be explicitly defined as follows:

```
<Association Name="PSLinkProduct" >
    <End Role="PSLink" Type="PSLink"/>
    <End Role="Product" Type="Product" />
    <Reference FromRole="PSLink" ToRole="Product"
      Property="ProductRef"/>
</Association>


<Association Name="PSLinkSupplier" >
    <End Role="PSLink" Type="PSLink"
      EndProperty="SupplierRef"/>
    <End Role="Supplier" Type="Supplier" />
   <Reference FromRole="PSLink" ToRole="Supplier"
      Property="SupplierRef"/>
</Association>

<Association Name="ProductSupplier">
    <End Role="Product" Type="Product"/>
    <End Role="Supplier" Type="Supplier"/>
    <Uses Role="PSLink" Type="PSLink"/>
    <Condition>
        PSLink.ProductRef = Product AND PSLink.SupplierRef =
      Supplier
    </Condition>
</Association>
```

In the above example, the fact that PSLink is an association entity is not explicit and therefore could not be utilized in the definitions of the associations. The schema designer must tediously define all the necessary association definitions. However, this can be avoided by introducing the notion of an explicit association entity as part of an association definition. The above example is rewritten specifying PSLink as an association entity below:

```
<EntityType Name="Product" ...>
  ...
</EntityType>

<EntityType Name="Supplier" ...>
  ...
</EntityType>

<EntityType Name="PSLink" Key="ProductRef,SupplierRef"
    Association="ProductSupplier">
  <Property Name="ProductRef" Type="Ref(Product)"
    Nullable="false" Role="Product"/>
  <Property Name="SuplierRef" Type="Ref(Supplier)"
    Nullable="false" Role="Supplier"/>
  <Property Name="Price" Type="Decimal" Nullable="false">
     <Decimal Precision="6" Scale="2"/>
  </Property>
  <Property Name="Quantity" Type="int" Nullable="false"/>
</EntityType>

<Association Name="ProductSupplier">
  <AssociationEntity Type="PSLink">
    <End Role="Link" Type="PSLink"/>




    <Reference FromRole="Link" ToRole="Product"
    Property="ProductRef"/>
    <Reference FromRole="Link" ToRole="Supplier"
    Property="SupplierRef"/>
  </AssociationEntity>
  <End Role="Product" Type="Product"
    OnDelete="CascadeToAssociationEntity"/>
  <End Role="Suppier" Type="Supplier"
    OnDelete="CascadeToAssociationEntity" />
</Association>
```

Note the following aspects about this example:

- It is more than a shortened form of the other declaration because it provides information about the type that cannot be inferred when the association entity is not explicitly called out.
- The Association attribute on PSLink's <EntityType> definition identifies this type as an association entity and identifies the association that uses the type.
- The Role attributes on the ProductRef and SupplierRef property elements identify the roles within the association that use these properties.
- The End element nested inside of AssociationEntity provides a name for the role played by the association entity itself. In many ways, the association entity is just an end point of a multi-way association, but in other ways it plays a special function in the association.
- The <Reference> elements describe how the association entity is associated to the product and supplier entities. They are nested because they are subordinate to the overall association.
- The OnDelete attributes on the End elements indicate that if either end is deleted, the association entity, and therefore the relationship, is also deleted. However, deleting one end does not cause the other end to be deleted (i.e. deleting a supplier does not cause the supplied product to be deleted). Other possible values for this attribute would be: Cascade, which would cause all the ends (the association entity included) to be deleted; SetNull, which would cause the reference property on the association entity to be set to null; or Restrict, which would cause the delete to fail as long as a PSLink instance existed.

Association entities can also be used in associations using non-reference typed properties. See the complete descriptions of associations later in this document for details.

Scoping Associations. Scoping an association specifies that the entities at both end of the association are children of the same entity instance. An association is scoped by placing in a Scope attribute the name of the entity type that contains both of the ends. The Table attribute on the ends must then start with that type. Consider the following example in which a Car has an Engine, Wheels and DriveTrain.

```
<EntityType Name="Car" Key="Model">
  <Property Name="Model" Type="String">
  <Property Name="Wheels" Type="Array(Ref(Wheel))"/>
    <Occurs Miniumum="4" Maximum="4"/>
  </Property>
  <Property Name="Engine" Type="Ref(Motor)"/>
  <Property Name="DriveTrain" Type="Ref(DriveTrain)"/>
</EntityType>

<EntityType Name="Motor" ... > ... </EntityType>

<EntityType Name="Wheel" ... > ... </EntityType>
```

The Engine and Wheels are connected by the DriveTrain.

```
<EntityType Name="DriveTrain" Association="DriveTrain">
  <Property Name="Engine" Type="Ref(Motor)"
Role="Engine"/>
  <Property Name="Wheels" Type="Array(Ref(Wheel))"
Role="Wheels">
    <Check>Count(*) = 2 OR Count(*) = 4</Check>
  </Property>
</EntityType>

<Association Name="DriveTrain" Scope="Car">
  <End Role="Engine" Type="Motor" Table="Car.Engine"/>
  <End Role="Wheels" Type="Wheel" Table="Car.Wheels"/>
  <AssociationEntity Type="DriveTrain"/>
    <End Role="DriveTrain"
Type="DriveTrain" Table="Car.DriveTrain"/>
    <Reference FromRole="DriveTrain" ToRole="Engine"
Property="Engine"/>
    <Reference FromRole="DriveTrain" ToRole="Wheels"
Property="Wheels"/>
  </AssociationEntity>
</Association>
```

The above sample shows that the DriveTrain connects an Engine and Wheels from the same Car. It is not legal for the Engine from one Car to be attached to the Wheels from another Car. Any Table attributes on the <End> elements must begin with the scoping entity. An <End> element can indicate that scoping does not apply to it by adding the Scoped="false" attribute.

Composition. Composition is a modeling concept which defines a compositional relationship between two entities. Consider the Order example again; the Lines property and the OrderLines relationship define a composition between Order and Line entity types. There is a structural relationship between Order and Line types; lines are part of (or composed in) an order. A line entity belongs to a single order entity; the line entity is exclusively part of an order; an order and its lines form an operational unit.

In contrast, in the above examples Order and Customer are independent entities. The Orders and Customers tables are independent of each other. The OrderCustomer association relates orders and customers. Unless OnDelete=Cascade is specified on the association, the lifetime of orders and customers are independent of each other. OnDelete=Cascade adds behavioral constraint that requires orders associated with a customer be deleted when the customer is deleted. However, there is no structural relationship between the order and customer entity types. For example, fetching a customer entity does not access any orders and vice-versa. In addition, it is possible that Order may participate in another but similar association with Supplier; say there is a SupplierRef property on Order and an OrderSupplier association. This association could also specify OnDelete="Cascade", meaning an Order's lifetime is controlled either by a customer who placed the order, or by a supplier who supplied the order. However, Order and Customer or Order and Supplier do not constitute operational units for operations like copy, move, backup, restore, *etc.*

```
<EntityType Name="Order" ...>
  <Property Name="Lines" Type="Table(OrderLine)"
    Composition="OrderLines"/>
  ...
</EntityType>

<EntityType Name="OrderLine" ...>
  ...
</EntityType>



<Composition Name="OrderLines">
  <ParentEnd Role="ParentOrder" Type="Order"
    EndProperty="Lines"/>
  <ChildEnd Role="LineItems" Type="OrderLine"
    Multiplicity="*"/>
</Composition>
```

While it is true that that composition is a further specialization of the association concept, it is a fundamental concept, especially from structural and operational perspective. The relationship between Order and Lines is very different from that between Order and Customer. Therefore, in the CDM composition is a distinct, top-level concept.

Composition and Association Entities. One particular usage of association entities composes the association entity itself into one of the associated entities. Consider the example below:

```
<EntityType Name="Item" ...>
  <Property Name="Links" Type="Table(Link)"
    Association="ItemLinkRelation"/>
  ...
</EntityType>

<EntityType Name="Link" Association="ItemLinkRelation" ...>
  <Property Name="Target" Type="Ref(Item)" Role="Target"/>
  ...
</EntityType>

<Association Name="ItemLinkRelation">
  <AssociationEntity Type="Link"/>
    <End Role="Link" Type="PSLink"/>
    <Composition ParentRole="Source" ChildRole="Link"
    Property="Links"/>
    <Reference FromRole="Link" ToRole="Target"
    Property="Target"/>
  </AssociationEntity>
  <End Role="Source" Type="Item"/>
  <End Role="Target" Type="Item"/>
</Association>
```

Here we have an entity type, Item, which contains a nested table of the Link entity type. The Link type itself is an association entity in that it sits between two related entities (two items in this case) and contains relationship specific properties. The fact that a composition is to relate Items and Links does not change the fact that the true relationship being modeled is between two Items.

Navigation. One of the benefits of modeling relationships explicitly is the ability to navigate from one entity to the related entities using the relationship definition. Such navigation can be supported via queries against the CDM or by using APIs classes generated from the entity type and relationship definitions. In the OrderCustomer example, given an order entity one can navigate to its customer using the CustRef property and the association definition. The association definition can also be used to navigate from customer to its orders. The association metadata can be used to generate a join based query to traverse from customer to orders. Similarly, in the DocumentAuthor association can be used to generate navigation from document to contact and vice-versa.

In the CDM, it is possible to pre-define association-based navigation properties using the relationship definitions. An example of such a navigation property is shown below:

```
<EntityType Name="Customer" ...>
   <NavigationProperty Name="Orders"
    Association="OrderCustomer"
                        FromRole="Customer" ToRole="Order"/>
   ...
</EntityType>

<EntityType Name="Order" ...>
   <Property Name="CustRef" Type="Ref(Customer)"
    Nullable="false"
              Association="OrderCustomer" />
   ...
</EntityType>

<Association Name="OrderCustomer" >
   <End Role="OrderRole" Type="Order" Multiplicity="*" />
   <End Role="CustomerRole" Type="Customer"
    OnDelete="Cascade" Multiplicity="1" />
   <Reference FromRole="OrderRole" ToRole="CustomerRole"
    Property="CustRef"/>
</Association>
```

The NavigationProperty element in the Customer entity specifies the navigation path from a customer (or customers) to the orders associated with the customer(s). This property could be represented in the query and programming models as a virtual (non-materialized) and queryable read-only collection of references to Order entities.

Following is a description of the CDM schema language. All entity, relationship, and table set definitions occur in the context of a schema. The schema defines a namespace that scopes the names of the things defined within the schema. The <Schema> element is the root element of a schema document. The <Schema> element may have the following attributes:

• Namespace - Required. The unique namespace for the schema. The namespace conforms to the CLR rules for namespace names. In addition, the namespace naming guidelines define for CLR namespaces should also be followed. By following these conventions there is a reasonable guarantee of uniqueness when choosing a namespace name.

For example:

```
<Schema Namespace="MyCompany.MySchema">

</Schema>
```

A schema may reference types defined in a different schema using fully qualified type names (*namespace-name.type-name*). For example:

```
<Schema Namespace="MyCompany.MySchema">

    <InlineType Name="MyType"
      BaseType="YourCompany.YourSchema.YourType" …>
      …
    </InlineType>

</Schema>
```

A schema may include an <Using> element to bring the type names defined in an external schema into scope. The <Using> element may have the following attributes:

- Namespace - Required. The namespace of the schema whose contents are brought into scope.
- Alias - Optional. A name that can be used as a substitute for the namespace. For example:

```
<Schema Namespace="MyCompany.MySchema">

    <Using Namespace="YourCompany.YourSchema"/>


    <Using Namespace="AnotherCompany.AnotherSchema"
      Alias="Another"/>

    <InlineType Name="Type1" BaseType="YourType">
      …
    </InlineType>

    <InlineType Name="Type2" BaseType="Another.AnotherType">
      …
    </InlineType>

</Schema>
```

Naming Rules. All type, relationship, and table set names must conform to the CLR rules for type names. The names should also conform to the .Net Framework type naming guidelines. Type and relationship names should be unique. That is, a type and relationship cannot have the same fully qualified name and no two types or two relationships can have the same fully qualified name. All table set names should be unique (no two table sets can have the same fully qualified name), but a table set may have the same name as a type or relationship.

Simple Types. A simple type represents a single value with no internal structure visible in the data model. CLR value types are used as simple types in the CDM. A number of value types defined in the CLR's System, System. Storage, and the System.Data. SqlTypes namespace are natively supported for use in the data model. These types are:

| | | |
|---|---|---|
| System.Data.SqlTypes.SqlString | System.String | System.Storage.ByteCollection |
| System.Data.SqlTypes.SqlBinary | System.Boolean | System.Storage.StorageStreamReference |
| System.Data.SqlTypes.SqlBoolean | System.Byte | System.Storage.StorageXmlReference |
| System.Data.SqlTypes.SqlByte | System.Int16 | |
| System.Data.SqlTypes.SqlInt16 | System.Int32 | |
| System.Data.SqlTypes.SqlInt32 | System.Int64 | |
| System.Data.SqlTypes.SqlInt64 | System.Single | |

(continued)

| | |
|---|---|
| System.Data.SqlTypes.SqlSingle | System.Double |
| System.Data.SqlTypes.SqlDouble | System.Decimal |
| System.Data.SqlTypes.SqlDecimal | System.DateTime |
| System.Data.SqlTypes.SqlDateTime | System.Guid |
| System.Data.SqlTypes.SqlGuid | System.Uri |
| *etc.* | System.TimeSpan |

Any value type that satisfies a set of requirements should also be able to be used as a simple type in the data model. The conditions such a type needs to satisfy will either allow it to be stored and used directly in a query (such as an UDT) or will provide the meta-data necessary provide storage and query mappings via CLR attributes.

Simple Type Constraints. It is possible to constrain values of a simple type using one of the constraint elements defined below. These elements can be nested inside of various elements that refer to simple types (e.g., a <Property> element in an <EntityType> or <InlineType> element).

Length. A <Length> constraint element can be applied to System.String, System. Storage.ByCollection, and System.Data. SqlTypes. String types to constrain the length of the value. This element may contain the following attributes:

- Minimum - The minimum length of the value. The default is zero.
- Maximum - The maximum length of the value. The value "unbounded" indicates that there is no specified maximum. The default is "unbounded".

To be compatible with a constraint specified in a base type, the value specified for Minimum must be equal to or greater then the previous value and the value specified for Maximum must be equal to or less then the previous value.

Decimal. The <Decimal> constraint element can applied to System.Decimal and System. SqlDecimal types to constrain the precision and scale of acceptable values. This element may contain Precision and Scale attributes.

Default. The <Default> constraint element can be applied to any simple type to specify the default value to be used for a property. This element may have the following attributes: Value - Required. The default value for the property. The value of this attribute must be convertible to a value of the proper type. Note that the <Default> element does not actually specify constraint. Any value is compatible with a value specified in a base type.

Check. The <Check> constraint element can contain Boolean query expression. For the property value to be valid, this expression must evaluate to true. The expression must not have any side effects. When a check constraint is specified in both the base and derived types both constraints are validated.

Enumeration Types. An enumeration type defines a set of names that represent unique values. The type of the underlying values, nor the stored value itself, is visible in the CDM. When custom storage mappings are used, the underlying type is defined by this mapping. For proscriptive storage, the underlying type would selected automatically or could be provided via a storage specific hint. An enumeration type is declared using an <EnumerationType> element. This element may have the following attributes:

- Name - Required. The name of the enumeration type.
- Extensible - Optional. A value of "true" indicates that the enumeration type can be extended using an <EnumerationExtension> element (see below). A value of "false" indicates that no extensions are allowed. The default value is "false".

The <EnumerationType> element may contain zero or more <EnumerationMember> elements. These elements may have the following attributes:

- Name - Required. The name used to represent a specific enumeration value. This name must be unique inside the declaring <EnumerationType> element. When referencing an enumeration member, this name is always qualified by the enumeration's type name.
- AliasesMember - Optional. Contains the name of another enumeration member. Indicates that this enumeration member is an alias for the named member (e.g., both names represent the same value).

An example enumeration is defined below:

```
<Schema Name="MyCompany.MySchema">

   <EnumerationType Name="A">
     <EnumerationMember Name="P" />
     <EnumerationMember Name="Q" />
     <EnumerationMember Name="R" AliasesMember="Q"/>
   </EnumerationType>

</Schema>
```

Note that "bit flag" style enumerations cannot be described using an enumeration type. It is necessary to instead use an array of an enumeration type.

Extensible Enumerations. When an <EnumerationType> element specifies Extensible="true" it is possible to extend the enumeration with additional values. A property of the enumeration type can contain any of the values specified in the <EnumerationType> or in any extension of that type.

The values defined in each extension are distinct from the values defined in the base enumeration type and all other extensions. This allows an enumeration type to be extended independently by multiple developers without the possibility of conflicts.

An enumeration extension type is defined using an <EnumerationExtensionType> element. This element may have the following attributes:

- Name — Required. The name of the enumeration extension type.
- ExtendsType - Required. The name of the enumeration type which is being extended.

The <EnumerationExtensionType> element may contain zero or more <EnumerationMember> elements. These elements may have the following attributes:

- Name - Required. The name used to represent a specific enumeration value. This name must be unique inside the declaring <EnumerationExtensionType> element.
  The name may duplicate a name in the extended enumeration type however. In such cases, the value defined in the extension is still distinct from the value defined in the extended enumeration. When referencing an enumeration member, this name is always qualified by the enumeration extension's type name.
- AliasesMember- Optional. Contains the full name *(enumeration-type-name.enumeration-member-name)* of another enumeration member, either in this extension, another extension to the same enumeration type, or the extended enumeration type itself. Indicates that this enumeration member is an alias for the named member (e.g., both names represent the same value).

An example enumeration is defined below:

```
<Schema Name="MyCompany.MySchema">

   <!--
     The combination of the enumeration type C and the
     extension types D and E define the following distinct
     values that can be stoed in a property of type C: C.P,
     C.Q, D.Q, D.S, E.T, and E.U. The enumeration members
```

```
          C.R, D.T, and E.U are all aliases for C.Q, and hence do
          not represent unique values.
          -->
          <EnumerationType Name="C" Extensible="true">
            <EnumerationMember Name="P"/>
            <EnumerationMember Name="Q"/>
            <EnumerationMember Name="R" AliasesMember="Q"/>
          </EnumerationType>

          <EnumerationExtensionType Name="D" ExtendsType="C">
            <EnumerationMember Name="Q"/>
            <EnumerationMember Name="S"/>
            <EnumerationMember Name="T" AliasesMember="C.R"/>
          </EumerationExtension>

          <EnumerationExtension Name="E" ExtendsType="C">
            <EnumerationMember Name="T"/>
            <EnumerationMember Name="U" AliasesMember="D.T"/>
          </EnumerationExtension>

      </Schema>
```

Array Types. Instances of array types can store multiple instances of a specified simple, inline, enumeration, entity reference, or table reference type (arrays of arrays are not allowed). These instances are the *elements* of the array. The order of the elements is preserved and can be explicitly maintained by an application. Applications can insert elements into the array and delete elements from the array. Array types are specified using the syntax:

$$\texttt{Array}(\textit{element-type})$$

where *element-type* is the name of the element's type.

Array Type Constraints. It is possible to constrain values of an array type using one of the constraint elements defined below. These elements can be nested inside of various elements that refer to array types (e.g., a <Property> element in an <EnityType> or <InlineType> element).

ElementConstraint. The <ElementConstraint> constraint element can be used to place constrains on the elements in the array. Any constraint element that is valid for the element type can be specified inside the <ElementConstraint> element.

Occurs. The <Occurs> constraint element can be used to constrain the number of elements in the array. This element may have the following attributes:

- Minimum - Optional. Specifies the minimum number of entries in the array. The default value is zero.

- Maximum - Optional. Specifies the maximum number of entries in the array. A value of "unbounded" means that there is no constraint. The default value is "unbounded".

To be compatible with a constraint specified in a base type, the value specified for Minimum must be equal to or greater then the previous value and the value specified for Maximum must be equal to or less then the previous value.

Unique. The <Unique> constraint element can be used to specify a property or properties of the element type that must contain a unique value in the array. This element may have the following attributes: Properties - Required. A comma separated list of element property names.

Check. The <Check> constraint element contains a Boolean query expression. For the property value to be valid, this expression must evaluate to true. The expression must not have any side effects. When a check constraint is specified in both the base and derived types both constraints are validated. Note that a check constraint on an array property applies to the property as a whole. For example, it can be used to check that the sum of an element property is less then some limit. Alternatively a check constraint placed inside an <ElementConstraint> element would apply to each value individually.

Table Types. Instances of table types can store an unordered collection of instances of a specified entity type. The specified entity type, or a type in its base type hierarchy, must specify key properties. Note that this does not necessarily mean that the entity type cannot be an abstract type. The key properties of the entity type stored in a nested table must be unique in any table instance. The table can hold any entity of the specified type, or a type derived from that type. Applications can insert entities into the table and remove entities from the table. Table types are specified using the syntax:

$$\text{Table}(\textit{entity-type})$$

Entity types (and only entity types) can define properties of table types. Such properties represent nested tables. Nested tables define a storage location that is dependent on an instance of a containing entity. The entities stored in a nested table are considered to be part of the cohesive unit of data defined by the containing entity (e.g., they are deleted when the containing entity is deleted). However, there is no consistency guarantee concerning changes to the container and contained entities, expect as explicitly managed via an application using transactions. It is an error to define recursive tables. That is, an entity may not define a table of its type, its super-types or its sub-types, nor can an entity declare a table of some other entity type having a table of its type. Table typed properties define composition relationships between two entities (the parent entity with the property and the child entities contained in the table).

Entity Reference Types. Instances of reference types store a reference to an entity of a specified type. The reference encapsulates a reference to the table that contains the entity and the entity's key property values. A reference can be resolved to the entity that is the target of the reference. Reference types are specified using the syntax:

$$\text{Ref}(\textit{entity-type})$$

Entity and inline types can define properties of reference types. Reference typed properties define association relationship between two entities (the source entity with the property and the target entity referenced by the property).

Table reference Types. Instances of table reference types store a reference to a table. The target table could be a "top level" table in a table set or a nested table. A reference can be resolved to the table that is the target of the reference. Table reference types are specified using the syntax:

$$\text{TableRef}(\textit{entity-type})$$

Entity and inline types can define properties of reference types.

Properties. Properties are used in entity and inline types to allocate storage. A property is defined using a <Property> element. In addition to the common member elements defined above, this element may have the following attributes:

- Name - Required. The name of the member. The name must be unique in the scope of the defining type. The name must follow the CLR rules for class member names and should follow the Net Framework naming guidelines.
- DuplicateName - Optional. Member names must also be unique across the base type hierarchy unless the DuplicateName attribute is provided and has the value "true". A value of "false", the default, indicates that the member name is expected to be unique.
  The role of this attribute is to a) document the fact that a member name duplicates a property in a base type and b) forces a schema designer to purposely choose to duplicate a name (i.e. it plays the same role as the new keyword in C#).
- Type - Required. The type of the property. This can be any simple, inline, array, entity reference, or table reference type. For properties defined in entities, table types are also allowed.
- Nullable - Required for properties of all types except arrays and nested tables, not allowed for properties with array and nested table types. A value of "true" means the property can store a null value. A value of "false" means the property cannot store a null value.

- Association - Required if the property type is a ref or array of ref type. Specifies the name of the association in which this property participates. See Associations for more.
- Composition - Required if the property type is a table type. Specifies the name of the association or composition in which this property participates. See Compositions for more.
- Role - Specifies the role of an association in which this property participates. See the section on associations for a description of when this attribute is required.

Some example property definitions are show below:

```
<Schema Namespace="MyCompany.MySchema">

    <Using Namespace="System"/>

    <InlineType Name="A">
      <Property Name="One" Type="Int32"/>
    </InlineType>

    <InlineType Name="B" BaseType="A">
      <Property Name="One" Type="String"
      DuplicateName="true"/>
      <Property Name="Two" Type="Int32"/>


    </InlineType>

  </Schema>
```

Property Constraints. The values that can be stored in a property can be constrained using a constraint element inside the <Property> element. The set of allowed constraint elements is dependent on the property's type and are defined as each type is discussed. In addition, a property can be further constrained in a derived type by placing the constraint elements inside a <PropertyConstraint> element. This element may have the following attributes:

- Property - Required. The name of the constrained property. In cases where duplicate property names exist, this name can be qualified using the type name. If the name is a duplicate and is not qualified, the property in the most derived type is assumed.
- Type - Optional. The type to which the property is constrained. Type can only be specified if the property's original type was Array(T), Table(T), Ref(T), or TableRef(T). In such cases the new type must be Array(S), Table(S), Ref (S), or TableRef(S), respectively, and S must be a sub-type ofT.

When using a <PropertyConstraint> element, it is necessary that the specified constraints be compatible with any constraints defined on the base type. The description of each constraint element includes a definition of what compatibility entails. Some simple examples are shown below:

```
<Schema Namespace="MyCompany.MySchema">

    <Using Namespace="System"/>

    <InlineType Name="A">
      <Property Name="X" Type="Int32">
        <Range Miniumum="10" Maximum="1000"/>
      </Property>
      <Property Name="Y" Type="String">
        <Length Maximum="100"/>
      </Property>
    </InlineType>

    <InlineType Name="B" BaseType="A">
      <PropertyConstraint Property="Y">
        <Length Maximum="50"/>
      </PropertyConstraint>
    </InlineType>



</Schema>
```

Constraining Target Types. When deriving a type from a type that has a reference property, it is possible to further constrain the type of entity that can be specified. This is done using the element inside of a <PropertyConstraint> element and specifying a value for the Type attribute as described herein. For example:

```
<Schema Namespace="MyCompany.MySchema>

    <EntityType Name="A" Key="ID">
      <Property Name="ID" Type="Int32"/>
    </EntityType>

    <EntityType Name="B" BaseType="A">
    </EntityType>

    <InlineType Name="C">
      <Property Name="ARef" Type="Ref(A)"/>
    </InlineType>

    <InlineType Name="D" BaseType="C">
      <PropertyConstraint Property="ARef" Type="Ref(B)"/>
    </InlineType>

</Schema>
```

Computed Properties. Computed properties are used in entity and inline types to represent a computed, rather then stored, value. The algorithm used to compute the property's value is not considered part of the data model. A property can be described that returns a query as a part of the data model. A computed property is declared using a <ComputedProperty> element. In addition to the common member attributes defined above, this element may have the following attributes:

- ReadOnly - Optional. Indicates if the property is read only. The default value is "true" meaning the property is read only and cannot be used in updates.
- Static - Optional. Indicates if the property is a static or instance property. The default value is "false" indicating that this is an instance property.

The example below declares a computed property named "X" with type "Int32".

```
<Schema Namespace="MyCompany.MySchema">

   <InlineType Name="A">



      <ComputedProperty Name="X" Type="Int32"/>
   </InlineType>

</Schema>
```

Computed Property Constraints. The values that can be stored in a property can be constrained using a constraint element inside the <ComputedProperty> element. The set of allowed constraint elements is dependent on the property's type and are defined as each type is discussed. In one implementation, <PropertyConstraint> elements also work with computed properties.

Methods. Methods are used on inline and entity types to represent an operation that can be executed. The algorithm used to implement the method is not considered part of the data model. In one implementation, a method can be described that takes a query as an input and returns a query as an output as a part of the data model. Associations essentially define such methods. A method is declared using a <Method> element. This element may have the following attributes:

- Name - Required. The name of the member. The name must be unique in the scope of the defining type. The name must follow the CLR rules for class member names and should follow the .Net Framework naming guidelines.
- DuplicateName - Optional. Member names must also be unique across the base type hierarchy unless the DuplicateName attribute is provided and has the value "true". A value of "false", the default, indicates that the member name is expected to be unique.
  The role of this attribute is to a) document the fact that a member name duplicates a property in a base type and b) forces a schema designer to purposely choose to duplicate a name (i.e. it plays the same role as the new keyword in C#).
- ReturnType - Required. The type of the value returned by the method. This can be a simple, inline, array, entity reference, table reference or table type or it can be an empty string indicating that no value is returned.
- Static - Optional. Indicates if the method is a static or instance method. The default value is "false" indicating that this is an instance method.
- Association - Required if the return type is a ref or array of ref type. Specifies the name of the association in which this method participates. See the section on associations for more.
- Composition - Required if the return type is a table type. Specifies the name of the association or composition in which this method participates. See the section on compositions for more.
- Role - Specifies the role of an association in which this method participates. See the section on associations for a description of when this attribute is required.

A <ReturnTypeConstraints> element may be nested inside the <Method> element. Constraint elements that apply to the method's return type can be nested inside the <ReturnTypeConstraints> element. A <Method> element may have zero or more nested <Parameter> elements to specify the parameters accepted by the method. The <Parameter> element may have the following attributes:

- Name - Required. The name of the parameter.
- Type - Required. The type of the parameter.
- Out - Optional. A value of "true" if this is an output parameter or "false", the default, if this is an input parameter.

Constraint elements that apply to the parameter's type can be nested inside the <Parameter> element. The example below declares a computed property named "X" with type "Int32" and a method named "Y" with a parameter named "a" of type "Int32" and which returns a value of type "Int32."

```
<Schema Namespace="MyCompany.MySchema">

  <InlineType Name="Foo">
     <Method Name="Y" Type="Int32">
      <Parameter Name="a" Type="String">
        <Length Maximum="100"/>
      </Parameter>
     </Method>
  </InlineType>

</Schema>
```

Inline Types. Instances of inline types can only be persisted as a component of one and only one entity instance. Instances of inline types have no explicit identity (the identity is implicit in how it is located inside of its containing entity). The instances of inline types are considered to be part of the cohesive unit of data defined by the containing entity (e.g. they are deleted when the containing entity is deleted). There is also a guarantee that consistency across all the inline data that is part of an entity will be maintained without any explicit application action. Note that this does not preclude features like WinFS change units and synchronization from providing the schema designer finer grained control over consistency.

Schema designers can define new inline types with a structure consisting of a set of properties. Such an inline type may be derived from a single base inline type. Such types are defined using an <InlineType> element inside of a <Schema> element (nested inline types are not allowed). The <InlineType> element may have the following attributes:

- Name - Required. Specifies the type's name.
- BaseType - Optional. Defines the inline type sub-typed by this type. If no base type is specified an anonymous abstract base type that defines no properties is assumed.
- Abstract - Optional. "true" if the type is abstract, "false" if it is concrete. Only instances of non-abstract types can be created. The default value is "false".
- Sealed - Optional. "true" if the type is sealed, "false" if it is not, or "external" if sealed only in uses external to the defining schema. The default value is "false".
- FriendSchemas - Optional. A comma separated list of schema namespaces which are considered "friends" of the defining type. These schemas are not subject to the restrictions imposed by a Sealed=" external" attribute value (they are subject to the restriction Sealed="true" however).

Some example Inline type definitions are:

```
<Schema Namespace="MyCompany.MySchema">

    <InlineType Name="A" Abstract="true">
      <Property Name="One" Type="Int32"/>
    </InlineType>

    <InlineType Name="B" BaseType="A">
      <Property Name="Two" Type="Int32"/>
    </InlineType>

    <InlineType Name="C" BaseType="B">
      <Property Name="Three" Type="Int32"/>
    </InlineType>

</Schema>
```

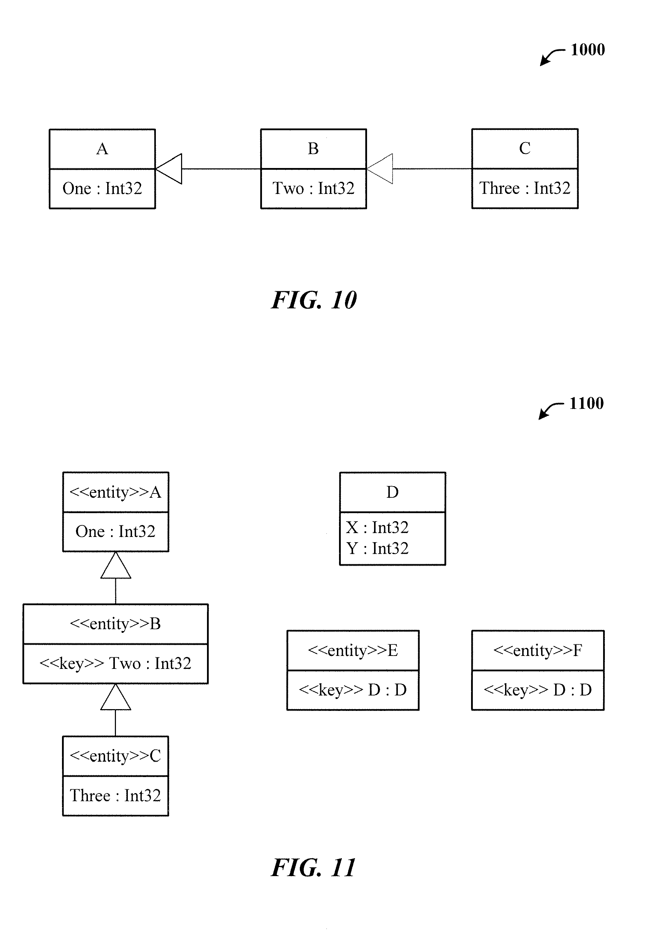

FIG. 10 illustrates a UML representation 1100 of some of the above inline types.

Inline Type Constraints. Instances of an inline type can be constrained using the following constraint elements. These elements can be nested inside of various elements that refer to inline types (e.g. a <Property> element in an <EnityType> or <InlineType> element).

Check. The <Check> constraint element can contain Boolean query expression. For the property value to be valid, this expression evaluates to true. The expression should not have any side effects. When a check constraint is specified in both the base and derived types both constraints are validated.

Entity Types. An entity type defines a cohesive unit of data. Instances of entity types can be persisted in one and only one table. Instances of entity types have an explicit identity. It is possible to store a durable reference to an entity type instance using a Reference type.

Schema designers can define new entity types with a structure consisting of a set of properties. An entity type may be derived from a single base entity type. Such types are declared using an <EntityType> element inside of a <Schema> element (nested entity types are not allowed). The <EntityType> element may have the following attributes:

- Name - Required. Specifies the type's name. The name must be unique among all type names (both inline an entity type names) defined in the enclosing schema.
- BaseType - Optional. Defines the entity type sub-typed by this type. If no base type is specified an anonymous abstract base type that defines no properties is assumed.
- Abstract - Optional. "true" if the type is abstract, "false" if it is concrete. Only instances of non-abstract types can be created. The default value is "false".
- Sealed - Optional. "true" if the type is sealed, "false" if it is not, or "external" if sealed only in uses external to the defining schema. The default value is "false".
- FriendSchemas - Optional. A comma separated list of schema namespaces which are considered "friends" of the defining type. These schemas are not subject to the restrictions imposed by Internal="true" or Sealed="external" (they are subject to the restriction Sealed="true" however).
- Table - Optional. Specifies the name of the one and only top level or nested table that will contain instances of this entity type using the syntax *entity-type-name. table property-name*. The default is that that any number of tables may be defined to contain instances of the entity type.
- Extensible - Optional. A value of "true", the default, indicates that the entity can be extended using <EntityExtensionType> elements as described below. A value of "false" indicates that the entity cannot be extended.
- Association - If the entity has the role of an association entity in an association definition, this attribute is required and must specify the name of the association. Otherwise this attribute cannot be present.
- Key - A comma separated list of one or more names of properties defined in the entity type or a base type. Only one type in an entity type hierarchy can specify a Key attribute. All types in that type's base type hierarchy must be abstract types. The properties specified may be taken from the type or its base types. The specified properties establish part of the entity's identity. The remainder of the identity is implicitly taken from the entity's parent (e.g., the entity instance that defines the table property in which the child entity resides).

  Only properties with an inline non-nullable type, excluding arrays, can be specified as a key property. If the property is of a user defined inline type, all the properties of this type are considered key properties and all must be single valued and non-nullable. Nested properties (properties of a property of a complex type) can also be specified as key properties.

Some example entity type definitions are:

```
<Schema Namespace="MyCompany.MySchema">

    <EntityType Name="A" Abstract="true">
      <Property Name="One" Type="Int32"/>
    </EntityType>

    <EntityType Name="B" BaseType="A" Key="Two">
      <Property Name="Two" Type="Int32"/>
    </EntityType>

    <EntityType Name="C" BaseType="B">
      <Property Name="Three" Type="Int32"/>


    </EntityType>

    <InlineType Name="D">
      <Property Name="X" Type="Int32"/>
      <Property Name="Y" Type="Int32"/>
    </InlineType>

    <EntityType Name="E" Key="D">
      <Property Name="D" Type="D"/>
    </EntityType>

    <EntityType Name="F" Key="D.X">
      <Property Name="D" Type="D"/>
    </EntityType>

    </Schema>
```

FIG. 11 illustrates a UML representation of some of the entity types 1100 described above.

Entity Type Constraints. Instances of an entity type can be constrained using the following constraint elements. These elements can be nested inside of various elements that refer to entity types (e.g. a <Property> element in an <EnityType> element).

Check. The <Check> constraint element can contain Boolean query expression. For the property value to be valid, this expression evaluates to true. The expression should not have any side effects. When a check constraint is specified in both the base and derived types both constraints are validated.

Entity Extension Types. To address WinFS and MBF scenarios, it must be possible to extend a given set of types without actually modifying the schemas where those types were defined. While this can be accomplished by adopting one of a number of patterns (such as providing a base class with a table of an Extension entity type), it is desirable to make such a concept a first class part of the data model. This allows special API patterns to be generated for extensions and is simpler for type designers to understand and use.

Entity types that specify the Extensible="true" attribute can be extended. An entity extension is declared using an <EntityExtensionType> element inside of a <Schema> element. The <EntityExtensionType> element may have the following attributes:

- Name - Required. The name of the extension type.
- ExtendsType - Required. The name of the entity type being extended.
- InstanceManagement - Required. A value of "Implicit" indicates that instances of the extension are implicitly added and removed to/from the extended entity. A value of "Explicit" indicates that instances of the extension must be explicitly added and removed by an application.
- Table - Optional. Specifies a table in which to store the extensions.

It may not be possible to derive one extension type from another extension type. The <EntityExtensionType> element may contain any element that can be put inside of an <EntityType> element. Typically this includes <Property> elements. It is not necessary for the property names to be unique across all extensions or even across properties of the extended type. If InstanceManagement="Implicit", all of the properties defined in an extension must either be nullable, specify a default value, or have an array, collection, or table type with a minimum occurrence constraint of zero. Note that a singleton inline typed property cannot specify a default value and so must be nullable. This allows queries to be executed against the extension as if it were always present.

If InstanceManagement="Explicit", applications explicitly add and remove an extension to/from an entity instance using the operations defined in the query language for the CDM. A means to test for the presence of an extension is also provided. Entity extension instances are considered to be part of the cohesive unit of data defined by the containing entity (e.g., they are deleted when the containing entity is deleted). However, there is no consistency guarantee concerning changes to the entity and the extension, expect as explicitly managed *via* an application using transactions.

All EntityExtensions have a default property named "Entity" of type Ref(T), where T is the value ofExtendsType, which points to the entity instance with which the extension is associated. An example entity type and extension are shown below.

```
<Schema Namespace="MyCompany.MySchema">

  <EntityType Name="A" Key="ID">
    <Property Name="ID" Type="Int32"/>
    <Property Name="X" Type="Int32"/>
  </EntityType>

  <EntityExtension Name="B" ExtendsType="A"
    InstanceManagement="Implicit">



    <Property Name="X" Type="String"/>
    <Property Name="Y" Type="Int32"/>
  </EntityExtension>

</Schema>
```

Association. An *association* allows two or more entities, the *end* entities to be related to one another. Each of the ends remains conceptually independent of the others. Associations are represented using an <Association> element. This element may have the following attributes:

- Name - Required. The name of the association.
- Scope - Optional. Specifies an entity type name. The association is scoped to an instance of an entity of the specified type and its validity can be checked relative to an instance.

An <Association> element has two or more nested <End> elements, each describing one of the ends of the association. Note that more than two <End> elements can be specified only if an <AssociationEntity> element is also specified. The <End> element may have the following attributes:

- Role - Required. Names the role this end plays in the association.

- PluralRole - Optional. Provides a plural form of the role name. This name is used in the query model and canonical object mapping. If not specified, a name of the form *role*Entities is used instead.
- Type - Required. The type of entity represented by the end.
- Multiplicity - Optional. The multiplicity of this end of the association, which sets a lower and upper bound on the cardinality. It is specified as an integer range of the form *<lower_bound>..<upper_bound>,* or as a single integer if lower and upper bounds are the same. The upper bound can be "*", which indicates unbounded. A single "*" is synonymous with "0..*". The defaults. and rules about whether those defaults can be overridden depend upon the style of the association.

  - ■ Reference: "*" on the referring side, "0..1" on the referenced side
  - ■ Composition: "1" on the parent side (fixed), "*" on the child side
  - ■ Condition and Common Value: "*" on both sides (fixed)
  - ■ Association Entity: "*" on both sides

  A multiplicity greater than 1 is legal but may be treated as * for purposes of enforcement.
- Table - Required for the target of a reference-based association, optional otherwise. Specifies a table property of the entity type specified by Type, or one of Type's ancestor types. The end is constrained such that the associated entity appears in the specified table. The syntax specifies a path that starts with an entity type and ends with a table property of the proper type. Each segment of the path resolves to an entity type in one of two ways:

  a. It specifies a reference or table property on the entity type (either resolves to the underlying entity type). This syntax is of the form: *<entity-type>/<property-name>.* If a reference property is used its corresponding association end must have specified a table name.
  b. It specifies a role on an association or composition (either resolves to the type of the end). This syntax is of the form: *<entity-type>/<relationship-name>.<role-name>.* If an association is used the end specified by the role name must have specified a table name.

  May be "" on a reference-based association, indicating the reference can be in any table of the correct type. If a Scope attribute was specified the path must start with the indicated entity type. If a Table attribute is specified on the definition of Type this path must be compatible with it.
- Scoped - Optional. Indicates if this end is scoped to an instance of the entity indicated in the Scope attribute on the <Association> element. The default is true.
- OnDelete - Optional. Specifies the action that is to be taken when the entity with in the role is deleted. May only be specified when this end is listed in a <Reference> or <CommonValue> element. The possible values are:

  • Restrict - Prevents the entity from being deleted. This is the default value.

  • Cascade - Causes the entities in the other end roles to be deleted.

  • CascadeToAssociationEntity - Causes only the association entity to be deleted.

  • SetNull - Causes the property on the other end of the association to be set to null. In cases where the property is a collection of references, the references are removed from the collection. The lower bound of the multiplicity on the other end of the association must be zero. Specifiable only if this end is listed in one of the properties of a <CommonValue> element or the ToRole of a <Reference> element.

- OnUpdate - Optional. Specifies the action that is to be taken when the common value property of the entity in the end role is updated. May only be specified when this end is listed in a <CommonValue> element. If OnUpdate is not specified, then updating the property on one end has no affect on the property on the other end. The possible values are:

  - Restrict - Prevents the entity from being updated.
  - Cascade - Causes the common value property of the entity in the other end role to be updated to the same value.
  - SetNull - Causes the common value property of the entity in the other end role to be set to null. The lower bound of the multiplicity on the other end of the association must be zero.

Association Styles. The style of the association indicates how the ends are connected. Every association is one of four styles, indicated by nesting one of the following elements under the <Association> element.

• <Reference> - the two ends are connected using a reference property on one of the ends.
• <Condition> - the two ends are connected through an arbitrary join on the ends.
• <CommonValue> - the two ends are connected through an equality join on a property from each end.
• <AssociationEntity> - the two or more ends are connected using an additional entity. Only when this element is used can more than two <End> elements can be specified.

A <Reference> element describes a reference style association. The element may have the following attributes:

• FromRole - Required. The name of the role that contains the reference typed property. For association entities this must be the name of the association entity role.
• ToRole - Required. The name of the role that is targeted by the reference property. The identified role must not specify an OnUpdate attribute.
• Property - Required. The name of the reference property in the FromRole entity. The <Property> element defining this property must have a Role attribute specifying the enclosing association. If the upper bound of the multiplicity is one the type of the property must be a reference, and that reference must be nullable if the lower bound is zero. If greater than one the property type must be array of reference.

An example of a reference association "AtoB" relating entities A and B is shown below.

```
<EntityType Name="A" Key="ID">
  <Property Name="ID" Type="Int32">
  <Property Name="BRef" Type="Ref(B)" Association = "AtoB"/>
</EntityType>

<EntityType Name="B" Key="ID">
  <Property Name="ID" Type="Int32">
</EntityType>

<Association Name="AtoB">
  <End Role="ARole" Type="A"/>
  <End Role="BRole" Type="B"/>
  <Reference FromRole="ARole" ToRole="BRole"
    Property="BRef"/>
</Association>
```

A <CommonValue> element describes a common value style association. The element may have the following attributes:

• Property 1 - Required. Identifies a property on one of the ends using a string with the format *role-name.property-name.*
• Property2 - Required. Identifies a property on one of the ends using a string with the format *role-name.property-name.*

For an association entity one of Property1 and Property2 specifies the association entity role and the other specifies an end role. The specified end may contain an OnUpdate and/or OnDelete attribute. An example of a common value association "AtoB" relating entities A and B is shown below.

```
<EntityType Name="A" Key="ID">
  <Property Name="ID" Type="Int32">
```

```
    <Property Name="X" Type="String"/>
  </EntityType>

  <EntityType Name="B" Key="ID">
    <Property Name="ID" Type="Int32">
    <Property Name="Y" Type="String"/>
  </EntityType>

  <Association Name="AtoB">
    <End Role="ARole" Type="A"/>
    <End Role="BRole" Type="B"/>
    <CommonValue Property1="ARole.X" Property2="BRole.Y"/>
  </Association>
```

A <Condition> element describes an association based on an arbitrary join between the two ends. The element must contain an expression that evaluates to true for related entities. The role names specified in the <End> and <Using> elements can be used in this expression. If the <Association> element contains a <Condition> element, it may also contain zero or more <Using> elements. These elements describe additional entities that are used to define the relationship between the ends. The <Using> elements may have the following attributes:

- Role - Required. Names the role of the end used in the relationship.
- Type - Required. The type of entity used in the relationship.
- Table - See the attribute description on the association <End> element.

Using the <End>, <Using> and <Condition> elements, a full query is constructed. This query has the form:

SELECT *end-role-1, end-role-2*
FROM *end table-1* AS *end-role-1, end-table-2* AS *end-role-2, using-table-n*
AS *using-role-n, ...*
WHERE *condition*

The following example shows two entities A and B related using an expression including a third entity C.

```
      <EntityType Name="A" Key="ID">
        <Property Name="ID" Type="Int32">
        <Property Name="X" Type="String"/>
      </EntityType>

      <EntityType Name="B" Key="ID">
```

```
        <Property Name="ID" Type="Int32">
        <Property Name="Y" Type="String"/>
      </EntityType>

      <EntityType Name="C" Key="ID">
        <Property Name="ID" Type="Int32">
        <Property Name="Z1" Type="String"/>
        <Property Name="Z2" Type="String"/>
      </EntityType>

      <Association Name="AtoB">
        <End Role="ARole" Type="A"/>
        <End Role="BRole" Type="B"/>
        <Using Role="CRole" Type="C" Table="CTable"/>
        <Condition>
            ARole.X=CRole.Z1 AND BRole.Y=CRole.Z2
        </Condition>
      </Association>
```

The <AssociationEntity> element indicates that the ends of the association are connected by an association entity. The <AssociationEntity> element may have the following attributes:

- Role - Required. Names the role the association entity plays in the association.
- PluralRole - Optional. Provides a plural form of the role name. This name is used in the query model and canonical object mapping. If not specified, a name of the form roleEntities is used instead.
- Type - Required. The type of the association entity. The <EntityType> element that defines this type must specify an Association attribute that identifies the enclosing <Association> element.
- Table - See the attribute description on the association <End> element.

An <AssociationEntity> has one nested <End> element. An association entity defines an association between this <End> element and each of the <End> elements nested under <Association>. The style of these associations is described with a <Reference>, <Condition> or <CommonValue> element. One of the associations can be described instead with the <Composition> element:

- <Composition> - the association entity is a child of one of the ends of a composition.

The Role on each <End> of the <Association> must be referenced by one of the two roles on one of these style elements; the other role references the <End> of the <AssociationEntity>.
A <Composition> element describes the composition of the association entity into one of the end roles. It must be nested inside of <AssociationEntity>. The <Composition> element has the following attributes:

- ParentRole - Required. The name of the end role that contains the nested table of the association entity type. This must not be the association entity role. The OnDelete attribute on the <End> element referenced by this role must specify Cascade or CascadeToAssocationEntity . An OnUpdate attribute cannot be specified.
- ChildRole - Required. The name of the role that is contained by the parent entity. This must be the association entity's <End> role.
- Property - Required. The name of the table property in the parent entity. The <Property> element that defines this property must have an Association attribute that specifies the enclosing association.

A <Condition> element must have the following attribute when it is nested under <AssociationEntity>:

- JoinedRoles - Required. A common separated list of two or more role names. This list includes the role name of the <End> of the <AssociationEntity> and one of the end role names. Listed roles must not specify an OnDelete or OnUpdate attribute.

The following example shows an entity association "AtoB" relating A and B using the association entity C, where C is composed in A and has a reference to B.

```
<EntityType Name="A" Key="ID">
  <Property Name="ID" Type="Int32">
  <Property Name="CTable" Type="Table(C)"/>
</EntityType>

<EntityType Name="B" Key="ID">
  <Property Name="ID" Type="Int32">
</EntityType>

<EntityType Name="C" Key="ARef, BRef" Association="AtoB">
  <Property Name="BRef" Type="Ref(B)" Role="BRole"/>
</EntityType>

<Association Name="AtoB">
  <AssociationEntity Type="C">
     <End Role="CRole" Type="C"/>
      <Composition ParentRole="ARole" ChildRole="CRole"
    Property="CTable"/>




          <Reference FromRole="CRole" ToRole="BRole"
        Property="BRef"/>
     </AssociationEntity>
     <End Role="ARole" Type="A"/>
     <End Role="BRole" Type="B"/>
  </Association>
```

Composition. Every nested table defines a *composition* between entities of two types: the entity type that contains the table typed property and the entity type contained by the table. The composition is described using a <Composition> element. This element may have the following attributes:

- Name - Required. The name of the composition.

The <Composition> element contains a <ParentEnd> element. This element may have the following attributes:

- Role - Required. Names the role of the parent entity.
- Type - Required. Specifies the type of the parent entity.
- Property - Required. Specifies the property on the parent entity that defines the composition.
- PluralRole - Optional. Provides a plural form of the role name. This name is used in the query model and canonical object mapping. If not specified, a name of the form *role*Entities is used instead.

The <Composition> element must also contain a <ChildEnd> element. This element may have the following attributes:

- Role - Required. Names the role of the child entity.
- Type - Required. Specifies the type of the child entity.
- Multiplicity - Optional. The multiplicity of the children in the composition. See also Multiplicity on the <End> element of association.

- PluralRole - Optional. Provides a plural form of the role name. This name is used in the query model and canonical object mapping. If not specified, a name of the form *role*Entities is used instead.

The schema below defines two independent nested tables that can contain instances of A: B.ATable and C.ATable. There is also a nested table that can contain instances ofB, D.BTable, and a nested table that can contain instances of C, D.CTable. Instances ofD are contained in a top level table named DTable.

```
<Schema Namespace="MyCompany.MySchema">
```

```
<EntityType Name="A" Key="AID">
  <Property Name="AID" Type="String">
    <Length Maximum="2"/>
  </Property>
</EntityType>

<EntityType Name="B" Key="BID">
  <Property Name="BID" Type="String">
    <Length Maximum="2"/>
  </Property>
  <Property Name="TableA" Type="Table(A)"
  Composition="BA"/>
</EntityType>

<Composition Name="BA">
  <ParentEnd Role="RoleB" Type="B" Property="TableA"/>
  <ChildEnd Role="RoleA" Type="A"/>
</Composition>

<EntityType Name=C" Key=CID">
  <Property Name="CID" Type="String">
    <Length Maximum="2"/>
  </Property>
  <Property Name="TableA" Type="Table(A)"
  Composition="CA"/>
</EntityType>

<Composition Name="CA">
  <ParentEnd Role="RoleC" Type="C" Property="TableA"/>
  <ChildEnd Role="RoleA" Type="A"/>
</Composition>

<EntityType Name="D" Key="DID">
  <Property Name="DID" Type="String">
    <Length Maximum="2"/>
  </Property>
  <Property Name="TableB" Type="Table(B)"
  Composition="DB"/>
  <Property Name="TableC" Type="Table(C)"
  Composition="DC"/>
</EntityType>

<Composition Name="DB">
  <ParentEnd Role="RoleD" Type="D" Property="TableB"/>
  <ChildEnd Role="RoleB" Type="B"/>
</Composition>

<Composition Name="DC">
  <ParentEnd Role="RoleD" Type="D" Property="TableC"/>
  <ChildEnd Role="RoleC" Type="C"/>
</Composition>

<TableSet Name="TS">
  <Table Name="TableD" Type="D"/>
```

```
</TableSet>

</Schema>
```

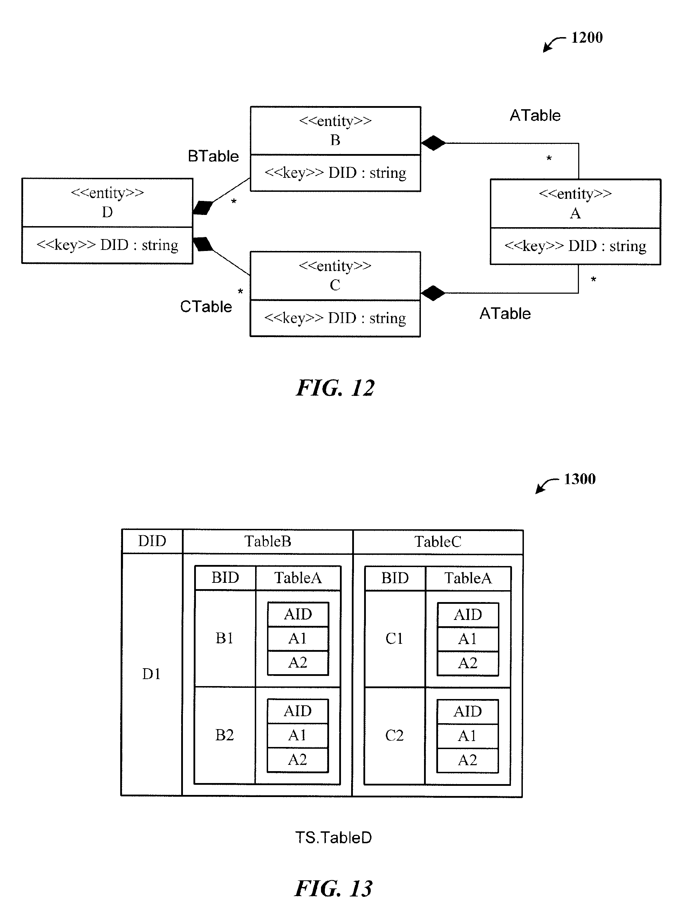

FIG. 12 illustrates a UML representation 1200 of some of the same types under composition.

FIG. 13 illustrates a visualization 1300 of an instance ofD in the TS.TableD.

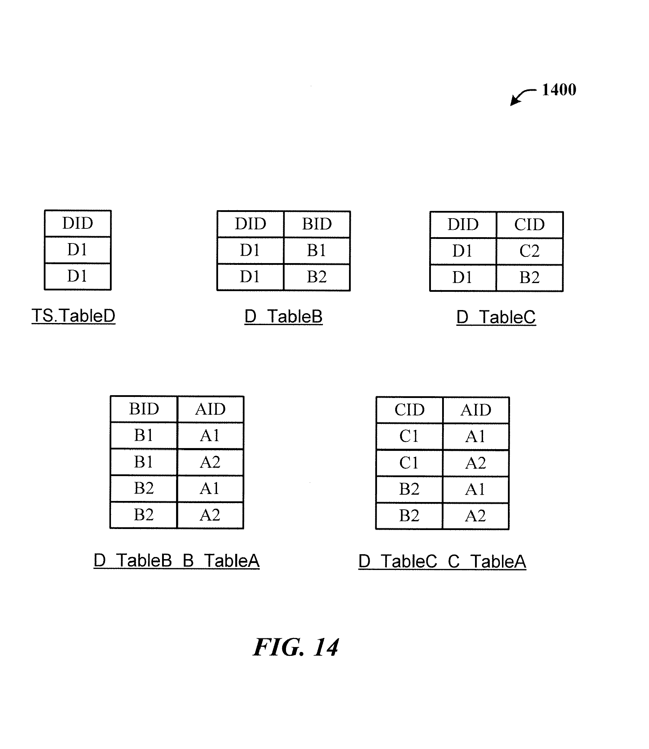

FIG. 14 illustrates SQL tables 1400 that correspond to the entity tables of FIG. 13.

Nested Table Type Constraints. It is possible to constrain values of a collection and array type using one of the constraint elements defined below. These elements can be nested inside of various elements that refer to table types (e.g., a <Property> element in an <EntityType> or <InlineType> element).

EntityConstraint. The <EntityConstraint> constraint element can be used to place constraints on the entities in the table. Any constraint element that is valid for an entity type can be specified inside the <EntityConstraint> element.

Occurs. The <Occurs> constraint element can be used to constrain the number of entities in the table. This element may have the following attributes:

- Minimum - Optional. Specifies the minimum number of entries in the table. The default value is zero.

- Maximum - Optional. Specifies the maximum number of entries table. A value of "unbounded" means that there is no constraint. The default value is "unbounded".

To be compatible with a constraint specified in a base type, the value specified for Minimum must be equal to or greater then the previous value and the value specified for Maximum must be equal to or less then the previous value.

Unique. The <Unique> constraint element can be used to specify a property or properties of the entity type that must contain a unique value in the table. This element may have the following attributes: Properties - Required. A comma separated list of entity property names.

Check. The <Check> constraint element can contain a Boolean query expression. For a table to be valid, this expression evaluates to true. The expression must not have any side effects. When a check constraint is specified in both the base and derived types both constraints are validated. Note that a check constraint on a table applies to the property as a whole. For example, it could be used to check that the sum of a particular property value is less then some limit. Alternatively a check constraint placed inside an <EntityConstraint> element would apply to each value individually.

Navigation Properties. A navigation property may optionally be placed on the entity specified by either end of a relationship. This property provides a means of navigating from one end to the other end of the relationship. The navigation properties are represented using an <NavigationProperty> element within the <Entity> definition. This element may have the following attributes:

- Name - Required. The name of the member. The name must be unique in the scope of the defining type. The name must follow the CLR rules for class member names and should follow the .Net Framework naming guidelines.
- DuplicateName - Optional. Member names must also be unique across the base type hierarchy unless the DuplicateName attribute is provided and has the value "true". A value of "false", the default, indicates that the member name is expected to be unique.
  The role of this attribute is to a) document the fact that a member name duplicates a property in a base type and b) forces a schema designer to purposely choose to duplicate a name (i.e. it plays the same role as the new keyword in C#).
- Association - Either the Association or the Composition attribute must be present. Specifies the name of the association represented by this property.
- Composition - Either the Association or the Composition attribute must be present. Specifies the name of the composition represented by this property.
- FromRole - Required. The role of the end represented by the entity with the navigation property.
- ToRole - Required. The role of the end represented by the property.

Type Aliases. A type alias gives a unique name to a simple, collection, array, table, or reference type and a set of constraints. A type alias is defined using a <TypeAlias> element that allows the following attributes:

- Name - Required. the name of the alias

- AliasedType - Required. The name of the aliased type. This must be a simple, collection, array, table, or reference type.

The <TypeAlias> element can contain any constraint element allowed for the aliased type. The defined alias name can be used anywhere the name of the aliased type can be used. Some example aliases are shown below:

```
<Schema Namespace="MyCompany.MySchema">

  <TypeAlias Name="Name" AliasedType="String">
    <Length Maximum="1000"/>
  </TypeAlias>

  <TypeAlias Name="PersonRef" BaseType="Ref(PersonItem)">
  </TypeAlias >

  <TypeAlias Name="Keywords"
    AliasedType="Collection(String)">
    <Length Maximum="100"/>
    <Occurs Minumum="0" Maximum="unbounded"/>
  </TypeAlias>

</Schema>
```

Table Sets and Table Set Types. A table set type is a restricted form of an entity type. A table set type is defined using a <TableSetType> element. This element may contain the following attributes:

- Name - Required. The name of the table set type. This name must be unique among all types and relationships in the defining schema.
- DefaultTableSet - Optional. Specifies the default table set of the table set type. If not specified there is no default.

<TableSetType> elements may contain <Property> elements that specify reference and table types. Reference property may only specify table set types. <TableSetType> elements may also contain <ComputedProperty> and <Method> elements.

Table Set Instances. A table set is an instance of table set type. Table sets form the "top level" of the data model. All storage is allocated directly or indirectly by creating a table set. A table set is described using a <TableSet> element. This element may have the following attributes:

- Name - Required. The name of the table set. This name must be unique among all table sets in the defining schema.
- Type - Required. The name of a table set type.

Aggregating Table Sets. The <TableSet> element contains an <AggregatedTableSet> element for each reference typed property in the specified entity type. This allows previously defined table sets to be aggregated into a new table set. This is useful when combining data from two separate applications into a single application. The <AggregatedTableSet> element may contain the following attributes:

- Property - Required. The name of a reference typed property.
- TableSet - Required. The name of the table set that will be referenced by the property.

The example below illustrates this:

From the Sales Schema

```
<TableSetType Name="SalesData">
   ...
</TableSetType>

<TableSet Name="Sales" Type="SalesData"/>
```

From the WinFS Schema

```
<TableSetType Name="WinFSData" DefaultTableSet="WinFS">
  ...
</TableSetType>

<TableSet Name="WinFS" Type="WinFSData"/>
```

From a Third Schema

```
<TableSetType Name="ThirdAppData">
  <Property Name="Sales" Type="Ref(SalesData)" .../>
  <Property Name="WinFS" Type="Ref(WinFSData)" .../>
  ...
</TableSetType>

<TableSet Name="ThirdApp" Type="ThirdAppData">
  <AggregatedTableSet Property="WinFS" TableSet="WinFS"/>
  <AggregatedTableSet Property="Sales" TableSet="Sales"/>
</TableSet>
```

Query Language. A query language for the CDM can be specified. The query language can be based on SQL targeting CDM concepts like entities and relationships.

Using Compositions in Queries. The following patterns work by determining the table set that an input table is based on. A composition can make the following functions available for use in query:

- *Table(parent-type) composition. Getparent-role-p(Table(child-type))* - returns the parents of the input children.
- *parent-type composition. Getparent-role-s(child-type)* - The parent of the input child.
- Table(*parent-type*) *composition.*Filter*parent-role-p*(Table(*parent-type*), *Table(child-type))* - returns a set of parents filtered by the presence of a child in the input set of children..
- *Table*(*child-type*) *composition.* Get*child-role-p*(Table(*parent-type*))-returns the children of the input parents.
- Table(*child-type*) *composition. Getchild-role-p(parent-type)* - returns the children of the input parent.
- *Table(child-type) composition Filterchild-role-p(Table(child-type), Table(parent-type))* - returns a set of children filtered by the presence of a child in the input set of parents.

where: *composition*represents the composition name; *parent-role-s* represent the singular form of the parent role name; *parent-role-p* represent the plural form of the parent role name; *child-role-s* represents the singular form of the child role name; *child-role-p* represents the plural form of the child role name; *parent-type* represents the parent entity type; *child-type* represents the child entity type; and Table(*type*) represents a query over a table of a particular type.

Using Associations in Queries. These patterns can work by determining the table set that an input table is based on. An association makes the following functions available for use in query:

- *Table*(*end-1-type*) *association. Getend-1-role-p*(Table(*end-2-type*)) - returns the *end-1* entities associated with the specified *end-2* entities.
- Table(*end-1-type*) *association.*Get*end-1-role-p*(*end-2-type*) - returns the *end-1* entities associated with the specified *end-2* entity.

- Table(*end-1-type*) *association.* Filter*end-1-role-p*(Table(*end-1-type*)*,* Table(*end-2-type*)) *-* returns a set of *end-1* entities filtered by the presence of an associated *end-2* entity in the input set of *end-2* entities..
- The above methods are repeated for all combinations of ends, including the association entity if present.
  where: *association* represents the association name; *end-1-role-s* represent the singular form of an end's role name; *end-1-role-p* represent the plural form of an end's role name; *end-2-role-s* represents the singular form of an end's role name; *end 2-role-p* represents the plural form of an end's role name; *end-1-type* represents the source entity type; *end-2--type* represents the target entity type; and *Table(type)* represents a query over a table of a particular type.

Interfaces. Interfaces provide CLR-like interfaces for entity and inline types. They can be used to solve most of the same problems that interfaces solve in object type systems. An interface is declared using an <Interface> element. The <Interface> element can have the following attributes:

- Name - Required. The name of the interface. Must be unique among all types and top level tables defined in the schema.
- BaseInterfaces - Optional. A comma separated list of interfaces from which this interface is derived.

An <EntityType> or <InlineType> element can use an ImplementedInterfaces attribute to specify a comma separated list of interfaces that it implements. Each of the properties defined in a listed interface must be defined in the type. As with an interface in C#, a property defined in an interface is implicitly implemented in the type by simply declaring a property with the same name and type. The constraints on the property can be narrowed when it is declared. A property can also be explicitly implemented. This is accomplished by including the interface type name in the property name (just as for C#). This allows different constraints to be applied to properties that have the same signature but are inherited from different interfaces. For example:

```
<Schema Namespace="MyCompany.MySchema">

    <Interface Name="IA">
      <Property Name="X" Type="Int32"/>
      <Property Name="Y" Type="Int32"/>
    </Interface>

    <Interface Name="IB">
      <Property Name="X" Type="Int32"/>
      <Property Name="Y" Type="Int32"/>



    </Interface>

    <EntityType Name="C" ImplementedInterfaces="IA, IB"
      Key="ID">
      <Property Name="ID" Type="Int32"/>
      <Property Name="X" Type="Int32"/>
      <Proeprty Name="IA.Y" Type="Int32">
        <RangeConstraint Maximum="100"/>
      </Proeprty>
      <Property Name="IB.Y" Type="Int32">
        <RangeConstraint Maximum="10"/>
      </Property>
    </EntityType>

</Schema>
```

Following is a complete schema example. The example below defines Customer, Order, OrderLine, Product, and Supplier entity types along with associations describing how these entities are related.

```
<Schema Namespace="MyLOB">

  <InlineType Name="Address">
    <Property Name="Line1" Type="String"
Nullable="false">
      <Length Maxiumum="100"/>
    </Property>
    <Property Name="Line2" Type="String" Nullable="true">
      <Length Maxiumum="100"/>
    </Property>
    <Property Name="City" Type="String" Nullable="false">
      <Length Maxiumum="50"/>
    </Property>
    <Property Name="State" Type="String"
Nullable="false">
      <Length Minimum="2" Maximum="2"/>
    </Property>
    <Property Name="ZipCode" Type="String"
Nullable="false">
      <Length Minimum="5" Maximum="5"/>
    </Property>
  </InlineType>

  <EntityType Name="Customer" Key="CustomerId">
    <Property Name="CustomerId" Type="String"
Nullable="false">
      <Length Minimum="10" Maximum="10"/>
    </Property>
    <Property Name="Name" Type="String" Nullable="false">
      <Length Maximum="200"/>
    </Property>
    <Property Name="Addresses" Type="Array(Address)">
```

```
                     <Occurs Minumum="1" Maximum="3"/>
                  </Property>
                  <NavigationProperty Name="Orders"
               Association="OrderCustomer"
                                       FromRole="Customer"
               ToRole="Orders"/>
                </EntityType>

                <EntityType Name="Order" Key="OrderId">
                  <Property Name="OrderId" Type="String"
               Nullable="false">
                     <Length Minimum="10" Maximum="10"/>
                  </Property>
                  <Property Name="Date" Type="DateTime"
               Nullable="false"/>
                  <Property Name="Customer" Type="Ref(Customer)"
                           Association="OrderCustomer"/>
                  <Property Name="Lines" Type="Table(OrderLine)"
                           Composition="OrderOrderLine"/>
                  <Property Name="ShippingAddress" Type="Address"
               Nullable="false"/>
                </EntityType>

                <Composition Name="OrderOrderLine">
                  <ParentEnd Role="Order" Type="Order"
               PluralRole="Orders" Property="Lines"/>
                  <ChildEnd Role="OrderLine" Type="OrderLine"
               PluralRole="OrderLines"
                           Multiplicity="100"/>
                </Composition>

                <Association Name="OrderCustomer">
                  <End Role="Order" Type="Order" PluralRole="Orders"/>
                  <End Role="Customer" Type="Customer"
               PluralRole="Customers"
                       OnDelete="Cascade" Table=""/>
                </Association>

                <EntityType Name="OrderLine" Key="LineId">
                  <Property Name="LineId" Type="Byte"
               Nullable="false"/>
                  <Property Name="Product" Type="Ref(Product)"
               Nullable="false"
                           Association="OrderLineProduct"/>
                  <Property Name="Quantity" Type="Int16"
               Nullable="false">
                     <Range Minumum="1" Maximum="100"/>
                  </Property>
                  <Property Name="Price" Type="Decimal"
               Nullable="false">
                     <Decimal Precision="6" Scale="2"/>
                  </Property>
                  <NavigationProperty Name="Order"
               Composition="OrderOrderLine"
                                       FromRole="Line" ToRole="Order"/>
```

```
        </EntityType>

        <Association Name="OrderLineProduct">
          <End Role="OrderLine" PluralRole="OrderLines"/>
          <End Role="Product" Type="Product"
PluralRole="Products" Table=""/>
          <Reference FromRole="OrderLine" ToRole="Product"
Property="Product"/>
        </Association>

        <EntityType Name="Product" Key="ProductId">
          <Property Name="ProductId" Type="Guid"
Nullable="false"/>
          <Property Name="Title" Type="String"
Nullable="false">
            <Length Maximum="100"/>
          </Property>
          <Property name="Description" Type="String"
Nullable="false">
            <Length Maxumum="1000"/>
          </Property>
        </EntityType>

        <Association Name="CustomerProduct">
          <End Role=="Customer" PluralRole=="Customers"
Type=="Customer"/>
          <End Role="Product" PluralRole="Products"
Type="Product"/>
          <Uses Role="Order" Type="Order"/>
          <Uses Role="Line" Type="Lines"/>
          <Condition>
            Order.Customer = Customer AND OrderLine.Product =
Product
          </Condition>
        </Association>

        <EntityType Name="Supplier" Key="SupplierId">
          <Property Name="SupplierId" Type="String"
Nullable="false">
            <Length Minimum="10" Maximum="10"/>
          </Property>
          <Property Name="Name" Type="String" Nullable="false">
            <Length Maximum="200"/>
          </Property>
          <Property Name="Addresses" Type="Array(Address)">
            <Occurs Minumum="1" Maximum="3"/>
          </Property>
          <NavigationProperty Name="Products"
Association="ProductSupplier"
                              FromRole="Supplier"
ToRole="Product"/>
        </EntityType>

        <EntityType Name="ProductSupplierLink" Key="Product,
Supplier"
```

46

```
                Association="ProductSupplier">
        <Property Name="Product" Type="Ref(Product)"
Nullable="false"
                    Role="Product"/>
        <Property Name="Supplier" Type="Ref(Supplier)"
Nullable="false"
                    Role="Supplier"/>
        <Property Name="Price" Type="Decimal"
Nullable="false">
            <Decimal Precision="6" Scale="2"/>
        </Property>
    </EntityType>

    <Association Name="ProductSupplier">
        <AssociationEntity Type="ProductSupplierLink">
            <End Role="Link" Type="ProductSupplierLink"/>
            <Reference FromRole="Link" ToRole="Product"
Property="Product"/>
            <Reference FromRole="Link" ToRole="Supplier"
Property="Supplier"/>
        </AssociationEntity>
        <End Role="Product" Type="Product"
PluralRole="Products"
            Table="" />
        <End Role="Supplier" Type="Supplier"
PluralRole="Suppliers"
            Table="" />
    </Association>

    <TableSetType Name="LOBData">
        <Property Name="Orders" Type="Table(Order)"/>
        <Property Name="Customers" Type="Table(Customer)"/>
        <Property Name="Products" Type="Table(Product)"/>
        <Property Name="Suppliers" Type="Table(Supplier)"/>
        <Property Name="PSLinks"
Type="Table(ProductSupplierLink)"/>
    </TableSetType>

    <TableSet Name="LOB" Type="TableSetType"/>

</Schema>
```

SQL99 and the CDM. SQL99 defines several object extensions to the core relational data model (e.g., SQL92). Some key aspects of SQL99 are: User-defined types that includes both Distinct types and Structured types; Methods (Behaviors); Typed Tables; and Refs.

SQL 99 defines part or all of a complete type system self-contained within the SQL data model. While objects in programming languages can be mapped to SQL objects, it is not a goal of SQL99 to define a tight binding with a programming language (e.g., Java, C#). For example, methods in SQL99 are defined in SQL procedural language rather than in a standard programming language. A goal of the CDM is to specify a tight alignment with both SQL and CLR.

User-defined Types. The types, simple and complex types, in the CDM map almost one to one with user defined types in SQL99. Simple types and simple type aliases map to SQL99 scalar types and distinct types; Complex types map to SQL99 structured data type. A main difference between a SQL structured type and a complex type is the distinction between Inline types and Entity types. In the CDM, the notion of identity/key is defined at the type definition time. In SQL99, identity is defined when the type is used to define a typed table. Therefore, in SQL99, there was no need to distinguish between types with and without identity, thereby supporting reuse of a type both for table (referenceable objects) and column definition (non-referenceable, inlined objects). Such reuse of type works just for storage as the identity can be defined at the time of the table definition. However, the same type cannot be mapped to an inlined class as well to a referenceable class. Since a goal of the CDM is to provide an application object framework and a persistence framework, the distinction between inlined types and entity types is important.

Methods/Behaviors. In the CDM, behaviors are defined using the CLR framework. SQL99 defines its own method/behaviors framework. While it is closed to most modem OO languages, it is still different and does not provide to good programming environment for applications. Typically applications (or application servers) bridge the gap between the programming environment and the database environment.

Typed Tables vs. Entity Tables. Entity tables in the CDM are similar to SQL 99 typed tables. However, extent is logical - it is a logical collection of objects. There is no physical storage associated with extents. Type table are SQL table with all the storage attributes allowed on tables. Extents can be mapped to one or more physical tables.

Refs. Refs in the CDM and in SQL99 are very similar. In the CDM, a ref is scoped by specifying an extent for the ref; in SQL99, a ref is scoped by specifying a type table as the target for the ref. In both cases, ref is resolved to an object.

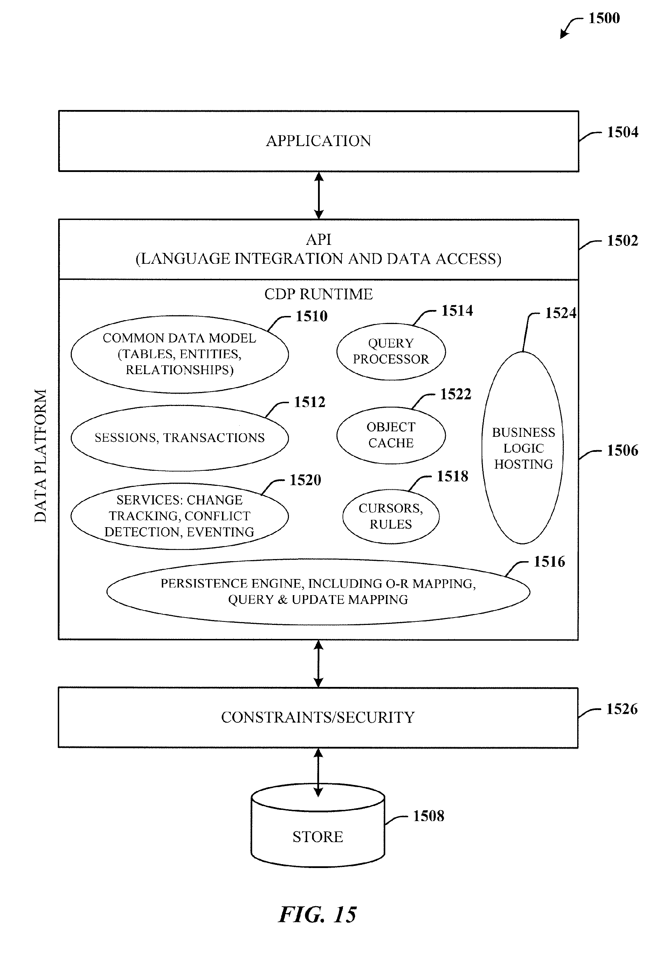

FIG. 15 illustrates a schematic diagram of a data platform 1500 that can employ the CDM of the subject architecture. It is to be appreciated that the positioning of any components and/or boxes in this schematic does not imply (or necessarily prevent) any specific deployment across process/machine boundaries. The data platform 1500 can utilize an optimistic concurrency model so that if changes are to be saved, and other changes have already been made to the underlying data, conflict detection resolves this in an application-specific manner. To be an effective platform, the data platform 1500 includes features such as programming language integration, rich data modeling, persistence framework, services, and so on. An API 1502 facilitates language integration and data access by an application 1504 *via* a data platform runtime 1506 to a store 1508. The data platform 1500 provides the following features.

The CDM. At the center of data platform 1500 runtime 1506 is a CDM 1510. The intent of the CDM 1510 is to factor out the modeling concepts common across multiple application domains, from applications working mainly with user data (PIM, documents, *etc.*) to LOB and enterprise data. In addition to providing rich object and relationship abstraction, the CDM 1510 provides support for structure, unstructured and semi-structured data.

Row/entity data. The CDM 1510 supports a rich Entity-Relationship model to capture the structure and the behavior of structured data (e.g., business data). The CDM 1510 is a superset of the core relational model, with extensions for rich object abstraction and relationship modeling (e.g., an Author relationship between Documents and Contacts; a Lines relationship between Purchase Orders and Order Lines,).

File data. The CDM 1510 supports the "file stream" data type to store and manipulate unstructured (file) data. The file stream data type can store the data as a file and supports file access APIs. The file stream data type is natively supported in SQL Server, mapped to an NTFS file stream, and supports all the file handle/stream based operations. In addition to modeling the unstructured content as a file stream in the CDM 1510, using the entity types, useful content can be promoted as structured properties. Database-based file storage systems define the notion of a file backed item, which is an entity that models the structured properties along with the file stream of unstructured content. The file backed items provide for rich querying along with stream based operations on the associated file stream.

XML data. XML documents can be modeled to two primary ways in the CDM 1510: (1) store it as an XML data type; (2) map the XML document to one or more entities (e.g., similar to data contracts). The CDM 1510 supports the XML data type as supported in SQL Server. The XML data type can be type of any entity property; the XML, data type allows for untyped or typed XML documents to be stored. Strong typing is provided by associating one or more XML schemas with the XML document properties.

Programming language integration, including Query, in the API 1502. The data platform 1500 feature components of sessions and transactions 1512, query 1514, persistence 1516, cursors 1515, services 1520, object cache 1522 and business logic hosting 1524 are encapsulated in several "runtime" classes available in the data platform API 1502.

The persistence entity 1516 includes a persistence engine which provides declarative mapping definitions that describe exactly how objects are assembled out of the component pieces that come from the relational stores. The engine includes a query generation component (not shown) that takes an expression defined by the query processor, in terms of an object query expression, and then combines it with the declarative mapping. This turns into equivalent query expressions that access the underlying tables in the database. An update generation component (not shown) looks at change tracking services, and with the help of mapping metadata, describes how to translate those changes in the world of objects to changes in the world of tables.

The persistence engine can include object-relational mappings. In other words, the modeling, access, and query abstractions provided by the data platform 1500 is object based. The primary storage technology utilized by the data platform 1500 is relational based. The persistence engine utilizes object-relational mappings (also referred to as "O-R mappings"), wherein the persistence engine can map the language classes to the underlying tabular representation.

Querying/searching File and XML data. The CDM 402 stores the unstructured and semi-structured data using the file stream and XML data types, respectively. The CQL is capable of querying these data types. For file content promoted to structured entities (*e.g.,* WinFS file backed items), CQL's relational operators can query these entities. The unstructured data stored as file stream can be queried using full-text search. The XML content can be queried using XPath or XQuery.

Object-Relational mappings. Since the data platform 1500 provides an object-based abstraction on top of a relational (tabular) storage, it provides an O-R mapping component. The data platform 1500 supports both prescriptive mappings and non-prescriptive mappings (type designer has some flexibility in specifying mappings). Notice that a database based file storage system implementation today uses prescriptive mappings while more general O-R persistence frameworks need non-prescriptive mappings.

Caching. The data platform runtime 1506 maintains a cache of query results (e.g., cursors) and uncommitted updates. This is called the session cache. The data platform 1500 also provides an explicit cache, which enables the application to work in a disconnected mode. The data platform 1500 provides various consistency guarantees for data in the explicit cache. The cache performs identity management by correlating on-disk identity of data with the in-memory objects. The data platform runtime 1506 maintains the cache 1522 of query results (*e.g.*, cursors discussed in detail *infra)* and uncommitted updates, wherein such cache can be referred to as the session cache because it is tied to the sessions, transactions 1512. In addition, it comes into existence when a session is created and goes away when the session is terminated.

The data platform 1500 can also expose another kind of cache, called the explicit cache. The explicit cache provides a cache of data from one or more queries. Once data is materialized into the explicit cache, the following data consistency guarantees can be provided: 1) read-only, not-authoritative; 2) write-through, authoritative; and 3) automatic refresh via exogenous notifications. The programming and query model against the explicit cache can be substantially similar as that over store data

Query Processor. Database access is *via* the query processor. The query processor allows multiple frontends to handle multiple query languages to be expressed, and then mapped to an internal canonical format. This is done in terms of the domain model and objects of the application it is working on. The queries then get passed to the processor, which is a pipeline, and then get converted into backend-specific queries.

Cursors. The data platform 1500 can provide both forward-only and scrollable cursors. Cursors support notifications, multi-level grouping with expand/collapse state, dynamic sorting and filtering. The cursor, rules 1515 are mechanisms that allow the set of data entities returned from CQL to be processed one at a time. An application can create a cursor over the result set by simply copying the entire result set into memory and overlaying a scrolling pattern on top of this in memory structure. But the ubiquity of this requirement and the complexity that is some times involved in implementing a cursor (especially when updates, paging, *etc.* are taken into account) means that any data platform should provide a cursoring model. In addition to the basic functionality of browsing and scrolling, data platform cursors can provide the following features: 1) exogenous notifications and maintenance; 2) multi-level grouping with expand/collapse state; and 3) dynamic sorting and filtering (e.g., "post-processing"). It is to be appreciated and understood that cursors may not be a different mechanism to specify a result set; result sets are specified by queries, and cursors are over these queries.

Business logic host 1524. The data platform 1500 provides a runtime environment to host data-centric logic on types/instances and on operations. Such data-centric business logic is distinct from application/business process logic, which can be hosted in the application server. Objects are not just rows in a database. When objects get materialized in memory, they are actually objects that have behaviors which the application can invoke. There are extension points in the system that are mainly events and callbacks that all operate to extend the data platform 1500 at runtime. These objects are not just objects, but CLR objects, .NET objects, *etc.* The data platform 1500 allows the capability to intercept property ort method calls in those objects. Applications can customize the behavior of these objects.

The data platform 1500 provides several mechanisms for authoring business logic. These mechanisms can be divided into the following 5 categories: constraints, event handlers, static/instance methods, bindable behaviors, and static service methods each of which is discussed in more detail below. A constraints/security entity 1526 can be declarative and procedural. These constraints can be executed on the store, close in proximity to the data. Thus, the constraints 1526 are considered to be within the trust boundary. Moreover, constraints can be authored by the type designer.

The business logic hosting 1524 can employ an event handler. The data platform API 1502 raises several events on data change operations. Business logic authors can hook into these events via handler code. For example, consider an order management application. When a new order comes in, the application needs to ensure that the value of the order is less than the credit limit authorized for the customer. This logic can be part of event handler code which is run before the order is inserted into the store.

Services. The data platform 1500 provides a core set of services which are available to all data platform clients. These services include rules, change tracking, conflict detection, eventing, and notifications. Eventing extends the data platform runtime 1506 from framework-level services or for applications to add additional behaviors, and also is used for data binding at the user interface.

Constraints. The data platform 1500 provides a constraints/security component 1526 to at least one of allow the type designer to author constraints declaratively. These constraints are executed in the store. Typically, the scope of data platform constraints encompasses notions such as length, precision, scale, default, check, and so on. These constraints are enforced by the data platform constraint engine 1526 at runtime.

Security. The data platform 1500 provides a role based security model - the user's credentials determine her "role" (such as administrator, power user, approver, *etc.).* Each role is assigned a set of access permissions. The data platform security engine 1526 enforces these security policies. In addition, the data platform 1500 provides a security model for controlling access to entities in the data platform 1500. The security model can support authentication of an operating system user, authorization level of entities (*e.g.,* with separate permissions for read and update), *etc.*

Note that the constraints/security component 1526 is illustrated separate from the data platform runtime component 1506, since it can operate as a separate entity therefrom. Alternatively, and perhaps more efficiently, the constraints/security component 1526 is combined with the store component 1508, which can be the database system.

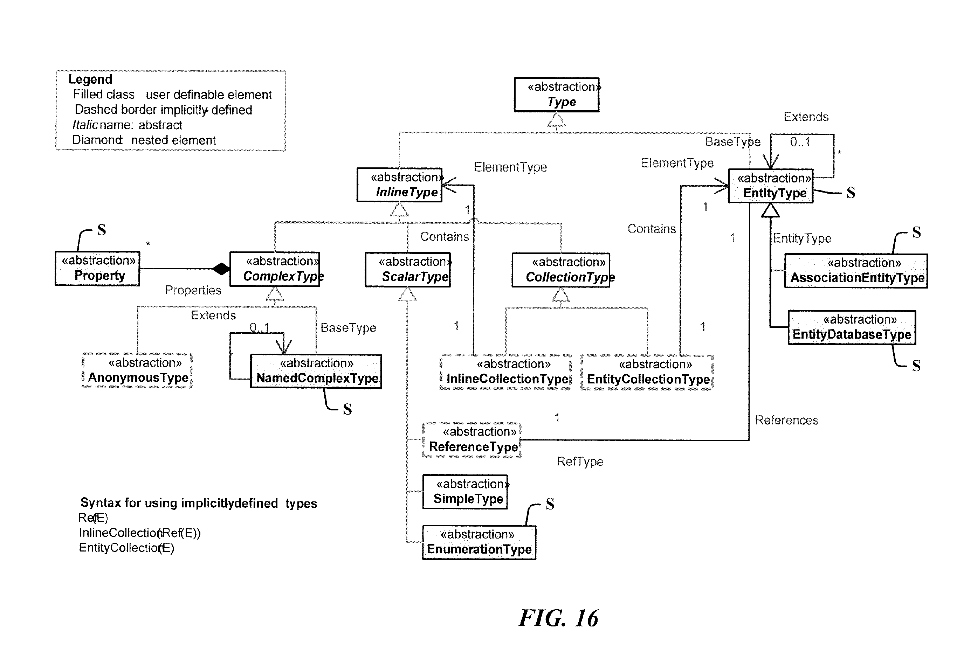

In the following Figures 16-18 each class in the diagram is a model or schema element. Elements denoted by "S" are elements in SDL. The other elements are either structural elements, implicitly constructed elements (such as the reference types) or built-in elements (such as the simple types, which are extended by importing CLR types, not through direct declaration).

FIG. 16 illustrates CDM metamodel fragments that clarify some semantics of the model related to types. These models describe the effect of a schema rather than modeling its exact syntax. For example, an attribute that uses an association end role name is represented as a reference to an association end in these models. Comments and additional constraints:

Declaring an entity type defines an EntityCollectionType and ReferenceType implicitly. Declaring complex type defines an InlineCollection implicitly. In practice these types could be implemented with generics, such as Ref<T>, EntityCollection<T>, InlineCollection<T>.

- Properties can be declared only on inline and entity type declarations.

- typeof(InlineCollectionType.ElementType) != InlineCollectionType

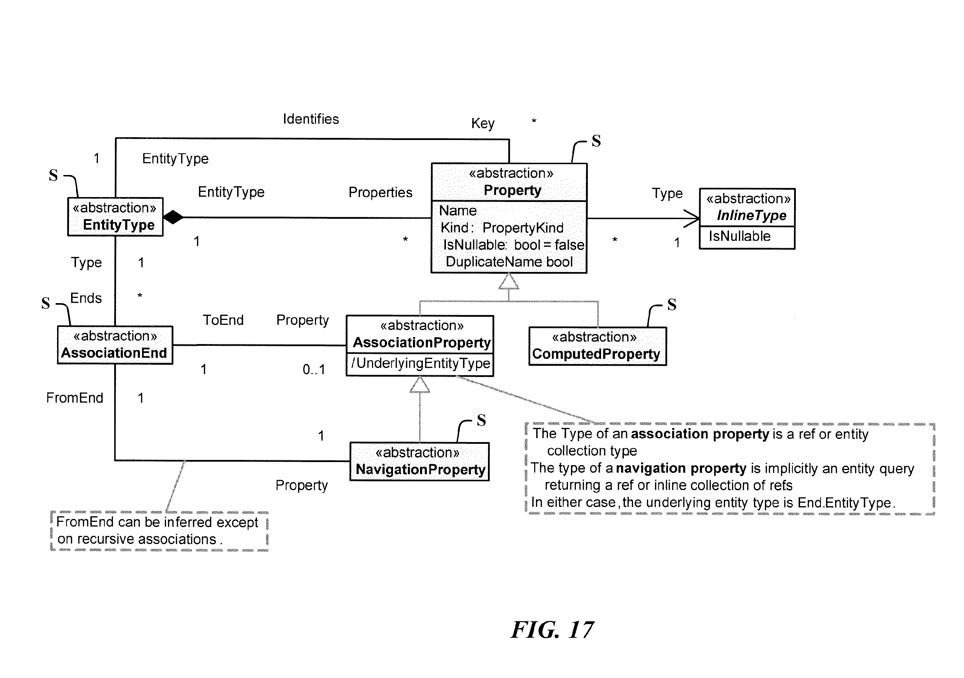

FIG. 17 illustrates CDM metamodel fragments that clarify some semantics of the model related to properties. Comments and additional constraints:

Property.Kind makes the association constraints easier to read, as the Property metaclass has a type and the property it represents has a type. Kind avoids any confusion that may bring.

- AssociationEnd.Property is the property that refers to the entity at the same end of the association. In other words, it is a property on the entity on the opposite side of the association.
- Properties of a reference or entity set are association properties that have an underlying entity type.
- Navigation properties return a query.

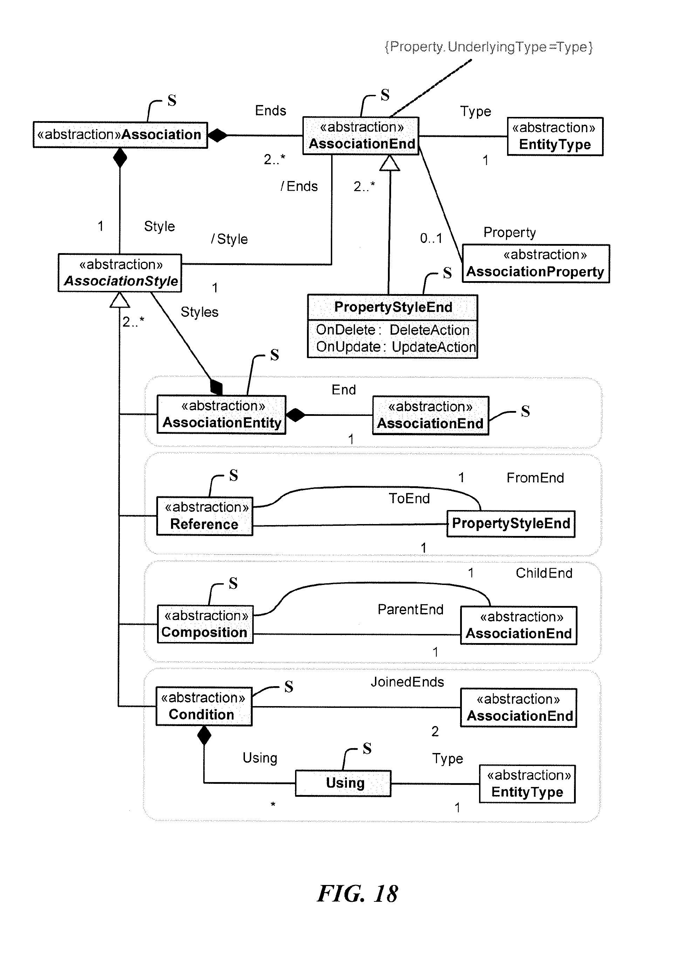

FIG. 18 illustrates CDM metamodel fragments that clarify some semantics of the model related to associations. Most of the constraints here simply state that properties on an association end must be of the right type, where the right type is pretty obvious. For example a Reference style association must have a property with a reference type. Comments and additional constraints:

AssociationEnd.Property is a property on the entity type on the other end of the association. It indicates a property referencing the entity on this end of the association. More formally on the association the following holds:
Ends[0].Property.UnderlyingType=Ends[1].Type and
Ends[1] .Property. UnderlyingType=Ends[O]. Type

- One of the CommonValue.Properties comes from each of the two entities in the common value association.

## ALTERNATIVE IMPLEMENTATION AND SYNTAX

Following is an alternative implementation of a data model for object-relational data. The description of this alternative implementation uses a schema definition language, which one of many possible forms for expression for this alternative implementation. Note also that there are many similarities to the previous implementation described *supra,* yet noticeable differences in the form of naming and syntax, for example.

In this alternative description, relationships can now be defined at the top level using <Association> or <Composition> elements. There is no need to define a property on the source (or parent) in order to define a Ref association (or composition). Following are operational behavior that are introduced on relationships: OnCopy, OnSerialize, OnSecure, and OnLock. EntitySets is only defined within EntityContainerType - and is not defined within EntityType. NavigationProperty is no longer used and RelationshipProperty is utilized with slightly different semantics.

Explicit Ref typed properties are unscoped references to an entity, and do not create a relationship. RelationshipProperty is implicitly of type Ref (or Collection (Ref)). Relationship scope is specified within <Scope> clause of entity container type.

Relationships have been made more abstract. In the previous implementation, relationships were implicitly defined by Ref or collection valued properties within an entity - which presupposes a way of implementing relationships. Here, relationships are now defined at the top level. This removes relationship metadata from the type declaration, thus enabling type re-use.

Layering. Reference associations, conditional associations, and association entities are all defined within the <Association> element. This is a reflection of the fact that the meta-model has the core notion of an association between two entities; whether it is based on a reference, a condition, or related through an association entity is specified by various tags and sub-elements within <Association>. The specialized concepts (reference, condition, association entity) are layered on top of the core concept (association).

Separation of core modeling and persistence. The notion of an entity collection was used for two purposes in the previous implementation. Firstly, as a way to name and refer to persisted groups of entities and secondly, as a way to define composition. Thus, one had to deal with persistence just to model compositions. Entity collections are now a pure grouping/scoping notion; they are not allowed as fields within an entity type. A composition is defined at the top level by specifying abstract metadata about the participating entities. By separating persistence from compositions, the model is more flexible and orthogonal.

Simplification of Collections. Since an entity collection is now only allowed within an EntityContainerType (known formerly as EntityDatabaseType), only inline collections can be properties of an entity or complex type. This has resulted in a simplification of collection semantics. There is no longer a need to distinguish between entity collections and inline collections. There are just "collections" and they are used to collect inline types.

Ability to specify operational semantics. This implementation specifies relationships - associations or compositions - and specify operational behavior orthogonally on any relationship, regardless of its type. Accordingly, it is now possible to specify OnCopy, OnSerialize, OnSecure, OnLock behaviors on any relationship. Again, this provides more flexibility and captures a larger set of scenarios.

Arbitrary grouping of entities. The notion of a WinFS "item" is really an operation grouping if several entities (e.g., the Item entity, ItemFragment entity and the contained entities. Composition as defined previously was overly restrictive to model this notion. With the ability to specify operational semantics and the separation of entity collections from relationship definition allows picking and choosing operational behavior and have it apply to an arbitrary grouping of entities.

Renaming. Some names have been changed to better reflect their semantics. For example: (a) EntityCollection has been changed to EntitySet, since this is now an unordered grouping of entities; it is also consistent with the terminology used in classic ER modeling; (b) EntityDatabaseType has been changed to EntityContainerType to eliminate the term "database", since it has many persistence/operational/administrative connotations; (c) InlineCollection has been changed to Collection because this is the only kind of collections allowed in this implementation model.

EntityDatabase is no longer employed, but is now an instance of EntityDatabaseType. <AssociationEntityType> is now defined within the <Association> element.

Thus, a data model describes the shape and semantics (constraints, behaviors) of, and relationships among, the various pieces of data that an application is interested in.

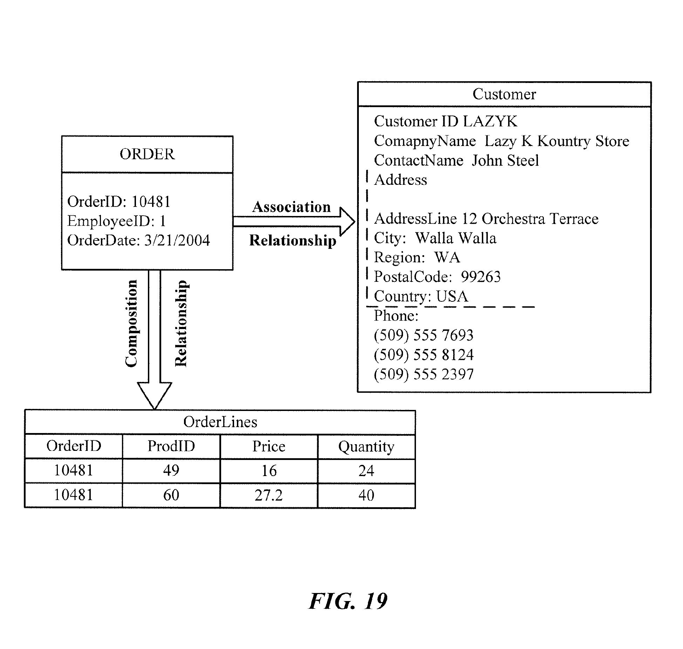

FIG. 19 illustrates the four main concepts of the alternative implementation of the CDM. As before, the four concepts are types, instances, entities, and relationships. FIG. 19 shows a subset of the data that can be associated with a LOB application which may typically deals with the following different kinds of data: order, customer, order lines, address, supplier, product, employee, and so on. Consider the box labeled Customer. In the CDM, this is referred to as an entity, and represents a top level data unit that an application works with. Customer has several fields: CustomerID, CompanyName, ContactName, Address, and Phone. Each field has a type, which determines the structure of the data that goes into that field. It can be readily seen that CustomerID is a string of a fixed length. CompanyName and ContactName fields are also of a type string. Customer itself has a type. Since Customer is an entity, this type can be referred as an entity type. Also notice that the Address field is different from the other fields: it possess internal structure in the form of other fields. In CDM, the type of such a field is called a complex type. In contrast the type of CustomerID, CompanyName, and ContactName are all simple types. The Phone field consists of several phone numbers, each of which is a string. This is called as a collection type. The type specifies the structure (and certain constraints on the values); actual data is stored in instances of these types. Types and instances are similar to classes and objects, respectively. FIG. 19 shows instances of Customer, Order and OrderDetail.

Both Customer and Address are similar in the sense that they both have internal structure (composed of multiple fields). But semantically and operationally, a Customer is different from an Address. Customer acts as the unit for query, data change operations, transactions, persistence, and sharing. An Address on the other hand always lives within a Customer and cannot be referred to or otherwise acted upon independently. In the CDM, such top level data units are called entities. All other data is considered to be inline to entities.

Looking now at Order, business rules require that every order have a corresponding customer. This is modeled by a relationship between the Order entity and the Customer entity. There are different kinds of relationships supported by the CDM. The one between an Order and a Customer is called as an association. Associations are typically used to model peer-to-peer relationships among entities. Each order is composed of several order lines (if five books are ordered on from a bookseller, then the information about each book is an order line). This is modeled as another kind of relationship- a composition. Each OrderLine within the composition is an entity.

The shape of data is described by defining types. Conceptually, a type is a name given to a set of values. For example, if something is of type *int,* a range of values is specified that is precisely the range of integers. A precise definition of the notion of type requires an excursion into category theory which is outside the scope of this document. Thus, the concept of a *type* is posited to be a formally primitive concept in this document. A type system is a mechanism for defining types and associating it with language constructs.

Central to the CDM is its type system. Data defined using this type system is considered to be strongly typed, similar to CLR. In other words, there is an expectation that the implementation provides for strict enforcement of type rules with no exceptions; that all types are known at compile time; and that any type conversions are predictable in their effect.

At the highest level, the CDM type system defines two kinds of types: entity types and inline types. Entity types have a unique identity and form the operational unit of consistency. Intuitively, entities are used to model the "top level" concepts within a data model, for example, Customers, Orders, Suppliers, etc. Inline types are contained types. They are contained within an entity type. They live and die with, are transacted with, and are referenced only within the context of a containing entity. Very roughly, an entity type is similar to a reference type in CLR while an inline type is similar to a value type. This is a limited analogy and applies only in the sense that inline types, like CLR value types, do not have an independent existence, while entity types, like CLR reference types, can exist independently and can be referenced independently.

There are several kinds of inline types: scalar types, complex types, the XML type, FILESTREAM type, and collections of these types. Some of these types are described in more detail *infra.*

A Schema Definition Language (SDL) is employed as syntax to describe the types. SDL is analogous to the subset of C# for defining classes, or the Data Definition Language (DDL) subset of SQL. SDL is expressed in XML (but it is not XSD based). Throughout this description SDL fragments will be used to illustrate the concept being described.

Scalar types are, in a sense, the simplest types available in the type system. They have no internal structure visible to the system. A scalar type represents a single value. CDM defines three kinds of scalar types: Simple Types, Enumeration Types, and Reftypes.

Simple Types are built in, primitive types provided by the system. CLR value types are used as simple types the CDM- such as System. String, System.Boolean, System.Byte, System.Int16, *etc.* CDM also supports a number of types defined in System.Storage and System.Data.SqlTypes namespaces (System.Storage.ByteCollection, System.Data.SqlTypes.SqlSingle...).

An Enumeration type defines a set of symbolic names - such as (red, blue, green) or (spring, summer, autumn, winter). An instance of an enumeration type has a value which ranges over this set.

An instance of a Ref type is a value that identifies an entity. A description of Ref types is provided *infra.*

Simple types can be used to build more complex types. A complex type can have a name or can remain anonymous.

A named complex type has a name and a set of members. A member can be as simple as a name and a scalar type. Each member is a scalar type (simple type in this case). Data members such as these are referred to as properties.

Two other kinds of members can exist in complex types: methods and computed properties, which will be described *infra.* A complex type can also contain other complex types.

An anonymous complex type, as the name implies, is structurally similar to a complex type, but cannot be used for declaring properties based on it. Anonymous complex types are returned as query results (such as in queries that project a subset of fields from entities). They exist in the CDM to ensure query closure. SDL does not have syntax for declaring these types.

Note one distinction between named and anonymous complex types: two named complex types with the exact same structure but different names are considered to be distinct type. But two anonymous complex types with the exact same structure are considered to be the same type.

An entity type is structurally similar to a complex type in that it is a type built out of scalar types and other complex types. However, semantically and operationally it is quite different - an entity is uniquely referenceable via an identity, the unit of consistency for various operations, and so on. Entity Types are defined in a fashion similar to Complex Types.

Collections store zero or more instances of inline types. In the following example, consider the *Person* type: this type stores contact information about a human being. Typically, the name, home address, work address, home phone, work phone, mobile phone, and email ID (to take the most common subset) are stored. Notice that in this list there are two addresses and three phone numbers. These can be modeled as collections using CDM, as shown in the example below:

```
1. <ComplexType Name="Person">
2.   <Property Name="Name" Type="String" />
3.   <Property Name="EmailID" Type="String" />
4.   <Property Name="Addresses" Type="Collection(Address)" />
5.   <Property Name="PhoneNumbers" Type="Collection(String)" />
6. </ComplexType>
```

Line 4 defines a collection of Address elements for the Addresses field; line 5 defines a collection of String elements for the PhoneNumbers field. Thus, the person can have, for example, two collections under a Person object - Addresses and PhoneNumbers. The Addresses collection contains two instances of Address type while the Phone-Numbers collection contains two instances of the String type. In the CDM, collections can be defined for simple and complex types.

Oftentimes it is desirable for a collection to have the semantics of an array. An array is a collection where the elements are ordered and indexed. Note that an array is ordered, not necessarily sorted. For example, [1,4,5,3] is an ordered collection, but unsorted. It is ordered because one can ask for the second element and be guaranteed (absent explicit changes) to get back '4'.

The Array attribute of the <Collection> sub-element on a collection typed <Property>, when set to true, makes it into an array. Array is an optional attribute whose value defaults to "false".

Typically, the data model used by an application has many different types. Several of these types model totally separate concepts, e.g., Customer and Order. Such types do not share any members. But other types model concepts which have a bit of similarity with each other, are still different. For example, consider the Customer and Employee. Even though they model different concepts, there is an underlying thread of commonality between them - both have properties for address, phone number, and name. It is information needed to get in touch with somebody. In other words, it is contact information.

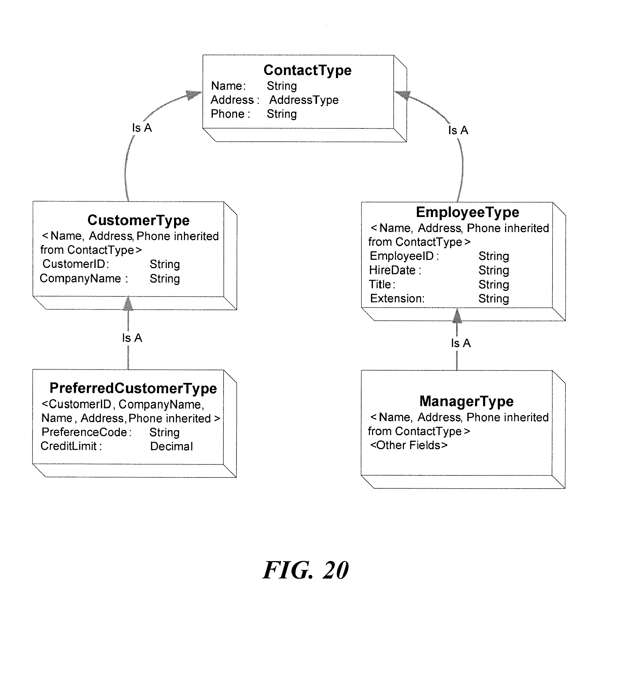

FIG. 20 illustrates that CDM supports a notion of type inheritance. Inheritance allows a type to inherit properties, methods, and computed properties from another type. In the example, the Employee and Customer inherit from the Contact. Here, Contact is called the super-type or base-type. Employee and Customer are called sub-types or derived-types. Sub-typing need not stop at a single level; it is possible for a subtype to be the parent of another type - e.g., Employee can be a base of Manager, Customer a base of Preferred Customer, and so on. In this way, entire inheritance hierarchies can be formed, as shown in FIG. 20.

Even though the above example shows only inheritance of properties, derived types also inherit methods and computed properties from their base type. CDM follows the CLR semantics for inheriting methods (behavior). The (partial) SDL specification for the above inheritance hierarchy is shown in the example below:

```
1. <ComplexType Name="Contact">
2.   <Property Name="Name" Type="String" />
3.   <Property Name="Address" Type="Address" />
4.   <Property Name="Phone" Type="String" />
5. </ComplexType>
6. <ComplexType Name="Customer" BaseType="Contact">
7.   <Property Name="CustomerID" Type="String" />
8.   <Property Name="CompanyName" Type="String" />
9. </ComplexType>
10.<ComplexType Name="PreferredCustomer" BaseType="Customer">
11.  <Property Name="PreferenceCode" Type="String" />
12.  <Property Name="CreditLimit" Type="Decimal" />
13.</ComplexType>
14.<!-- Similar Declarations for Employee and Manager -->
```

As illustrated before, one purpose of inheritance is to share a generic concept among multiple types. Another purpose of inheritance is extensibility. Even after an ISV implements and deploys an inheritance hierarchy, customers can extend the types to suit their purposes via inheritance. A key to making this extensibility work is the notion of value substitutability (also known as polymorphism): every instance of a derived type is also an instance of a base type. Thus, if Manager is derived from Employee, then every instance of Manager is also an instance of an Employee. So when querying for all employees (base type), all managers (derived type) are returned as well.

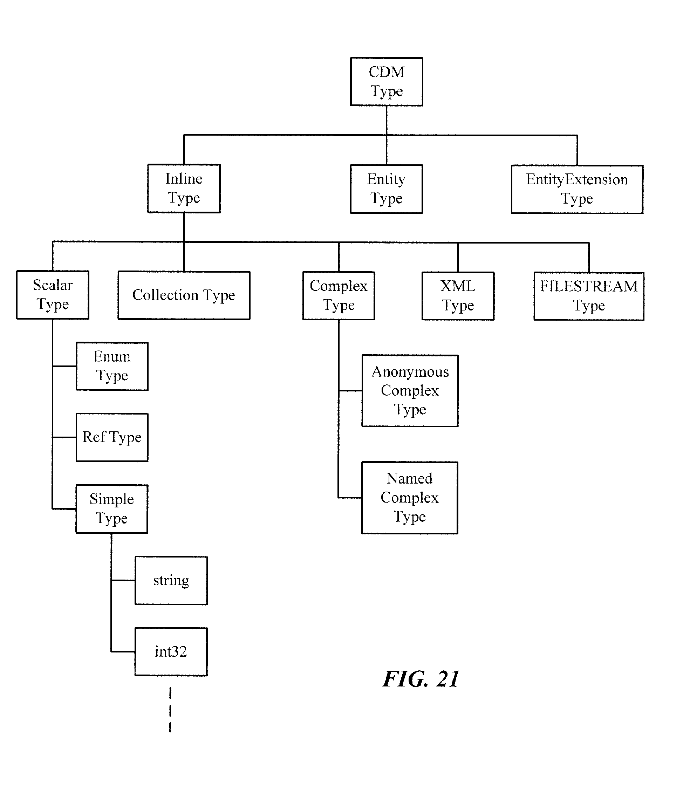

FIG. 21 illustrates a taxonomy of CDM types for this implementation. In this section, a proper classification of types within the CDM type system is provided. Almost all data, when examined within their larger semantic context, will be constrained over the domain of its type in some form or another. The CDM allows the specification of various constraints over the different types.

Simple Type Constraints. The set of permissible values for a simple type can be restricted in a variety of ways, such as restricting the length (string and binary), precision, scale (decimal), *etc.* The default constraint allows the specification of a default value. The check constraint specifies a Boolean expression over the value of the property. If this expression evaluates to false then the property value is invalid.

Collection Type Constraints. The following constraints are supported on collections: an ElementOccurs constraint specifies the minimum and maximum cardinality of the collection. Unique constraint can be used to ensure uniqueness of collection element values. An ElementConstraint can be used to specify constraints on the type underlying the collection (e.g., if defining a collection of type Decimal, then this <ElementConstraint> can be used to specify the precision and scale).

A Check constraint specifies a Boolean query expression. This expression should evaluate to true in order for the collection to be considered valid. Note that this constraint applies to the collection property as a whole, not to an individual element within the collection.

It is recommended that type designers always define unique constraints on Collections, especially if the collection is expected to contain a large number of elements. At run time, when one element of a collection is updated, the uniqueness constraint enables the implementation to target that single element for update instead of rewriting the entire collection. This reduces update time and network traffic.

Derived Type Constraints. It is possible to constrain base type properties within a derived type by using derived type constraints. Consider a frequent flier program offered by various airlines. United Airlines, for example, has a program called Mileage Plus. This program has several membership levels - 1K member, Premier Executive member, Premier member, and "just" member. To be a premier member, you have to fly at least 25,000 miles or 30 paid segments; for premier executive and 1K, these numbers are 50,000/60 and 100,000/100, respectively.Note that when defining derived type constraints, the constraints should be compatible with the base type constraints. For example, if an ElementOccurs constraint on a collection field in the base type specifies a minimum of one and maximum of fifty, then the derived type constraint should have a minimum of more than one and maximum less than fifty.

Nullability Constraint. Both simple and complex types can specify a nullability constraint. This means that an instance of this type can store the NULL value. This is specified by a Nullable attribute on the <Property> element.

Note that collection properties should not be set to Nullable and that Nullable is allowed even on complex typed properties. The default value of the Nullable attribute is "true".

Thus far, the core modeling capabilities provided by the CDM type system of this alternative implementation have been provided. The CDM is a rich set of built-in types, ability to define complex types, create enumerations, express constraints, inheritance, and value substitutability (polymorphism).

Once these types are designed and deployed in the system, the application begins to create and manipulate instances of these types. Various operations such as copy, move, query, delete, backup/restore (for persisted data), *etc.,* are performed on type instances. Following, the operational semantics of CDM are described.

Types and Instances. The type defines the structure of data. Actual data is stored in type instances. In object oriented languages for example, type and instances are called classes and objects.

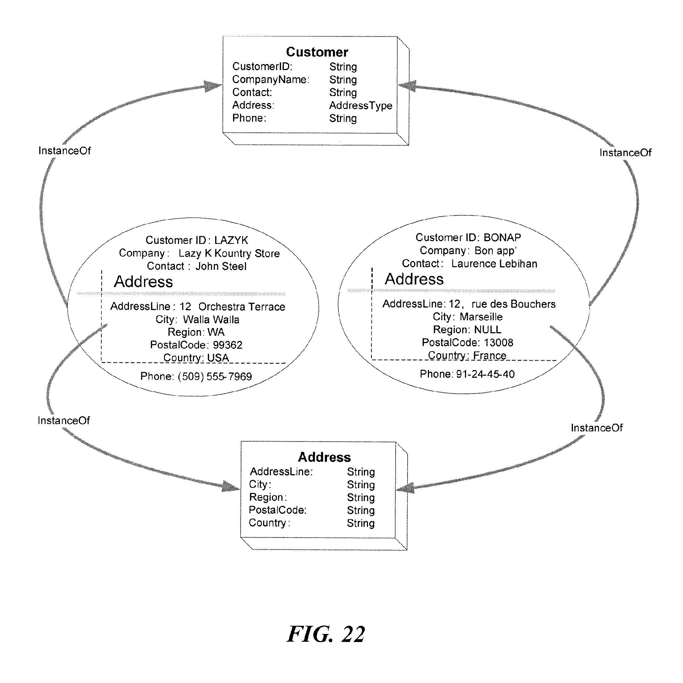

FIG. 22 illustrates the concept of types and instances in this implementation of the CDM. The ellipses in FIG. 22 are the actual data while the cuboids are the types, *i.e.,* the metadata.

Entity and Inline Types. Looking once again at the data used by the hypothetical LOB application, on the one hand, it has types such as Customers and Orders, and on the other hand, it also has types such as Address and AddressLine. Each of these types has a structure, that is each can be decomposed into multiple fields. However, there are two key differences between the Customer type and the Address type. Instances of Customer type have an independent existence while instances of AddressType only exist within (for example) a Customer type instance.

In this sense, a Customer is a top level type; instances of this type exist independently, are referred to independently ("show me the Customer whose CompanyName is..."), and are transacted independently. The Address on the other hand is a contained type - its instances exist only within the context of a top level type instance, *e.g.,* "the Address of a Customer" or "the shipping Address of an Order", and so on.

The Customer type has an identity while the Address type does not. Every instance of Customer can be uniquely identified and a reference to it can be taken. The Address type cannot be separately identified outside of a type such as Customer. This fundamental distinction is formalized in the CDM by the notion of Entity Types and Inline Types. In the LOB example above, a Customer is an Entity type while an address is an Inline type.

Characteristics of Entities. Even though an entity type is structurally similar to a complex type, it has several characteristics which distinguish it from inline types. These characteristics endow an entity instance with specific operational semantics. An Entity is an instance of an entity type. An entity is the smallest unit of CDM data that can exist independently. This implies the following characteristics:

Identity: every entity has an identity. This identity is guaranteed to refer to the entity and only that entity during its lifetime. The existence of identities implies that a reference may be taken to it entities.

The entity identity is the reason why an entity is a "top level" data unit - every entity is referenceable and hence can be used in query, update, and other operations.

Unit of Consistency: queries and updates are guaranteed consistent at the level of entities. An entity is the target of most CDP operations - such as copy, move, delete, backup, restore, etc. These operations do not target inline types.

Unit of Transactions: transactions occur at the level of an entity. Stated another way, entities can be separately transacted, but inline types are always transacted within the context of the containing entity.

Unit for Relationships: relationships are specified at the level of entities, not inline types. Entities can relate to each other via compositions and reference associations; an inline type instance cannot be the source or target of a relationship.

Unit of Persistence: an entity is the unit of persistence. Inline types do not persist themselves, but persist only as parts of an entity. Essentially, inline types act by value - hence, they have to be stored as part of an entity.

Note however, that the CDM itself neither implies nor requires that entities be persisted. The CDM remains consistent regardless of whether the entities are in memory or are persisted.

Unit of Sharing: an entity is the unit of sharing within the data model. For example, the LOB application has the notion of a Product. A Supplier supplies one or more products; an Order has one or more products. In order to prevent redundant storage of product information, a Product entity can be defined and references to instances of this entity can be inserted within Order and Supplier entities. If on the other hand, a Product is an inline type, then both Order and Supplier have to contain Product instances, leading to redundant storage and the insert, delete, and update anomalies that result from it.

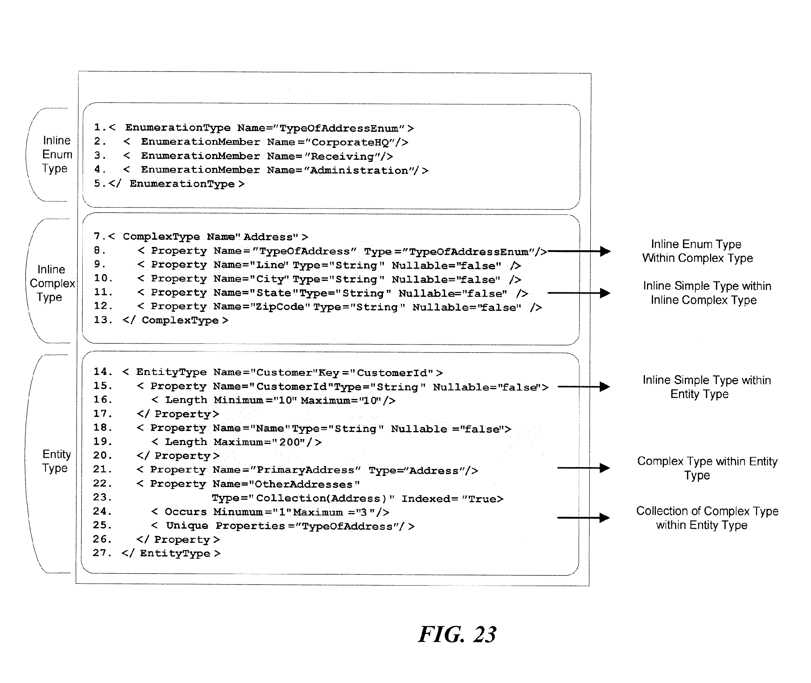

FIG. 23 illustrates how entity and inline types are declared using SDL. Entities are declared using the <EntityType> element, as shown in lines 14-27. The properties of an entity type are of an inline type (by definition). There are several kinds of inline types. Scalar types: recall that scalar types can be further subdivided into simple, Ref, and enumeration types. Simple inline types are built-into the CDM framework - in a sense they are already declared and available for use. In the example of FIG. 23, the use of such types is depicted in lines 8, 9, 10, 11, 12, 15, and 18.

Enumeration types are declared using the <EnumerationType> element as shown in lines 1-5. Once declared, these types can be used within any Complex or Entity Type (see line 8).

XML and FILESTREAM types (not shown in this example) are built-in types, but not exactly scalar (that is, the data model can reason about the internals of these types to a limited extent).

Complex Types are declared using the <ComplexType> element, as shown in lines 7-13. The properties of a Complex type can be any inline type - scalar, collection, or complex type. Once declared, a Complex type can be used within any Complex or Entity types.

Collection types are declared using Collection keyword, followed by the name of an inline type. A collection of AddressType is shown in line 22.

As described *supra,* a fundamental characteristic of an entity is the fact that it has a unique identity. The entity identity is guaranteed to survive entity updates and continue identifying the same entity throughout its lifetime. An entity also has a key attribute. This key is composed of one or more properties. Entity keys are required to be unique within an EntitySet. Entity keys can be used by implementations to generate the entity identity. Entity keys are specified using the "Key" attribute of an <EntityType> element. Any set of scalar (including Ref types) or complex typed properties can serve as the key to an entity type as long as at least one property in the key is non-nullable. Collection typed properties should not be part of a key.

Note that only the base type of an entity type hierarchy can specify the key. Derived types automatically inherit the key from the base type. This supports making value substitutability (polymorphism) work deterministically.

Entity References. Because entities have identities, it is possible to have entity references. In this implementation of the CDM, entity references are primarily used for relationship navigation. For example, the Customer entity is related to the Order entity via the Customer_Order relationship. Given an Order, it is possible to find the associated Customer using a special property on the Order entity (known as a relationship property). This property is of type Ref(Customer). The keyword Ref denotes that this is a reference to another entity type.

It is also possible to explicitly define a Ref typed property within an entity type or a complex type. This property serves as a "pointer" to the referenced entity. The existence of a Ref typed property does not define or imply a relationship between the containing and referenced entity types. Relationships should to be defined explicitly. In the case of persisted entities, references are durable.

Inline Types. An entity either lives by itself at the top level, or is contained within an entity set. An entity cannot be directly embedded within another entity or a complex type. A complex type on the other hand, can be embedded in another complex type or an entity type. That is, both entities and complex types can have properties whose type is a complex type.

Scalar types and collections can also be embedded in other complex types or entity types. This is the reason why complex types, collections, and scalar types are collectively referred to as inline types.

Entity Sets and Entity Containers. Provided are two scenarios that help describe where entity instances live. Entity instances are persisted in some data store. The CDM itself is carefully crafted to be store agnostic. It can, in theory, be implemented over a variety of storage technologies. Entities also have a transient existence in memory. The CDM does not specify how they are materialized in memory and made available to the application.An application typically deals with multiple instances of entities of various types. These instances can either live by themselves at the top level, or be contained within entity sets. An entity set contains instances of entities of a given type (or subtype thereof). An entity key is meaningful within an entity set. Each entity within an entity set should have a unique key.

An Entity Container is a group of one or more entity sets. An entity container is used for scoping association and composition relationships. The entity container is also the persistence and administrative unit over which backup, restore, users, roles, and other such semantics are defined.

A schema is an organizational structure for holding types, relationships, and other names. It provides a namespace within which the usual name uniqueness rules apply. A schema is defined using the <Schema> element, and is the top level element of a SDL file. All entities, relationships, complex types, *etc.,* are be defined within a schema. Schemas defined elsewhere can be imported with the <Using > element, and types defined therein may be referenced using their fully qualified name. It is also possible to use types in another schema directly (*e.g.*, without having <Using> element by using the fully qualified syntax: Namespace.Type-name. <Using> is a syntactic shortcut to reduce typing. A type defined in any deployed schema can be used by providing the fully qualified name of that type.

The CDM specification is mute about what should happen once the types are written in SDL. With respect to types that re written in SDL, the CDP-which implements the CDM-provides tools that take an SDL description and deploys these types on the store. Depending on the nature of the store, this deployment may involve creation of store level abstractions. For example, if the store is an RDBMS, then the deployment would create databases and tables corresponding to the schemata and types; it might also create SQL code for constraint and data model enforcement. Alternatively, the CDP can be used with an existing database by mapping the database's tables to CDM types.

In addition to creating store level items, CDP tools will also generate CLR classes corresponding to the types and relationships. The implementation may use the Namespace attribute of a <Schema> element to create CLR namespaces for scoping these classes. The CDP also supports mapping existing object models to CDM types. Note that the CDM types does not require a store. In-memory deployments are possible.

Any meaningful set of real-world data always has relationships among its constituent parts. For example: A *customer* places one or more *orders,* an *order* contains *order details, a product* is available from one or more *suppliers,* and so on. In this sentence, data is shown in *italics* and the relationships among them as underlined. Clearly, the concept of relationships is integral to any data modeling endeavor. The relational model does not explicitly support relationships; primary keys, foreign keys, and referential integrity provide tools to implement some of the constraints implied by relationships. A key value of the CDM is its support of relationships as a first class notion within the data model itself. This allows for simpler and richer modeling capabilities. Relationship support also extends to CDM queries, which allow relationships to be referenced explicitly in a query and provide the ability to navigate based on relationships.

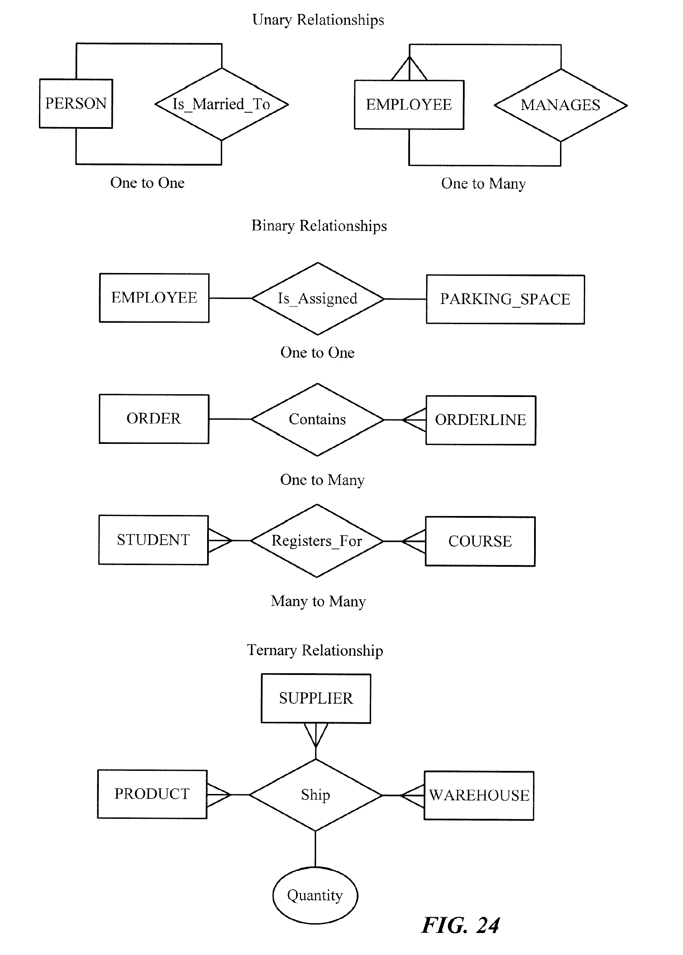

FIG. 24 illustrates the many kinds of relationships supported by CDM. In real-world modeling scenarios, there exist many different kinds of relationships - they have different degrees (unary, binary...), multiplicities (1-1, 1-many, many-many...) and semantics (containment, peer-peer...). CDM has the ability to model all of these different types of relationships. In the CDM, relationships are defined at the level of entities. There are two ways of relating entities: associations and compositions. Associations model "peer-to-peer" relationships and Compositions model "parent-child" relationships.

Modeling semantics can require related entities to behave as a unit for various operations. For example, consider the Contains relationship between Order and OrderLine in FIG. 24. It is reasonable to expect that a copy or serialize operation on the Order will result the copy or serialization of the associated OrderLines as well. The CDM defines at least five operations: delete, copy, serialize, secure, and lock. Behavior can be specified on related entities in response to these operations. Note that in addition to reference associations and compositions, there can exist two other ways of relating entities: conditional associations and association entities.

Associations is one of the most common and useful relationships in data modeling. A classic example of an association is the relationship between the Customer and Order entities. Typically, this relationship includes multiplicity where each Order is associated with exactly one Customer. Every Customer has zero or more Orders. The relationship can also include operational behavior: it is useful to operate on related entities as if they were a unit. For example, when a Customer with outstanding Orders is deleted, copied, or serialized, it may be desirable for the corresponding Orders to also get deleted, copied, or serialized. The <Association> element is used to model this relationship.

```
1. <EntityType Name="Order" Key="OrderId">
2.   <Property Name="OrderId"
3.              Type="String"/>
4.   <!--Other Properties-->
5. </EntityType>
6.
7. <EntityType Name="Customer" Key="CustomerId">
8.   <Property Name="CustomerId"
9.              Type="String"/>
10.  <!--Other Properties-->
11. </EntityType>
12.
13. <Association Name="Order_Customer">
14.   <End Type="Order" Multiplicity="*" />
15.   <End Type="Customer" Multiplicity="1">
16.     <OnDelete Action="Cascade" />
17.   </End>
18. </Association>
```

The "Type" attribute on <End> defines the entity type participating in the relationship.

The "Multiplicity" attribute defines the cardinality of the end. In this example, it is specified that there is exactly one Customer (value is "1" on line 15) for zero or more orders (value is "*" on line 14). Other values for this attribute are: "0..1 " — zero or one

- "1 " — exactly one
- "*" — zero or more
- "1..*" —one or more
- "n" - exactly n
- "n..m" — between n and m, inclusive, where n is less than or equal to m.

The <OnDelete> element on line 16 specifies the operational behavior for delete operations. It has one attribute, "Action" which can have one of 3 value. Cascade - delete all Orders belonging to the Customer. This is what is shown in the example above. Restrict - Prevent deletion of a Customer when outstanding Orders exist. RemoveAssociation - Remove the relationship between Orders and the Customer. Note that in order to have consistent semantics, the <On-Delete> element is allowed on only one of the ends of a relationship.

The CDM allows the specification of behavior on other operations: copy, serialize, secure, and lock. They all follow the same pattern as illustrated for the delete behavior - by using a sub-element of the form <OnOperation Action="...">. The specification of operational behavior can be done on both associations and compositions.

Associations model peer-to-peer relationships. Compositions model strict containment (parent-child) relationships. A classic example of a composition is the relationship between an Order and the Line items corresponding to it. The order-line is completely controlled by its parent order. Semantically, it has no meaningful existence outside of the containing order. Deleting an order forces the deletion of all the order-lines. Thus Order and Line entities are referred to as being related *via* composition (that is, an Order is composed of one or more Line entities).

A composition relationship has the following three characteristics:

Uniqueness: The children of a given parent should have a unique key among themselves. For example, a Line belonging to an Order should have a unique key to distinguish it from all other Lines for the same Order. A common way of implementing this would be to derive the child's identity by combining its key and the parent's identity.
Cascade Delete: Deleting the parent deletes the child.
Multiplicity: The multiplicity of the parent is one. This expresses the semantic that a Line cannot exist without an Order. The <Composition> element is used to model a composition.

Note that there is no need to specify "Multiplicity" for the parent because this is always one for a composition. In fact, it is an error to specify a "Multiplicity" other than one for the parent of a composition. Multiplicity may be specified for the child end and it can have any of the values *infra.*

Operational behaviors can be specified on compositions - for the copy, serialize, secure and lock operations. Note that there is no need to specify <OnDelete> because a composition always has cascade delete semantics. It is an error to: Specify <OnDelete Action="x"> where x̲ is not equal to "Cascade" and Specify <OnDelete> on the child end.

Often it is useful to operate on related entities as if they were a unit. For example, when copying an Order entity, it is usually desirable to have the corresponding Line entities copied as well. The CDM allows the specification of these behaviors for various operations: delete, copy, serialize, secure, and lock. The general pattern used is to define a sub-element of the form <OnOperation Action="value" />. The Operation can be one of Delete, Copy, Serialize, Secure, or Lock. Depending on the Operation, the value of "Action" can be Cascade, Restrict, RemoveAssociation, etc.

The following points should be kept in mind when specifying the operational semantics: all <OnOperation.../> elements should be specified on only one of the relationship ends. It can be illegal (for example) to specify <OnDelete> on Customer and <OnCopy> on Order. The conceptual model here is that one of the ends of the relationship is in a controlling role; operational semantics cascade down from that entity to all the other ends. There is no need to specify <OnDelete.../> for a composition. By definition, deleting the parent of a composition cascades the operation down to the child. All <OnOperation.../> elements should be specified on the parent of the composition. The end which specifies <OnDelete> or <OnSecure> with Action="Cascade" should have a multiplicity of "1". Otherwise, the semantics become inconsistent.

Relationships in the CDM are defined outside of the types that participate in them. The types themselves need not have a special property to establish a relationship. For example, the Order_Customer relationship can be specified using the top level <Association> element; the Customer and Order types do not have a property or other identifying marks within them to indicate that they participate in a relationship with each other.

Various mechanisms can be imagined for navigating from one end of the relationship to the other in a query or API. For instance, the CDP API has a static class for each relationship; this class has methods which can be used for navigation. To take the example of Order_Customer, the class would be named Order_Customer and the methods would be GetOrdersGivenCustomer(...) and so on.

However, the most intuitive way would be to actually have a property on either end of the relationship. For example, if Order had a property called Customer, then navigation would be as simple as accessing a property. To enable this simple pattern for relationship navigation, the CDM has the notion of relationship properties. They can be defined on an entity for the express purpose of navigating to a related entity. Relationship properties are defined using the <RelationshipProperty> element. The <RelationshipProperty> element has three attributes: "Name" defines the name of the property. This name can be used in queries or the API to navigate to the other end of the relationship. "Relationship" specifies the name of an association or a composition. "End" identifies the navigation target. Relationship properties can be defined for both association and composition relationships, and can be defined at either end of the relationship.

Note that unlike "regular" properties, relationship properties do not have a "Type" attribute. This is because they are implicitly typed to an Entity Ref (or a collection of Entity Refs). This entity reference is used to navigate to the target entity.

A relationship property is either a single Entity Ref or a collection of Entity Refs, depending on the multiplicity of the end that it is targeting. The following table shows possible values for "Multiplicity" and the types of the corresponding relationship properties:

| Multiplicity | Type of Relationship Property |
|---|---|
| "0.. 1" | Ref(*entity-type*), Nullable="true" |
| "1" | Ref*(entity-type),* Nullable="false" |
| "*" | Collection(Ref(*entity-type*)), <ElementOccurs Minimum="0" Maximum="unbounded" /> |
| "1.. *" | Collection(Ref(*entity-type*)), <ElementOccurs Minimum=" 1" Maximum="unbounded" /> |
| "n" | Collection(Ref(*entity-type*)), <ElementOccurs Minimum="n", Maximum="n" /> |
| "n..m" | Collection(Ref(*entity-type*)), <ElementOccurs Minimum="n", Maximum="m" /> |

As described *supra,* an entity can either exist "by itself' at the top level, or reside within an entity set (which is itself within an entity container). Consider the situation within the context of the two ends of a relationship. In the case of "free floating" entities both ends of the relationship exist somewhere within the sea of entities. Consider when entities are grouped into multiple entity sets. For example, consider the following schema fragment:

```
1. <EntityContainerType Name="LOBData">
2. <Property Name="Orders" Type="EntitySet(Order)"/>

3.  <Property Name="GoodCustomers"
   Type="EntitySet(Customer)"/>
4.  <Property Name="BadCustomers"
   Type="EntitySet(Customer)"/>
5. </EntityContainerType>
6. <EntityType Name="Customer" Key="CustomerId">
7.  ...
8. </EntityType>
9. <EntityType Name="Order" Key="OrderId">
10.  ...
11. </EntityType>
12. <Association Name="Order_Customer">
13.  <End Type="Order" Multiplicity="*" />
14.  <End Type="Customer" Multiplicity="1">
15.    <OnDelete Action="Cascade" />
16.  </End>
17. </Association>
```

The entity container (LOBData) has three entity sets: Orders, GoodCustomers, and BadCustomers. All Customer entities in GoodCustomers have a rather admirable credit and hence are deemed worthy of placing orders. The BadCustomers have defaulted on their payments. The obvious business rule here is to only want GoodCustomers to place an Order. In other words, restrict the scope of the Customer_Order relationship such that only entities in GoodCustomers can have Orders. Furthermore, all Orders must reside in the Orders entity set. This is done by using the <Scope> element inside an <EntityContainerType>, as shown below:

```
1. <EntityContainerType Name="LOBData">
2.  <Property Name="Orders" Type="EntitySet(Order)"/>
3.  <Property Name="GoodCustomers"
    Type="EntitySet(Customer)"/>
4.  <Property Name="BadCustomers"
    Type="EntitySet(Customer)"/>
5.  <Scope Relationship="Order_Customer">
6.   <End Type="Customer" EntitySet="GoodCustomers" />
7.   <End Type="Order" EntitySet="Orders" />
8.  </Scope>
9. </EntityContainerType>
```

The <Scope> (line 5) element has one attribute - "Relationship" - which identifies the association or composition whose ends are being scoped. The <End> sub-elements, one for each end of the relationship, are used to specify the entity set that this end is scoped to. It is seen on line 6 that the Customer end is scoped to the GoodCustomers entity set; and on line 7, the Order end is scoped to the Orders entity set.

If a deployed schema has an entity container, then each end of each relationship is scoped one and only one entity set within the entity container. If explicit an <Scope> clause is absent for a given association or composition then the implementation scopes the ends to default entity sets. The manner in which implicit scoping is done is implementation defined.

The CDM allows specification of stricter scoping rules for compositions. Consider the composition between Order and Line. It does not make sense for a Line to exist without a corresponding Order. Thus, the entity set which contains Line entities should enforce the business rule that every Line should be the child of one, and only one, Order. This is done using the <Requires> element.

The following scoping requirements are satisfied by the above example: The Line end of Shipment_Line should be scoped to ShipmentLines entity set (line 16). Every Line in ShipmentLines must be an end of the Shipment_Line composition. This is done in line 7 using the <Requires> element. This element has one attribute, "Relationship", which identifies the composition. The Line end of Order_Line should be scoped to OrderLines entity set (line 12). Every Line in OrderLines should be an end of the Order_Line composition (line 4). If the <Requires> element is absent in an entity set, then it is not constrained to have entities belonging to any given composition. This can be an important requirement in many modeling scenarios. Note that the <Requires> element can be used to specify only one composition name.

The alternative description of CDM so far has been agnostic about where exactly the entities reside. The entities can reside in memory or actually be persisted durably in a store. The core CDM neither implies, requires, nor cares about where the entities reside - the entities can reside in memory or be persisted. Following is a description of persisted entities and how CDM supports the notion of persistence.

The entity container is the top level organizational unit for entities and is the level at which persistence semantics are defined. An entity is the smallest unit of data that can be persisted. Typically, persisted entities have operational semantics associated with them - such as copy, move, backup, restore, serialize, *etc.* The entity container is the unit of persistence on which these semantics can be defined. It is also the organizational unit on which administrative notions such as backup, restore, users, roles, *etc.,* are defined. In this sense, an entity container is similar to a SQL database.

The entity container has one or more entity sets within which reside all the entities. Thus, defining an instance of the entity container jump-starts the storage allocation process. Typically, the type designer defines an entity container type. The CDM itself does not define how an entity container instance is obtained from the type, and how this instance is mapped to the underlying storage structures (such as EntityContainer->Database, Entity set ->table(s), etc.). The CDP defines a set of prescriptive mappings between an entity container (and the types contained therein) to SQL storage. CDP also allows non-prescriptive (user specifiable) mappings for the same.

In general, applications are free to organize entities in any way they choose - the CDM does not dictate any specific organizational structure. When talking about persisted entities however, the semantics of entities, entity sets, and the Entity Container imply a certain structural organization. When entities are persisted: every entity should live within an entity set; every entity set should live within an Entity Container; and the Entity Container should live at the top level.

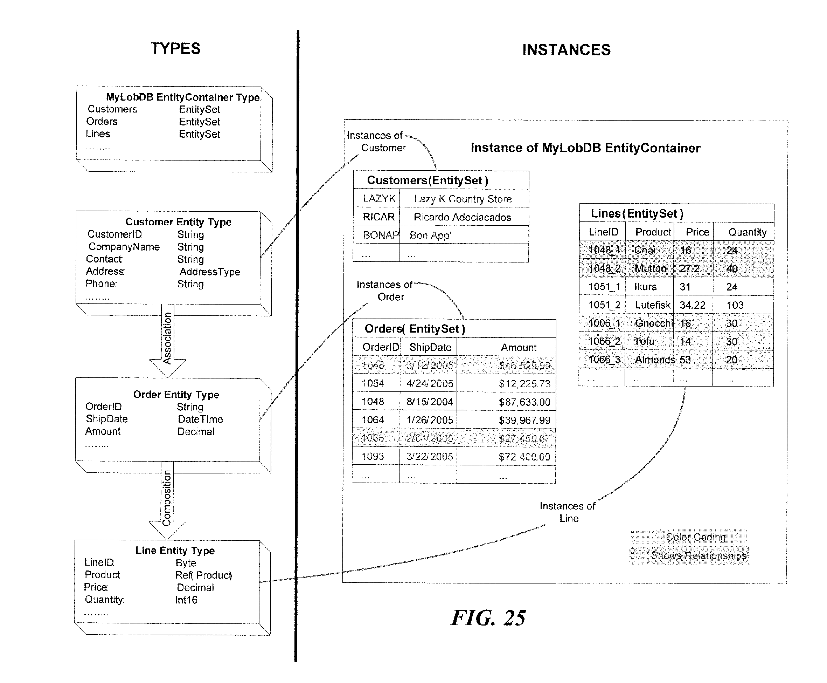

FIG. 25 illustrates a structural organization for persisted entities in CDM. This is a logical representation of the data, not a physical one. Each entity set shown could be mapped to a table, for example. This table would almost certainly have additional columns for representing the relationships. One can imagine the Orders entity set being mapped to an Orders table which has a CustomerID column. Since CDM does not prescribe a storage mapping, the description has been kept at the logical level. It can be seen that every entity is resident within an entity set. Additionally, every entity set is contained within the EntityContainer (MyLobDB in the instance view). To round out this description of structural organization, note that a CDM store consists of one or more EntityContainers.

Not all application developers define types; most of them use types which have been defined and deployed by other ISVs. Provided herein is a mechanism for the user of a type to be able to extend the pre-defined type in specific ways without harming the fidelity of the original type. Entity Extensions and Extensible Enumerations are two facilities provided in the CDM to allow independent extensibility of types.

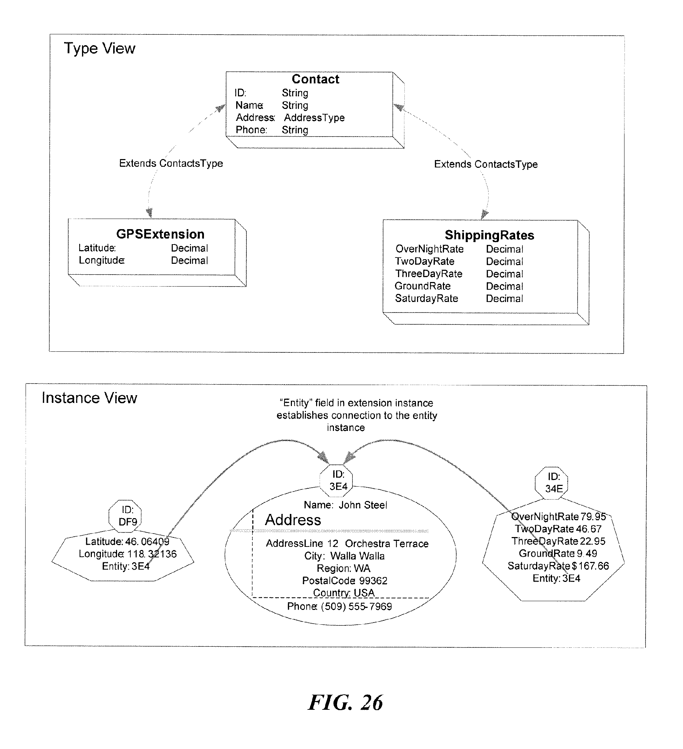

FIG. 26 illustrates the use of entity extensions in this implementation of the CDM. To motivate the need and use for entity extensions, consider the ContactType. It has the standard properties for Name, Address, and PhoneNumber. Assume a GPS (global positioning system) software ISV wants to add the latitude and longitude information to this type. One way to do this would be to modify the actual ContactType; this is undesirable because there are many other users of this type in the system. Another way would be to sub-type a new class from the ContactType, called ContactWithGPSType. This would mean that all users of AddressType will now have to change their code to use ContactWithGPSType; furthermore, GPS information cannot be added to existing contacts in the system - they have to be recast into this new type.

CDM solves this problem elegantly by the notion of an entity extension. Entity extensions are referenceable, structured types; they can contain any member that an entity can contain - properties, methods, and computed properties. An extension is defined using the <EntityExtensionType> element. Extension types do not enjoy inheritance. <EntityExtensionType> can contain any element that can be present in an <EntityType>. It is not necessary for the property names to be unique across all extensions or even across properties of the type being extended.

Lifetime Management. An extension is tied closely to an entity because each extension type specifies the entity type that it extends. All entity extensions have a default property named "Entity" of type Ref(T), where T is the value of ExtendsType, which points to the entity instance of which this is an extension. This is shown schematically in FIG. 26 as the entity key within the extension.

An extension has no independent existence outside of the entity that it is extending. CDM requires that lifetime management of extensions be part of the implementation - that is, the implementation should delete all extensions when the corresponding entity is deleted. In this sense, extensions behave like they are compositions of the corresponding entity. Even though entity extension instances are considered to be part of the cohesive unit of data defined by the containing entity, there is no consistency guarantee concerning changes to the entity and the extension, except as explicitly managed via an application using transactions.

Instance Management. If InstanceManagement="Implicit", all of the properties defined in an extension should either be nullable, specify a default value, or have a Collection type with a minimum occurrence constraint of zero. Note that a singleton inline typed property cannot specify a default value and so must be nullable. This allows queries to be executed against the extension as if it were always present.

If InstanceManagement="Explicit", applications should explicitly add and remove an extension to/from an entity instance using the operations defined in the query language for the common data model. A means to test for the presence of an extension is also provided.

Preventing Extensibility. Type designers may want to prevent the creation of extensions for a given type. This can be done by the "Extensible" attribute on the <EntityType> or <AssociationEntityType> elements. When set to "true" (which is the default value), <EntityExtensionType>s can be defined for this entity. This can be sent to "false" to prevent extensions to this type.

Extensible Enumerations and Enumeration Aliases. As vendors or their customers evolve a set of deployed types, it sometimes becomes necessary to add names to an existing enumeration. For example, consider an enumeration called ToyotaCarModels, which probably had the following names in 2795: [Corolla, Camry, MR2, Celica, Avalon]. However, in 2005, it needs to have these additional names: Prius, Echo, Matrix, and Solara.

Enumerations can be extended using the <EnumerationExtensionType> element. This is shown in the example below:

```
1. <EnumerationType Name="C" Extensible="true">
2.    <EnumerationMember Name="P"/>
3.    <EnumerationMember Name="Q"/>
4.    <EnumerationMember Name="R" AliasesMember="Q"/>
5. </EnumerationType>
6.
7. <EnumerationExtensionType Name="D" ExtendsType="C">
8.    <EnumerationMember Name="Q"/>
9.    <EnumerationMember Name="S"/>
10.    <EnumerationMember Name="T" AliasesMember="C.R"/>
11. </EumerationExtensionType>
12. <EnumerationExtensionType Name="E" ExtendsType="C">
13.    <EnumerationMember Name="T"/>
14.    <EnumerationMember Name="U" AliasesMember="D.T"/>
15. </EnumerationExtensionType>
```

In line 7, the enumeration type 'C' is extended to add the names 'Q', 'S', and 'T'. In line 12, a separate extension is made to 'C' by adding the names 'T' and 'U'. Since the enumeration members are always qualified by the name of the underlying base or enumeration extension type, duplicate names in the extensions are OK (D.T and E.T in this example).

It is often useful to have an alias for an existing enumeration member name. A classic example of this occurs in a Seasons enumeration. In the United States, the seasons are [spring, summer, fall, winter]. In the UK or India, "fall" is called "autumn". It is then desirable to be able to define both names, but have them conceptually map to the same enumeration member. The "AliasesMember" attribute in <EnumerationMember> element defines an alias for an existing name. In this example, C.R, D.T, and E.U are all aliases for C.Q and hence do not represent unique names.

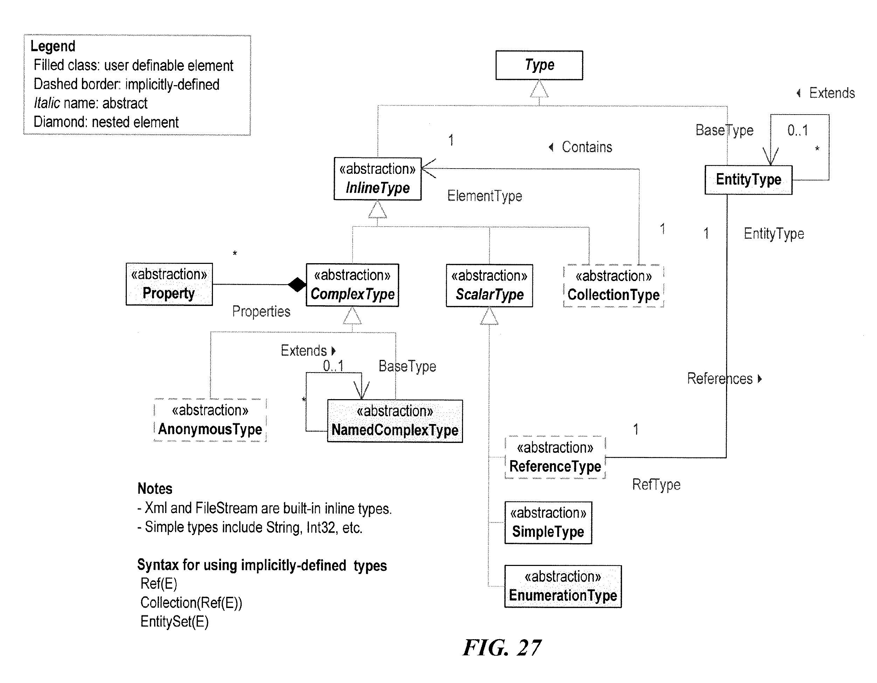

FIG. 27 illustrates CDM metamodel fragments of the alternative implementation that clarify semantics of the model related to types.

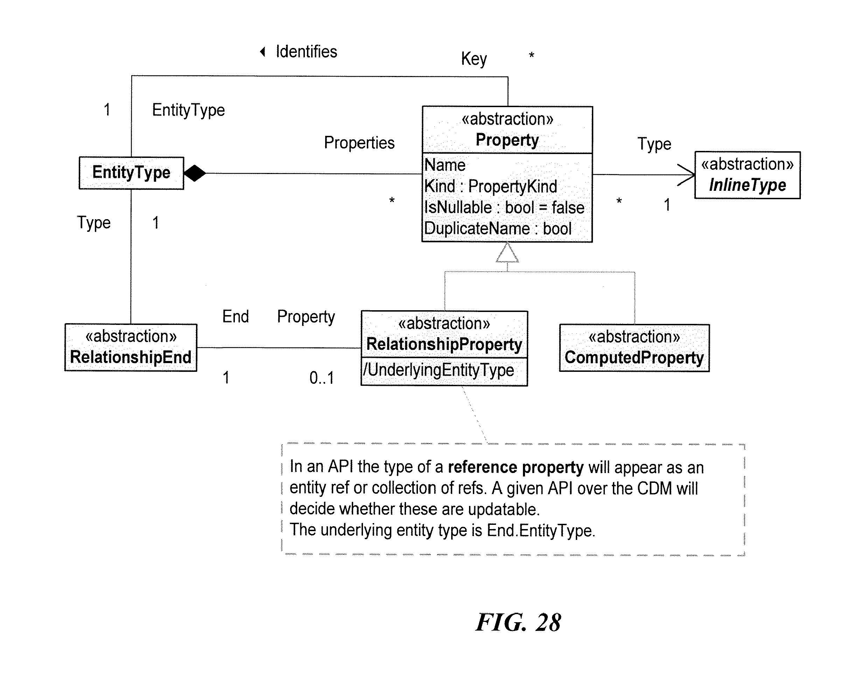

FIG. 28 illustrates CDM metamodel fragments of the alternative implementation that clarify some semantics of the model related to properties.

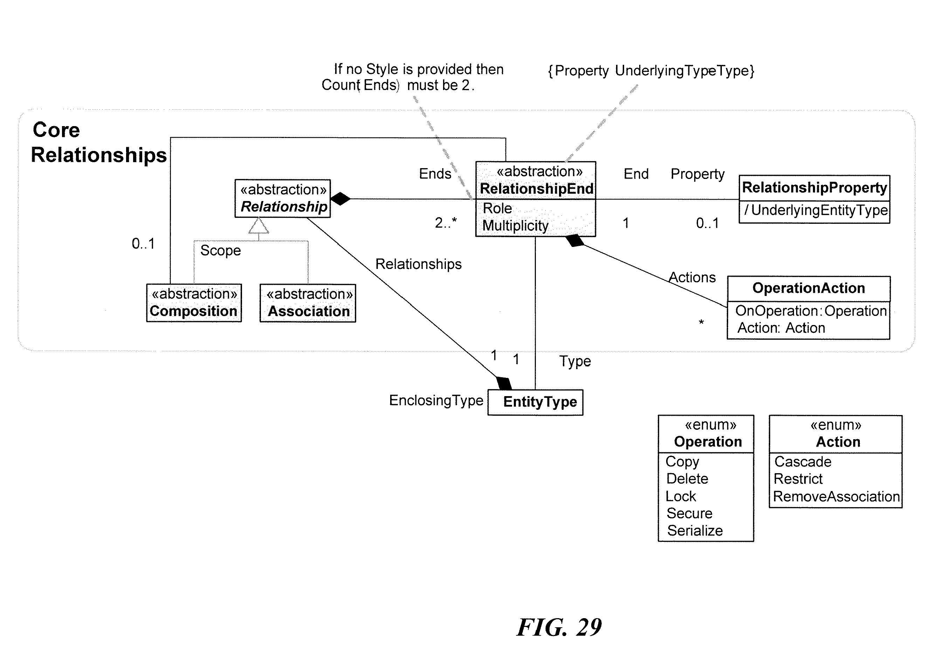

FIG. 29 illustrates CDM metamodel fragments of the alternative implementation that clarify some semantics of the model related to associations.

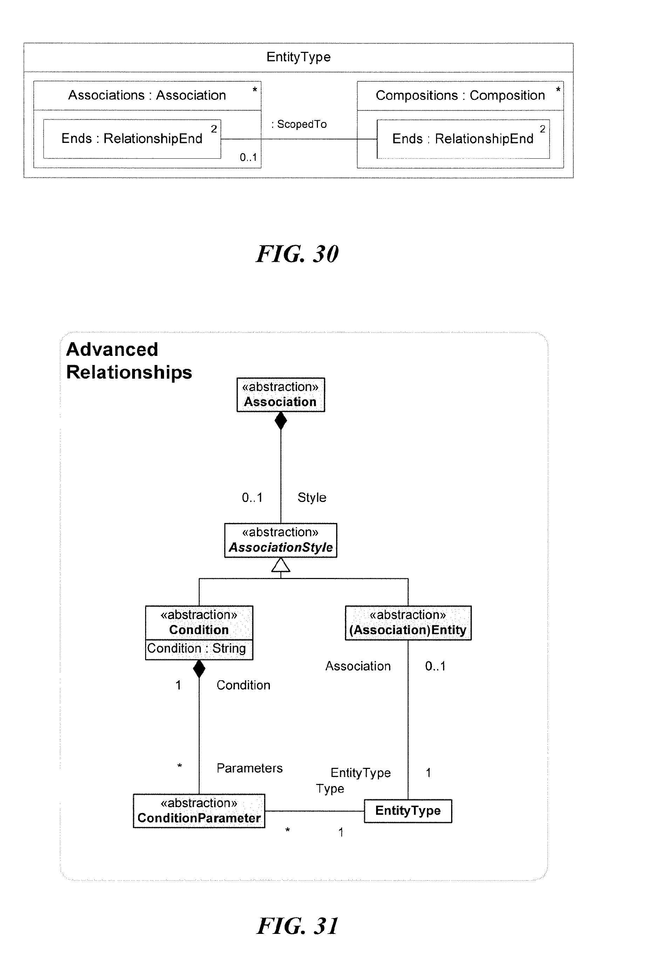

FIG. 30 illustrates a UML composition diagram of FIG. 29 that illustrates several aspects of the relationship shown therein.

FIG. 31 illustrates advanced relationships of the alternative implementation.

CDM TYPE SYSTEM

The following table presents the CDM type system in the form of an abstract syntax, exposing the system's recursive structure: the infinite set of legal sentences implied by the finite grammar. First, the type system is presented in-toto, then again with expository text and small examples.

Structural Types

*structuralType* :: = *simpleType* | *tupleType* | *collectionType*

*simpleType* :: = *scalar* | *enum* | *cname* | *sname* | Ref< *ename* >

*tupleType* : : = { ... , *structuralType aname* [ # ] , ... }

*collectionType* :: = (List | Set | Multiset | ...) < *structuralType* >

Nominal Types

*declaration* :: = *typeSynonym* | *complexType* | *entityType* | *entitySet* |

*entityContainer* | *binaryRelation*

*typeSynonym* :: = Type *sname* = *structuralType*

*complexType* :: = ComplexType *cname* [ extends *cname* ] [*constraint* ]

*structuralType*

*entityType* :: = EntityType *ename* [ extends *ename* ] [ *constraint* ] [ *rname* ]

*structuralType*

*entitySet* :: = EntitySet *esname* < *ename* >

*entityContainer* :: = EntityContainer *ecname* < ..., *( esname | collectionType ) , ...> binaryRelation* :: Relation *rname* < *( ename | rname ) , (ename | rname ) >*
*constraint*
Base Types
*aname* Symbolic attribute names (i.e., member names)
*ename* Symbolic entity-type names
*cname* Symbolic names of complex types
*sname* Symbolic synonyms for other types
*rname* Symbolic names of binary relationships
*esname* Symbolic names of entity sets
*ecname* Symbolic names of entity collections
*scalar* Base type with no significant internal structure
*enum* The type of enumerated symbols
*constraint* Expressions in first-order predicate calculus

Structural types. The first block of definitions is a recursively closed sub-grammar comprising the CDM structural types. Sentences in this sub-grammar may refer only to (1) other terms in the same sub-grammar, (2) nominal types, by name only, (3) terms in the last block - the base types. The base types include only various name spaces and straightforward types to be developed elsewhere. With one exception (collection types in entity containers), structural types may not be directly instantiated. Rather, they build up entity types, which are a kind of nominal type and are the primary way to instantiate data.

*structuralType :: = simpleType | tupleType | collectionType*
*A structuralType* is either a *simpleType, a tupleType,* or a *collectionType.*

A *simpleType* is either a *scalar,* an *enum, a cname,* an *sname,* or a reference to an *ename. A scalar* is a base type with no significant internal structure, like a machine-primitive Integer, a SQL Decimal, or a NET String or DateTime. A very important kind of scalar type is the GUID. This type has the property that every instance is universally unique across space and time. Its primary use is as the type of system-generated or *surrogate* keys. An *enum* is a straightforward enumerated type as seen in C#, Visual Basic, or other .NET programming languages. A *cname* is a name of a *complexType,* one of the nominal types defined below. An *sname* is a *typeSynonym,* semantically the same as writing the definition of the named type inline. Note that *snames* may not refer to nominal types: they are mere synonyms for structural types. Finally, an *ename* is a name of an *entityType,* the primary kind of nominal type. *enames* are enclosed in a literal Ref<> notation to emphasize that only entity types have first-class references. References to entities may model foreign keys in relational databases. CDM formalizes this usage through type-based *Relationships.*

There are two aspects to equality in general: first, whether two type expressions denote the same type; second, whether two *instances* of a *single,* given type are equal. The terminology "equality over types" is employed for the former and "equality over values" or "equality over instances" for the latter.

Equality over simple types is straightforward: two simple types are either manifestly the same or not (enums must have the same symbolic tags in the same order). Equality over values of simple types is defined, in principle, by bitwise comparison. In practice, some of the .NET types will have more involved equality operations. Suffice it to say that every simple type must furnish an equality operator taking two instances of the type and returning a Boolean.

A *tupleType* is one or more pairs of the form *structuralType aname,* each followed by an optional hash mark, all enclosed in 'curly braces.' A tuple type is like the payload of a C# class definition consisting *of members* or *attributes,* each of which has a name and one of the *structuralTypes,* recursively. Names of attributes are of type *aname,* that is, drawn from a domain of symbolic names distinct from those of *ename, cname, etc.* Any reference to an attribute by name must be unambiguous.

Equality over tuple types is defined as follows: two tuple *types* are equal if and only if their attributes have the same names and types *and* appear in the same order. So, {TA A, TB B} and {TB B, TA A} are distinct tuple types. The reason is to support positional access syntax in realizations of the CDM. Two *instances* of a tuple type are equal if their attributes' types and values are recursively equal.

Hash marks denote attributes that make up *key specifications,* meaning that, under certain circumstances, the values of hash-marked attributes must, collectively, be unique within collection-type sets or within *entitySets.* If more than one attribute in a type has hash marks, then the key is a *compound key,* consisting of all the marked attributes, concatenated, in the order in which they were defined in the text. Compound keys may span multiple tuple types, so, for instance, in

```
{TA A {TB B #} {TC C #}}
```

The key specification is {B, C}. As a longer example, consider:

```
{String personName,
  {Int a, Int b, Int c} socialSecurityNumber #,
  {String street,
   String city,
   String state,
   {Int station, Int block} zipCode} address}
```

That is a toy tuple type for a contact card with three attributes named personName, socialSecurityNumber, and address. These attributes have the following three types, respectively: a free-form string for a person's name; a nested tuple comprising the three parts of a social-security number, marked with a hash-mark so as to act as a unique key in an entity set or set collection; and a nested tuple containing a street, city, state, and a two-part zip code, again represented as a more deeply nested tuple.

A *collectionType* is either a List, Set, Multiset, or some others, each parameterized by another structural type. Most of the time, collection types are instantiated indirectly as components of entities. However, they can be directly instantiated inside entity containers, as documented below.

Lists. A *list* is an *ordered* collection of instances of the *structuralType.* "Ordered" means there is a mapping from the positive integers 1, 2, ... to the elements of the collection. "Ordered" should not be confused with "sorted:" the list [1, 3, 2] is ordered but not sorted; [1, 2, 3] is both ordered and sorted. The special case of a *pair* is commonplace. A pair is just a list of length two.

Equality over list types is recursive over the structural type of the members of the list. Two instances of a list type are equal if (1) there are the same number of members; (2) the member values are equal, recursively; and (3) the members appear in the same order. Example: List<Int> is the type of an list of integers.

Sets. A *set* is an unordered collection of instances of the *structuralType* wherein duplicates are not permitted. Set<Int> would be the type of a set of integers. Operations for inserting members, testing membership, and computing unions, intersections, *etc.*

Equality over set types is recursive over the structural type of the members of the set. Two instances of a set type are equal if they contain the same number of members and the members' values are equal, recursively, independently of order.

Counting upward from one is the mathematical convention; programming languages tend to count upward from zero. Indecision whether to count from one or zero obtains even in mathematics, however. Something so basic as the set of Natural numbers, written N, is sometimes defined as 0, 1, ... and sometimes as 1, 2, ....

Multisets. A *multiset* is an unordered collection of instances of the *structuralType,* where duplicates are permitted. For instance,

```
Multiset<Set<String>>
```

would be the type of a multiset of sets of strings, and

```
Multiset<{String personName, DateTime birthdate}>
```

would be the type of a multiset of instances of the anonymous tuple type of persons' names and birthdates.

Equality over multiset types is recursive over the structural type of the members of the multiset. Two instances of a multiset type are equal if (1) they contain the same number of members; and (2) the members' values are equal, recursively, independently of order, but respecting the counts of duplicates. So, [1,1, 2, 3] and [2, 1, 3, 1] are equal as multisets, but [1, 1, 2, 3] and [1, 2, 2, 3] are not. Mathematically, the most straightforward representation of a multiset is a set of pairs of multiplicity counts and values. If multisets are so represented, then their equality is automatic, relying only on set equality and pair equality.

Nominal Types. Nominal types have the distinguishing feature that they *must* be uniquely named within their domains. Two of the nominal types participate in *subtyping* relations. Those two are *complexType* and *entityType.* Subtyping for structural types is much more complicated theoretically so is not allowed in CDM.

Entity *sets* are nominal both because their names are part of entity references, of type Ref<e>, and because they are one way to root instance trees. In that role, they must have names so that applications may retrieve instance data. Entity *collections* must also be named because they also root instance trees. Type synonyms are nominal types because their essence is naming. Finally, relations are nominal so that *Association Entities* may share them and refer to them by name.

Equality over nominal types is, in some sense, easier than equality over structural types. In its most draconic form, it is an error for two nominal types to have the same names and have *any* difference, even syntactically, in their definitions.

Equality over values of nominal types also can take advantage of naming. In particular, two instances of an entity type are equal if and only if their references are equal. This is the justification for calling the reference to an entity its *identity.*

Those are the six different kinds of *declarations* of nominal types. A type synonym introduces a particular *sname* into the domain of *snames.* When that *sname* is used elsewhere, the *structuralType* to which it refers is substituted for the *sname.* For example,

```
Type toyContactCard =
    {String personName,
        {Int a, Int b, Int c} socialSecurityNumber #,
        {String street, String city, String state,
            {Int station, Int block} zipCode} address}
```

defines a type synonym for the contact-card type exhibited above. That type synonym, toyContactCard, could be used wherever someone would otherwise be forced to copy-paste or keyboard the verbatim definition.

A *complexType* introduces a *cname* that (1) optionally *extends* another complex type; where (2) every instance obeys an optional *constraint,* expressed in a first-order predicate calculus; and (3) has the additional structure denoted by the *structuralType,* meaning that the given structural type is added to the structural types of the ancestors, and collisions of attributes are not permitted.

CDM permits single inheritance, meaning that a complex type may extend at most one other complex type, but recursion is permitted, so that a direct ancestor may, in turn, extend at most one other complex type.

Complex types are the richest kind of structured CDM *inline type.* Inline types have the distinguishing feature that, while it is possible to refer to them by *name* in other type definitions, it is not possible to instantiate them directly nor to take a reference to instances that may occur in entities. It is also the case that embedded key specifications, in the form of hash-marked attributes in tuple types, are ignored in the context of complex types.

The distinction between complex types and type synonyms is that the former may enjoy inheritance and suffer constraints. As an aside, note that some constraints can be checked statically, at compile time, through theorem-proving and model-checking technologies. Other constraints must be checked at run time, in which case a compiler must emit constraint-checking code. Example:

```
ComplexType betterContactCard toyContactCard
```

defines a complex type with payload specified by the type synonym above.

```
ComplexType employeeRecord extends betterContactCard

     {Int employeeNumber, Int departmentNumber}
```

defines a complex type for employee records based on the better contact card already defined. It has all the attributes of betterContactCard and of the explicit tuple written in-line.

An *entityType* introduces an *ename* that (1) optionally extends another entity type; where (2) every instance obeys an optional *constraint;* that (3) optionally refers to a relationship by its *rname;* and (4) has the additional structure denoted by the *structuralType,* meaning that the given structural type is concatenated linearly to the structural types of the ancestor entity types, and collisions of attributes are not permitted.

Key specifications (hash marks) are also concatenated, meaning that the key specification of an entity type with ancestors is the concatenation of the key specifications of the included tuple types, in linear order.

An entity type should have a key specification. This implies that an entity type *must* have at least one tuple type with at least one hash mark in its inheritance chain. This restriction is enforced semantically so as not to over-complicate the syntax.

The optional *rname* accounts for CDM *Association Entities,* which are binary relations with extra attributes. Find more details in the section on relationships below.

CDM permits a single inheritance, meaning that an entity type may extend at most one other entity type, recursively. Entity types may not extend complex types, and complex types may not extend entity types. In other words, complex types and entity types inhabit separate subtyping universes.

Entity types are the richest kind of structured CDM types that participate in *entitySets,* where the hash-marked attributes in tuples constitute primary keys in the ordinary sense of relational databases. Additionally, entity instances have *identities,* which are their key values concatenated to the identities of their entity sets. 3 These identities constitute the values of the explicit *Ref<ename>* terms that appear in block one of the grammar.

Entity types are the primary kind of CDM type that can be directly instantiated, always in the context of an entity set, which is CDM's model for *relations* or *tables,* again in the ordinary sense of relational databases. Example:

```
EntityType employeeEntity employeeRecord
```

defines an entity type based on the complex type employeeRecord defined above. At this point, the hash-marked attributes, ignored heretofore, regain significance. Recall that employeeRecord extends betterContactCard, which uses the type synonym toyContactCard, which has the embedded attribute

```
{Int a, Int b, Int c} socialSecurityNumber #
```

The hash-mark on that attribute implies that social-security number will be the primary key in entity sets of employeeEntity instances. If the user preferred employee number over social-security number for keys, it would be necessary to define new tuple types with employee number hash-marked and social-security number not hash-marked, or to use the hash-mark-manipulation operations below to create new types from old.

An *entitySet* is a named collection of entities of type *ename.* Duplicate entity instances are not permitted in entity sets and the entity types must have key specifications, that is, one or more attributes tagged with hash marks. The name *esname* of the entity set is introduced into the distinct domain of *esnames.*

```
EntitySet employees<employeeEntity>
```

would be the type of an entity set of employee entities, using social-security number as key.

An *entityContainer* is a named collection of one or more terms, each of which is either an entity set denoted by its *esname* or an anonymous collection type.

```
EntityContainer <employees>
```

would be the type of an entity container holding an instance of the entity set named employees. The method of instantiating collection types in entity containers is TBD. Otherwise, an entity container is just a capsule for one or more entity sets.

Relationships. CDM requires the following canonical forms of relationships: (1) Association, (2) Conditional Association, (3) Association Entity (4) Composition. These are all variations of the same lower-level notion of a mathematical *relation,* and we formalize them as such.

A mathematical relation is a subset of a *Cartesian product* of sets such that all members of the subset satisfy some constraint. Consider a list of one or more sets $(A_1, A_2, ... , A_n)$, also written as $A_i$, $i = 1..n$. The Cartesian product of these sets, written $C = A_1 \times A_2 \times ... \times A_n$, is the set of *n*-ary, ordered tuples

$$C = \{(a_1, a_2, ..., a_n) \mid a_1 \in A_1, a_2 \in A_2, ..., a_n \in A_n\}$$

The Cartesian product is the largest relation that can be formed from a list of sets because the constraint does not filter out any members.

To form a relation with fewer members than the full Cartesian product, the constraint must filter some out. For example, consider the set of employee numbers, 1 through 100, written 1..100, and the set of department numbers, 1 through 10. One way of relating employees to departments would be as follows, defining the symbol $\triangleright$ as the name of the relation:

$$\triangleright \stackrel{\text{def}}{=} \{(e, d) \mid e \in 1..100, d \in 1..10, (e - 1)\text{div}10 = d - 1\}$$

where 'div' is number-theoretic integer division. This relates employees 1 through 10 to department 1, employees 11 through 20 to department 2, and so on. The predicate is the conjunction of the three parts $e \in 1..100$, $d \in 1..10$, and $(e - 1)\text{div}10 = d - 1$.

This example happens, implicitly, to specify a many-to-one relationship between employees and departments. It is standard shorthand to use the name of the relation as an infix 'operator':

$$(e, d) \in \triangleright \stackrel{\text{def}}{=} e \triangleright d$$

First-order predicate calculus suffices to express all constraints of practical interest, including uniqueness, multiplicity, reference, and conditional membership. CDM gives names to certain patterns of constraints that are important or very common in practice. For instance, relational database systems often implement one-to-many relationships by foreign keys. A CDM *referential constraint* is a statement that the value of a foreign key must appear as a primary key in the target entity set. The value of that foreign key is an instance of type Ref<***ename***>. A pattern in predicate calculus can be abstracted to stand for the class of referential constraints.

Informally, a constraint is a composition of individual terms through logical connectives like 'and,' 'or,' and 'not. ' Each term is an expression of Boolean type, which may refer to attributes of entities by *ename* and *aname;* to constants; to comparison operators like $\leq$; to variables introduced by quantifiers like V and ∃; and to some special, side-effecting operational constraints, for is provided the syntax: *operationalConstraint : :* = On (Delete |Copy| Serialize) < *ename* >

(Cascade | Restrict | Remove)

Each of the nine forms of operational constraint refers to one of the two entity types in a binary relation by its *ename* cascade means that the operation Delete, copy, or serialize, should propagate to instances of the other entity type in the relation. Restrict means that the operation should only take place if instances of the other entity type independently perform a compatible operation. Remove means that the relation itself should be removed when the operation completes.

Another special form of constraint is the multiplicity constraint:

*multiplicityConstraint* :: = (multiplicity (one | many | $n_1..m_1$) *ename1* to (one | many |$n_2..m_2$) *ename2*)

where $n_i \leq m_i$ are natural numbers greater than zero. This form is syntactic sugar for equivalent expressions in the predicate calculus, and is offered here because they are conventional modeling scenarios. The named entity types must be those also named in the relation.

CDM uses the term *conditional constraint* for constraints that do not fall into any of the categories above. It is still being debated whether a class of compositional constraints should be identified.

An *entitySet* is, logically speaking, a unary relation, where the Cartesian product is trivial, consisting of just one set. A *binaryRelation* is a binary relation, where the Cartesian product names two sets. Ternary, quaternary, *etc.,* relations are designable, with larger and larger Cartesian products. But binary relations satisfy virtually all practical scenarios, plus, all larger relations can be trivially built up as compositions of binary relations.

*binaryRelation* :: = Relation *rname < ( ename | rname ) , ( ename | rname ) > constraint*

A *binaryRelation* introduces an *rname* into the domain of *rnames* and defines a binary relation on pairs of entities or other relations that satisfy the mandatory *constraint.* In the base case, where the pairs are entities and not other relations, the pairs are members of the Cartesian product of the universal sets of the entity types. The recursive case, where one or both of the related kinds are other relations, supports compositional building of relations of larger arity.

```
EntityType department {String deptName, Int deptNo #}

EntitySet departments <department>

Relation empDepts <department,employeeEntity>

  (multiplicity one department to many employeeEntity)
```

adds an entity type and entity set for departments and declares a one-to-many relationship from departments to employee entities. There are options for implementing such a relationship. For instance, it could be implemented either by a join table or by a foreign-key constraint.

Association. A CDM Association is a binary relation, as defined above.

Conditional Association. All binary relations are conditional, meaning that the constraint is mandatory. Hence, CDM Conditional Associations are binary relations, as defined above.

Association Entity. An entity type may optionally refer to a binary relation by *rname.* Such an entity accounts for CDM Association Entities.

Composition. A binary relation that satisfies the following two criteria is a CDM Composition: there is a multiplicity constraint in which at least one of the two entity types has a multiplicity of one; and there is an operational constraint on that entity type of the form On Delete *ename* Cascade.

OPERATIONS AT THE TYPE LEVEL

*( cname ; ename )* drop → *structuralType*

converts a complex type or entity type into a structural type. It inverts the *complexType* and *entityType* declarations.

Writing betterContactCard drop is the same as writing toyContactCard, since betterContactCard was built up from toyContactCard by the declaration ComplexType betterContactCard toyContactCard.

*(tupleType) sname )++ (tupleType| sname )* → *tupleType* defines the binary operation ++, which concatenates two tuple types - or synonyms that name them - to make another. Writing

```
{String personName} ++ {{Int a, Int b, Int c}

socialSecurityNumber #}
```

is the same as writing

```
{String personName, {Int a, Int b, Int c} socialSecurityNumber
#}.
```

(*tupleType* | *sname* ) -- *aname* → *tupleType* removes the named attribute from the tuple type. This is a *nop* if the input tuple type does not have the named attribute. Writing

```
{String personName, Address address} -- personName
```

is the same as writing

```
{Address address}.
```

*(tupleType |name)* StripHashes → *tupleType* takes all the hash-marks off all attributes in its argument's tuple type. Writing

```
{String personName, {Int a, Int b, Int c} socialSecurityNumber
#}
```

```
StripHashes
```

is the same as writing

```
{String personName, {Int a, Int b, Int c}
socialSecurityNumber}
```

*( tuple Type | sname) aname* AddHash -! *tuple Type* results in a tuple type with the named attribute hash-marked. If that attribute were already hash-marked, it remains so. Writing

```
{String personName, {Int a, Int b, Int c}
socialSecurityNumber}
personName AddHash
```

is the same as writing

```
{String personName #, {Int a, Int b, Int c}
socialSecurityNumber}
```

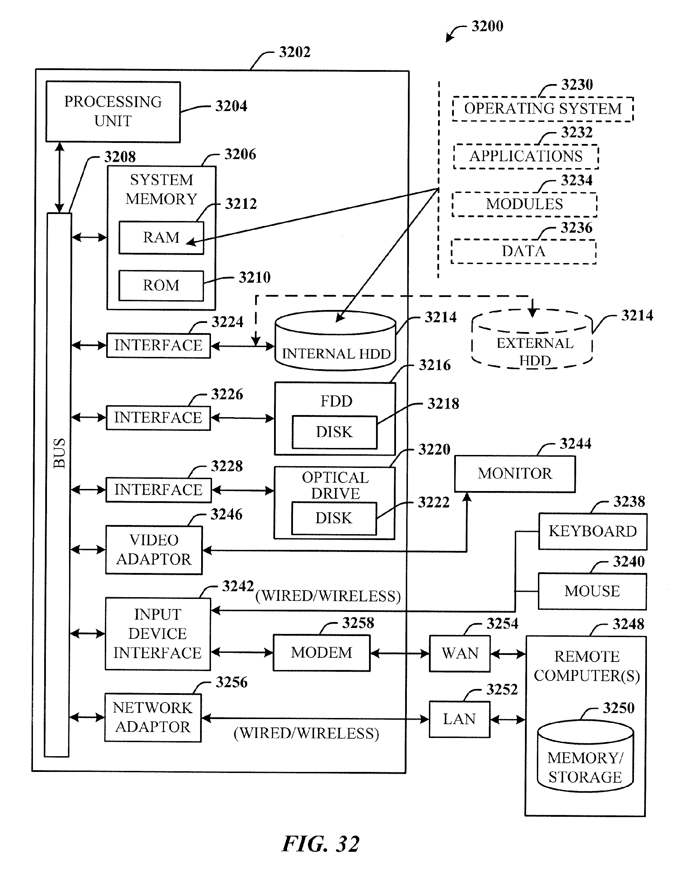

Referring now to FIG. 32, there is illustrated a block diagram of a computer operable to execute the CDM architecture. In order to provide additional context for various aspects of the subject invention, FIG. 32 and the following discussion are intended to provide a brief, general description of a suitable computing environment 3200 in which the various aspects of the invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and non-volatile media, removable and non-removable media. By way of example, and not limitation, computer-readable media can comprise computer storage media and communication media. Computer storage media includes both volatile and non-volatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

With reference again to FIG. 32, the exemplary environment 3200 for implementing various aspects of the invention includes a computer 3202, the computer 3202 including a processing unit 3204, a system memory 3206 and a system bus 3208. The system bus 3208 couples system components including, but not limited to, the system memory 3206 to the processing unit 3204. The processing unit 3204 can be any of various commercially available processors. Dual microprocessors and other multi-processor architectures may also be employed as the processing unit 3204.

The system bus 3208 can be any of several types of bus structure that may further interconnect to a memory bus (with or without a memory controller), a peripheral bus, and a local bus using any of a variety of commercially available bus architectures. The system memory 3206 includes read-only memory (ROM) 3210 and random access memory (RAM) 3212. A basic input/output system (BIOS) is stored in a non-volatile memory 3210 such as ROM, EPROM, EEPROM, which BIOS contains the basic routines that help to transfer information between elements within the computer 3202, such as during start-up. The RAM 3212 can also include a high-speed RAM such as static RAM for caching data.

The computer 3202 further includes an internal hard disk drive (HDD) 3214 (e.g., EIDE, SATA), which internal hard disk drive 3214 may also be configured for external use in a suitable chassis (not shown), a magnetic floppy disk drive (FDD) 3216, (e.g., to read from or write to a removable diskette 3218) and an optical disk drive 3220, (e.g., reading a CD-ROM disk 3222 or, to read from or write to other high capacity optical media such as the DVD). The hard disk drive 3214, magnetic disk drive 3216 and optical disk drive 3220 can be connected to the system bus 3208 by a hard disk drive interface 3224, a magnetic disk drive interface 3226 and an optical drive interface 3228, respectively. The interface 3224 for external drive implementations includes at least one or both of Universal Serial Bus (USB) and IEEE 1394 interface technologies. Other external drive connection technologies are within contemplation of the subject invention.

The drives and their associated computer-readable media provide nonvolatile storage of data, data structures, computer-executable instructions, and so forth. For the computer 3202, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the invention.

A number of program modules can be stored in the drives and RAM 3212, including an operating system 3230, one or more application programs 3232, other program modules 3234 and program data 3236. All or portions of the operating system, applications, modules, and/or data can also be cached in the RAM 3212. It is appreciated that the invention can be implemented with various commercially available operating systems or combinations of operating systems.

A user can enter commands and information into the computer 3202 through one or more wired/wireless input devices, e.g., a keyboard 3238 and a pointing device, such as a mouse 3240. Other input devices (not shown) may include a microphone, an IR remote control, a joystick, a game pad, a stylus pen, touch screen, or the like. These and other input devices are often connected to the processing unit 3204 through an input device interface 3242 that is coupled to the system bus 3208, but can be connected by other interfaces, such as a parallel port, an IEEE 1394 serial port, a game port, a USB port, an IR interface, etc.

A monitor 3244 or other type of display device is also connected to the system bus 3208 *via* an interface, such as a video adapter 3246. In addition to the monitor 3244, a computer typically includes other peripheral output devices (not shown), such as speakers, printers, *etc.*

The computer 3202 may operate in a networked environment using logical connections *via* wired and/or wireless communications to one or more remote computers, such as a remote computer(s) 3248. The remote computer(s) 3248 can be a workstation, a server computer, a router, a personal computer, portable computer, microprocessor-based entertainment appliance, a peer device or other common network node, and typically includes many or all of the elements described relative to the computer 3202, although, for purposes of brevity, only a memory/storage device 3250 is illustrated. The logical connections depicted include wired/wireless connectivity to a local area network (LAN) 3252 and/or larger networks, e.g., a wide area network (WAN) 3254. Such LAN and WAN networking environments are commonplace in offices and companies, and facilitate enterprise-wide computer networks, such as intranets, all of which may connect to a global communications network, e.g., the Internet.

When used in a LAN networking environment, the computer 3202 is connected to the local network 3252 through a wired and/or wireless communication network interface or adapter 3256. The adaptor 3256 may facilitate wired or wireless communication to the LAN 3252, which may also include a wireless access point disposed thereon for communicating with the wireless adaptor 3256.

When used in a WAN networking environment, the computer 3202 can include a modem 3258, or is connected to a communications server on the WAN 3254, or has other means for establishing communications over the WAN 3254, such as by way of the Internet. The modem 3258, which can be internal or external and a wired or wireless device, is connected to the system bus 3208 *via* the serial port interface 3242. In a networked environment, program modules depicted relative to the computer 3202, or portions thereof, can be stored in the remote memory/storage device 3250. It will be appreciated that the network connections shown are exemplary and other means of establishing a communications link between the computers can be used.

The computer 3202 is operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, restroom), and telephone. This includes at least Wi-Fi and Bluetooth™ wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE 802.11 (a, b, g, *etc.)* to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11 a) or 54 Mbps (802.11b) data rate, for example, or with products that contain both bands (dual band), so the networks can provide real-world performance similar to the basic 10BaseT wired Ethernet networks used in many offices.

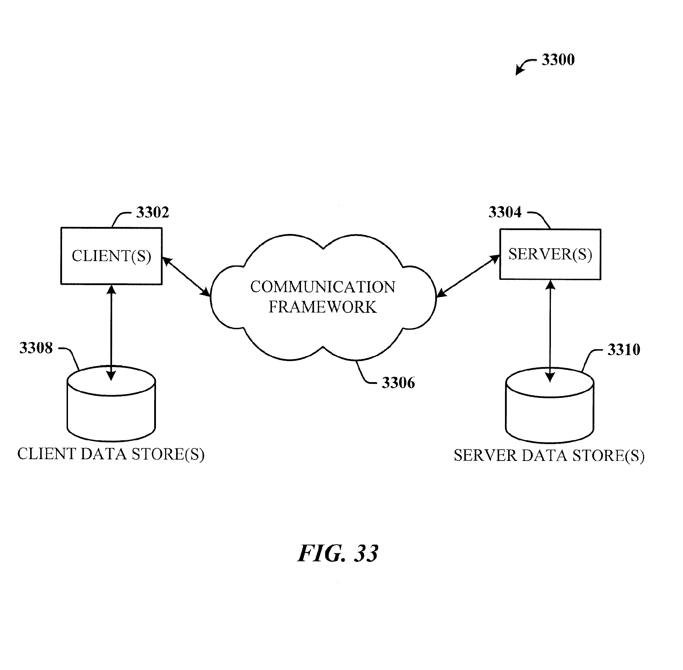

Referring now to FIG. 33, there is illustrated a schematic block diagram of an exemplary computing environment 3300 in which the CDM can be employed. The system 3300 includes one or more client(s) 3302. The client(s) 3302 can be hardware and/or software (e.g., threads, processes, computing devices). The client(s) 3302 can house cookie(s) and/or associated contextual information by employing the invention, for example.

The system 3300 also includes one or more server(s) 3304. The server(s) 3304 can also be hardware and/or software (e.g., threads, processes, computing devices). The servers 3304 can house threads to perform transformations by employing the invention, for example. One possible communication between a client 3302 and a server 3304 can be in the form of a data packet adapted to be transmitted between two or more computer processes. The data packet may include a cookie and/or associated contextual information, for example. The system 3300 includes a communication framework 3306 (e.g., a global communication network such as the Internet) that can be employed to facilitate communications between the client(s) 3302 and the server(s) 3304.

Communications can be facilitated via a wired (including optical fiber) and/or wireless technology. The client(s) 3302 are operatively connected to one or more client data store(s) 3308 that can be employed to store information local to the client(s) 3302 (e.g., cookie(s) and/or associated contextual information). Similarly, the server(s) 3304 are operatively connected to one or more server data store(s) 3310 that can be employed to store information local to the servers 3304.

What has been described above includes examples of the disclosed innovation. It is, of course, not possible to describe every conceivable combination of components and/or methodologies, but one of ordinary skill in the art may recognize that many further combinations and permutations are possible. Accordingly, the innovation is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A computer-implemented system that facilitates common data access, comprising:

   an entity component that provides a data entity having a uniform identity across a plurality of disparate applications; and
   a relationship component that defines a relationship between two or more of the data entities.

2. The system of claim 1, wherein the data entity at least one of includes an entity type on which a property is defined and receives a typed parameter.

3. The system of claim 2, wherein the entity type comprises identity data.

4. The system of claim 1, wherein the relationship between the two or more entities is Association such that the two or more entities are related to each other via explicit source-target data.

5. The system of claim 1, wherein the relationship between the two or more entities is associational such that the two or more entities are linked together by an Association entity.

6. The system of claim 1, wherein the relationship between the two or more entities is Composition such that a first entity is an integral part of a second entity.

7. The system of claim 1, wherein the data entity is persisted by being added to an Entity table, which Entity table is a typed collection of entities.

8. The system of claim 1, wherein the relationship is expressed directly.

9. The system of claim 1, wherein the data entity includes a member that has a type which is one of an inline type, an entity type, a table type, an enumeration type and an array type.

10. The system of claim 9, wherein the inline type has no identity beyond that imposed by the entity in which it resides.

11. The system of claim 1, wherein the data entity is referenceable by a key.

12. The system of claim 1, wherein the entity component includes entity members that comprise at least one of a property, a navigation property, a calculated property and a method.

13. The system of claim 1, wherein the relationship between entities is conditional.

14. The system of claim 1, wherein the relationship can be scoped to apply only to a particular table.

**15.** A computer-implemented method of providing common data access across disparate applications, comprising:

   providing an entity that is a single identity of closely-related data and which is uniquely identifiable;
   identifying structure of the entity as properties and behavior of the entity as methods; and
   expressing semantic connections between entities using relationships.

**16.** The method of claim 15, wherein the entity is composed of an entity member that one of allocates storage for an instance of a particular type, facilitates querying across entities related by an association, is a property that is calculated, and represents an operation that can be executed.

**17.** The method of claim 16, wherein the entity member at least one of includes a type and takes type parameters.

**18.** The method of claim 16, wherein the entity member includes an inline type whose data is stored inline on the entity.

**19.** The method of claim 16, wherein the entity member includes a table type which is an unordered collection of instances of a specified entity type.

**20.** A system that facilitates common data access across disparate applications, comprising:

   means for providing an entity that is a single identity of closely-related data and which is uniquely identifiable;
   means for identifying structure of the entity as properties and behavior of the entity as methods; and
   means for relating two or more of the entities by association using an explicit source-target relationship;
   means for relating two or more entities by composition in a parent-child relationship; and
   means for relating two or more entities by entity association.

┌─ 100

COMMON DATA MODEL

┌─ 102

RELATIONSHIP
COMPONENT

↕

┌─ 104

ENTITY
COMPONENT

*FIG. 1*

( START )

↓

PROVIDE SCHEMA THAT DEFINES A
NAMESPACE FOR SCOPING SCHEMA
DEFININTIONS — 200

↓

PROVIDE ENTITY TYPE SYSTEM FOR
GROUPING PROPERTIES AND METHODS — 202

↓

DEFINE A TABLE SET ENTITY WHOSE
PROPERTIES ARE TABLES — 204

↓

EXPRESS SEMANTIC CONNECTIONS
BETWEEN ENTITIES USING
RELATIONSHIPS (e.g., ASSOCIATES,
COMPOSITIONS,...) — 206

↓

( STOP )

*FIG. 2*

FIG. 3

*FIG. 4*

## Sales Order Entry

| Order Number: | 106025 | | Order Status: | Open |
| Customer Number: | 01963656 | | Responsibility Center: | London |
| Customer Name: | Fabrikam, Inc. | | Salesperson Code: | JR |
| Sell-to Contact: | James Westfield Dailey | | | |

**Customer Information**

Turnover   Profit %   Sales per Week

| Customer Group | Gold |
| Discount Group | Large Account |
| Credit Rating | Excellent |

| Item Number | Description | Qty | Discount % | Line Total |
|---|---|---|---|---|
| 1920-S | Conference Table, Oak, 300x120 | 2 | 5 | $6,240.00 |
| 1936-S | Guest Chair, Blue | 16 | 10 | $13,300.00 |
| 1983-S | **Office Desk, Oak, 180 x 100** | 1 | 0 | $2,895.00 |
| | | | Total | $22,435.00 |

**Payment History**

■ Balance   ■ Overdue

Jan   Feb   Mar   Apr   May

**Recently Purchased Items**

| Description | Qty | Unit Price |
|---|---|---|
| Canteen Chair, Beech... | 200 | $385.00 |
| Office Desk, Oak, 180... | 1 | $2,895.00 |
| Canteen Table, Beech... | 25 | $1,240.00 |
| Reception Desk, Black... | 1 | $6,995.00 |

**Substitution Items**

| Description | Qty | Unit Price |
|---|---|---|
| Office Desk, Mahogany, 2... | 12 | $4,795.00 |
| Office Desk, Beechwood, 1... | 47 | $2,695.00 |
| Office Desk, Pine, 180x100... | 11 | $1,495.00 |
| Office Desk, Laminate, 180... | 7 | $1,195.00 |

**Salesperson Commissions**

Salesperson
  Jerry Robbins

Commission Rate
  1.3% - Less than $25,000
  2.0% - Greater than $25,000

Commission from order
  $372.77

Post   Save   Cancel

*FIG. 5*

*FIG. 6*

*FIG. 7*

*FIG. 8*

EP 1 696 348 A2

# Example: D ultimately has two "A" tables:

---

# A sample "D" table with one "D" in it:

D[DID=D1] ←─ a "D"
.BTable[BID=B2] ←─ a "B" in a D
.ATable[AID=A1] ←─ an "A" in a B in a D

*FIG. 9*

EP 1 696 348 A2

1000

| A |
|---|
| One : Int32 |

| B |
|---|
| Two : Int32 |

| C |
|---|
| Three : Int32 |

**FIG. 10**

1100

| <<entity>>A |
|---|
| One : Int32 |

| <<entity>>B |
|---|
| <<key>> Two : Int32 |

| <<entity>>C |
|---|
| Three : Int32 |

| D |
|---|
| X : Int32<br>Y : Int32 |

| <<entity>>E |
|---|
| <<key>> D : D |

| <<entity>>F |
|---|
| <<key>> D : D |

**FIG. 11**

1200

FIG. 12

1300

| DID | TableB | | TableC | |
|---|---|---|---|---|
| | BID | TableA | BID | TableA |
| D1 | B1 | AID<br>A1<br>A2 | C1 | AID<br>A1<br>A2 |
| | B2 | AID<br>A1<br>A2 | C2 | AID<br>A1<br>A2 |

TS.TableD

FIG. 13

1400

| DID |
| --- |
| D1 |
| D1 |

TS.TableD

| DID | BID |
| --- | --- |
| D1 | B1 |
| D1 | B2 |

D_TableB

| DID | CID |
| --- | --- |
| D1 | C2 |
| D1 | B2 |

D_TableC

| BID | AID |
| --- | --- |
| B1 | A1 |
| B1 | A2 |
| B2 | A1 |
| B2 | A2 |

D_TableB_B_TableA

| CID | AID |
| --- | --- |
| C1 | A1 |
| C1 | A2 |
| B2 | A1 |
| B2 | A2 |

D_TableC_C_TableA

*FIG. 14*

1500

APPLICATION — 1504

API
(LANGUAGE INTEGRATION AND DATA ACCESS) — 1502

CDP RUNTIME

COMMON DATA MODEL
(TABLES, ENTITIES,
RELATIONSHIPS) — 1510

QUERY
PROCESSOR — 1514

1524

SESSIONS, TRANSACTIONS — 1512

OBJECT
CACHE — 1522

BUSINESS
LOGIC
HOSTING

1506

SERVICES: CHANGE
TRACKING, CONFLICT
DETECTION, EVENTING — 1520

CURSORS,
RULES — 1518

PERSISTENCE ENGINE, INCLUDING O-R MAPPING,
QUERY & UPDATE MAPPING — 1516

DATA PLATFORM

CONSTRAINTS/SECURITY — 1526

STORE — 1508

*FIG. 15*

*FIG. 16*

*FIG. 17*

- «abstraction» **EntityType**
- «abstraction» **Property** — Name, Kind: PropertyKind, IsNullable: bool = false, DuplicateName bool
- «abstraction» **InlineType** — IsNullable
- «abstraction» **AssociationProperty** — /UnderlyingEntityType
- «abstraction» **NavigationProperty**
- «abstraction» **ComputedProperty**
- «abstraction» **AssociationEnd**

Identifies — EntityType — Key — Properties — Type — Ends — Type — ToEnd — FromEnd — Property

The Type of an **association property** is a ref or entity collection type
The type of a **navigation property** is implicitly an entity query returning a ref or inline collection of refs
In either case, the underlying entity type is End.EntityType.

FromEnd can be inferred except on recursive associations.

{Property.UnderlyingType =Type}

«abstraction»**Association** — Ends — «abstraction» **AssociationEnd** — Type — «abstraction» **EntityType**

2..*

/ Ends

1 Style

/ Style

«abstraction» *AssociationStyle*

2..*

Styles

2..*

0..1

Property

«abstraction» **AssociationProperty**

**PropertyStyleEnd**

OnDelete : DeleteAction
OnUpdate : UpdateAction

End

«abstraction» **AssociationEntity** — «abstraction» **AssociationEnd**

1

1 FromEnd

«abstraction» **Reference** — ToEnd — **PropertyStyleEnd**

1

1 ChildEnd

«abstraction» **Composition** — ParentEnd — «abstraction» **AssociationEnd**

1

JoinedEnds

«abstraction» **Condition** — «abstraction» **AssociationEnd**

2

Using — **Using** — Type — «abstraction» **EntityType**

* 1

*FIG. 18*

ORDER

OrderID: 10481
EmployeeID: 1
OrderDate: 3/21/2004

**Association**

**Relationship**

**Composition**

**Relationship**

Customer

Customer ID LAZYK
ComapnyName  Lazy K Kountry Store
ContactName  John Steel
Address

AddressLine 12 Orchestra Terrace
City:  Walla Walla
Region:  WA
PostalCode:  99263
Country: USA
Phone:
(509) 555 7693
(509) 555 8124
(509) 555 2397

| OrderLines | | | |
|---|---|---|---|
| OrderID | ProdID | Price | Quantity |
| 10481 | 49 | 16 | 24 |
| 10481 | 60 | 27.2 | 40 |

*FIG. 19*

**ContactType**
Name:      String
Address :  AddressType
Phone :    String

Is A

Is A

**CustomerType**
< Name, Address, Phone inherited
from ContactType >
 CustomerID:          String
 CompanyName :       String

**EmployeeType**
< Name, Address, Phone inherited
from ContactType >
 EmployeeID :         String
 HireDate :           String
 Title :              String
 Extension:           String

Is A

Is A

**PreferredCustomerType**
<CustomerID, CompanyName,
Name , Address, Phone inherited >
 PreferenceCode :     String
 CreditLimit :        Decimal

**ManagerType**
< Name, Address, Phone inherited
from ContactType >
<Other Fields>

*FIG. 20*

**FIG. 21**

**Customer**
| | |
|---|---|
| CustomerID: | String |
| CompanyName: | String |
| Contact: | String |
| Address: | AddressType |
| Phone: | String |

InstanceOf

InstanceOf

Customer ID : LAZYK
Company :  Lazy K Kountry Store
Contact : John Steel

Address

AddressLine : 12  Orchestra Terrace
City:  Walla Walla
Region: WA
PostalCode: 99362
Country: USA

Phone: (509) 555-7969

Customer ID: BONAP
Company: Bon app'
Contact:  Laurence Lebihan

Address

AddressLine: 12,  rue des Bouchers
City: Marseille
Region: NULL
PostalCode: 13008
Country: France

Phone: 91-24-45-40

InstanceOf

InstanceOf

**Address**
| | |
|---|---|
| AddressLine: | String |
| City: | String |
| Region: | String |
| PostalCode: | String |
| Country: | String |

*FIG. 22*

```
Inline
Enum
Type

1.< EnumerationType Name="TypeOfAddressEnum">
2.    < EnumerationMember Name="CorporateHQ"/>
3.    < EnumerationMember Name="Receiving"/>
4.    < EnumerationMember Name="Administration"/>
5.</ EnumerationType >


Inline
Complex
Type

7.< ComplexType Name"Address">
8.      < Property Name="TypeOfAddress" Type="TypeOfAddressEnum"/>
9.      < Property Name="Line" Type="String" Nullable="false" />
10.     < Property Name="City" Type="String" Nullable="false" />
11.     < Property Name="State"Type="String" Nullable="false" />
12.     < Property Name="ZipCode" Type="String" Nullable="false" />
13.   </ ComplexType >


Entity
Type

14.  < EntityType Name="Customer"Key="CustomerId">
15.     < Property Name="CustomerId"Type="String" Nullable="false">
16.       < Length Minimum="10" Maximum="10"/>
17.     </ Property>
18.     < Property Name="Name"Type="String" Nullable ="false">
19.       < Length Maximum="200"/>
20.     </ Property >
21.     < Property Name="PrimaryAddress" Type="Address"/>
22.     < Property Name="OtherAddresses"
23.              Type="Collection(Address)" Indexed= "True>
24.       < Occurs Minumum="1"Maximum ="3 "/>
25.       < Unique Properties="TypeOfAddress"/ >
26.     </ Property >
27.  </ EntityType >
```

Inline Enum Type
Within Complex Type

Inline Simple Type within
Inline Complex Type

Inline Simple Type within
Entity Type

Complex Type within Entity
Type

Collection of Complex Type
within Entity Type

*FIG. 23*

Unary Relationships

PERSON    Is_Married_To                    EMPLOYEE    MANAGES

One to One                                  One to Many

Binary Relationships

EMPLOYEE    Is_Assigned    PARKING_SPACE

One to One

ORDER    Contains    ORDERLINE

One to Many

STUDENT    Registers_For    COURSE

Many to Many

Ternary Relationship

SUPPLIER

PRODUCT    Ship    WAREHOUSE

Quantity

*FIG. 24*

## INSTANCES

### Instance of MyLobDB EntityContainer

**Lines (EntitySet)**

| LineID | Product | Price | Quantity |
|--------|---------|-------|----------|
| 1048_1 | Chai | 16 | 24 |
| 1048_2 | Mutton | 27.2 | 40 |
| 1051_1 | Ikura | 31 | 24 |
| 1051_2 | Lutefisk | 34.22 | 103 |
| 1006_1 | Gnocchi | 18 | 30 |
| 1066_2 | Tofu | 14 | 30 |
| 1066_3 | Almonds | 53 | 20 |
| ... | | | |

**Customers (EntitySet)**

| LAZYK | Lazy K Country Store |
|-------|----------------------|
| RICAR | Ricardo Adociacados |
| BONAP | Bon App' |
| ... | |

Instances of Customer

**Orders ( EntitySet )**

| OrderID | ShipDate | Amount |
|---------|----------|--------|
| 1048 | 3/12/2005 | $46,529.99 |
| 1054 | 4/24/2005 | $12,225.73 |
| 1048 | 8/15/2004 | $87,633.00 |
| 1064 | 1/26/2005 | $39,967.99 |
| 1066 | 2/04/2005 | $27,450.67 |
| 1093 | 3/22/2005 | $72,400.00 |
| ... | | |

Instances of Order

Instances of Line

Color Coding Shows Relationships

## TYPES

**MyLobDB EntityContainer Type**

| Customers | EntitySet |
| Orders | EntitySet |
| Lines | EntitySet |
| ........ | |

**Customer Entity Type**

| CustomerID | String |
| CompanyName | String |
| Contact | String |
| Address | AddressType |
| Phone: | String |
| ........ | |

Association

**Order Entity Type**

| OrderID | String |
| ShipDate | DateTime |
| Amount | Decimal |
| ........ | |

Composition

**Line Entity Type**

| LineID | Byte |
| Product | Ref( Product) |
| Price | Decimal |
| Quantity | Int16 |
| ........ | |

*FIG. 25*

## Type View

**Contact**
ID: String
Name: String
Address: AddressType
Phone: String

Extends ContactsType

Extends ContactsType

**GPSExtension**
Latitude: Decimal
Longitude: Decimal

**ShippingRates**
OverNightRate Decimal
TwoDayRate Decimal
ThreeDayRate Decimal
GroundRate Decimal
SaturdayRate Decimal

## Instance View

"Entity" field in extension instance
establishes connection to the entity
instance

ID:
3E4

ID:
34E

ID:
DF9

Name: John Steel

**Address**

AddressLine 12 Orchestra Terrace
City: Walla Walla
Region: WA
PostalCode 99362
Country: USA
Phone: (509) 555-7969

Latitude: 46. 06409
Longitude 118. 32136
Entity: 3E4

OverNightRate 79.95
TwoDayRate 46.67
ThreeDayRate 22.95
GroundRate 9.49
SaturdayRate $ 167.66
Entity: 3E4

## *FIG. 26*

**Legend**
Filled class: user definable element
Dashed border: implicitly-defined
*Italic* name: abstract
Diamond: nested element

**Notes**
- Xml and FileStream are built-in inline types.
- Simple types include String, Int32, etc.

**Syntax for using implicitly-defined types**
Ref(E)
Collection(Ref(E))
EntitySet(E)

*FIG. 27*

EP 1 696 348 A2

FIG. 28

EP 1 696 348 A2

FIG. 29

EP 1 696 348 A2

EntityType

| Associations : Association | * | : ScopedTo | Compositions : Composition | * |

Ends : RelationshipEnd 2

0..1

Ends : RelationshipEnd 2

**FIG. 30**

**Advanced Relationships**

**FIG. 31**

**FIG. 32**

3300

3302
CLIENT(S)

COMMUNICATION
FRAMEWORK

3304
SERVER(S)

3308
CLIENT DATA STORE(S)

3306

3310
SERVER DATA STORE(S)

*FIG. 33*